# EUROPEAN PATENT APPLICATION

(11) **EP 2 337 369 A1**
(43) Date of publication of application: **22.06.2011**
(21) Application number: 10194062.5
(22) Date of filing: 07.12.2010
(51) Int. Cl.: H04N 13/00

(54) **Active 3D glasses with OLED shutters**

(30) Priority: 09.12.2009 US 285048 P
(71) Applicant: XpandD, Inc., Beaverton OR 97006 (US)
(72) Inventor: MacNaughton, Boyd, Portland, OR 97239 (US); Kimmell, Rodney W., Forest Grove, OR 97116 (US); Allen, David W., Beaverton OR 97007 (US); Dror, Ami, Tel Aviv (IL)
(74) Representative: Sessford, Russell

(57) **Abstract**

A viewing system for viewing video displays having the appearance of a three dimensional image, comprising:
means for displaying images on a portion of at least one of a left and right eye shutter of 3D glasses; and
means for opening and closing the left and right eye shutters in synchronization with displaying left and right eye images to the user.

## Description

### 1. CROSS-REFERENCE TO RELATED APPLICATIONS

This application claims priority to U.S. Provisional Patent Application No. 61/285,048, filed December 9, 2009, incorporated herein by reference.

This application is related to U.S. Provisional Patent Application No. 61/285,071, filed December 9, 2009, incorporated herein by reference.

This application is related to U.S. Provisional Patent Application No. 61/261,663, filed November 16, 2009, incorporated herein by reference.

This application is a continuation in part of U.S. utility patent application serial nos. 12/619,518, 12/619,517, 12/619,309, 12/619,415, 12/619,400, 12/619,431, 12/619,163, 12/619,456, and 12/619,102, and, attorney docket nos. 092847.000027, 092847.000042, 092847.000043, 092847.000044, 092847.000045, 092847.000046, 092847.000060, and 092847.000064, and 092847.000080, all filed on November 16, 2009; and 12/880,920, attorney docket no. 092847.000258, filed on September 13, 2010; all of which claimed the benefit of the filing dates of each of U.S. Provisional Patent Application No. 61/115,477, attorney docket no. 092847.000008, filed on November 17, 2008 and U.S. Provisional Patent Application No. 61/179,248, attorney docket no. 092847..000020, filed on May 18, 2009, the disclosures of which are all incorporated herein by reference.

This application is related to U.S. Provisional applications 61/253,140, and 61/253,150, filed October 20, 2009, incorporated herein by reference.

This application is related to Design Patent Application No. 29/326,498, by Carlow, et al., titled "3D Glasses," filed on October 20, 2008, which is now U.S, Design Patent No. D624,952 issued on October 5, 2010, which is incorporated by reference herein in its entirety.

This application is related to U.S. Provisional Patent Application No. 611116,477, filed on November 17, 2008, the disclosure of which is incorporated herein by reference.

This application is related to Design Patent Application No. 29/314,202, by Carlow, et al., titled "Improved 3D Glasses," filed on March 13, 2009, which is now U.S. Design Patent No. D603,445 issued on November 3, 2009, which is incorporated by reference herein in its entirety.

This application is related to Design Patent Application No. 29/326,498, by Carlow, et al., titled "3D Glasses," filed on October 20, 2008, which is now U.S. Design Patent No. D624,952 issued on October 5, 2010, which is incorporated by reference herein in its entirety.

This application is related to U.S. Provisional Patent Application No. 61/115,477, filed on November 17, 2008, the disclosure of which is incorporated herein by reference.

This application is related to Design Patent Application No. 29/314,202, by Carlow, et a]., titled "Improved 3D Glasses," filed on March 13, 2009, which is now U.S. Design Patent No. D603,445 issued on November 3, 2009, which is incorporated by reference herein in its entirety.

This application is related to Design Patent Application No. 29/314,966, by Carlow, et al., titled "Further Improved 3D Glasses," filed on May 13, 2009, which is now U.S. Design Patent No. D613,328 issued on April 6,2010, which is incorporated by reference herein in its entirety.

This application is related to U.S. provisional Patent Application No. 61/179,248, filed on May 18, 2009, the disclosure of which is incorporated herein by reference in its entirety.

This application is related to U.S. provisional Patent Application No. 61/253,150, attorney docket no. 092847.000067, filed on October 20, 2009, the disclosure of which is incorporated herein by reference.

This application is related to U.S. provisional Patent Application No. 61/261,663, attorney docket no. 092847.000098, filed on November 16, 2009, the disclosure of which is incorporated herein by reference.

This application is related to U.S. provision Patent Application No. 61/285,048, attorney docket no. 092847.000094, filed on December 9, 2009, the disclosure of which is incorporated herein by reference.

This disclosure relates to image processing systems for the presentation of a video image that appears three dimensional to the view. Aspects of the present invention are recited by the appended claims. The invention will now be described by way of example only with reference to the accompanying drawings, of which:

Fig. is an illustration of an exemplary embodiment of a system for providing three dimensional images,

Fig. 2 is a flow chart of an exemplary embodiment of a method for operating the system of Fig. 1.

Fig. 3 is a graphical illustration of the operation of the method of Fig. 2.

Fig. 4 is a graphical illustration of an exemplary experimental embodiment of the operation of the method of Fig. 2.

Fig. 5 is a flow chart of an exemplary embodiment of a method for operating the system of Fig. 1.

Fig. 6 is a flow chart of an exemplary embodiment of a method for operating the system of Fig. 1.

Fig. 7 is a flow chart of an exemplary embodiment of a method for operating the system of Fig. 1.

Fig. 8 is a graphical illustration of the operation of the method of Fig. 7.

Fig. 9 is a flow chart of an exemplary embodiment of a method for operating the system of Fig. 1,

Fig. 10 is a graphical illustration of the operation of the method of Fig. 9.

Fig. 11 is a flow chart of an exemplary embodiment of a method for operating the system of Fig. 1.

Fig. 12 is a graphical illustration of the operation of the method of Fig. 11.

Fig. 13 is a flow chart of an exemplary embodiment of a method for operating the system of Fig. 1.

Fig. 14 is a graphical illustration of the operation of the method of Fig. 13.

Fig. 15 is a flow chart of an exemplary embodiment of a method for operating the system of Fig. 1.

Fig. 16 is an illustration of an exemplary embodiment of a method for operating the system of Fig. 1.

Fig. 17 is an illustration of an exemplary embodiment of the 3D glasses of the system of Fig. 1.

Figs. 18, 18a, 18b, 18c and 18d is a schematic illustration of an exemplary embodiment of 3D glasses.

Fig. 19 is a schematic illustrations of the digitally controlled analog switches of the shutter controllers of the 3D glasses of Figs. 18, 18a, 18b, 18c and 18d.

Fig. 20 is a schematic illustration of the digitally controlled analog switches of the shutter controllers, the shutters, and the control signals of the CPU of the 3D glasses of Figs. 18, 18a, 18b, 18c and 18d.

Fig. 21 is a flow chart illustration of an exemplary embodiment of the operation of the 3D glasses of Figs. 18, 18a, 18b, 18c and 18d.

Fig. 22 is a graphical illustration of an exemplary embodiment of the operation of the 3D glasses of Figs. 18, 18a, 18b, 18c and 18d.

Fig. 23 is a flow chart illustration of an exemplary embodiment of the operation of the 3D glasses of Figs. 18, 18a, 18b, 18c and 18d.

Fig. 24 is a graphical illustration of an exemplary embodiment of the operation of the 3D glasses of Figs. 18, 18a, 18b, 18c and 18d.

Fig. 25 is a flow chart illustration of an exemplary embodiment of the operation of the 3D glasses of Figs. 18, 18a, 18b, 18c and 18d.

Fig. 26 is a graphical illustration of an exemplary embodiment of the operation of the 3D glasses of Figs. 18, 18a, 18b, 18c and 18d.

Fig. 27 is a flow-chart illustration of an exemplary embodiment of the operation of the 3D glasses of Figs. 18, 18a, 18b, 18c and 18d.

Fig. 28 is a graphical illustration of an exemplary embodiment of the operation of the 3D glasses of Figs. 18, 18a, 18b, 18c and 18d.

Fig. 29 is a graphical illustration of an exemplary embodiment of the operation of the 3D glasses of Figs. 18, 18a, 18b, 18c and 18d.

Figs. 30, 30a, 30b and 30c is a schematic illustration of an exemplary embodiment of 3D glasses.

Fig. 31 is a schematic illustration of the digitally controlled analog switches of the shutter controllers of the 3D glasses of Figs. 30, 30a, 30b and 30c.

Fig. 32 is a schematic illustration of the operation of the digitally controlled analog switches of the shutter controllers of the 3D glasses of Figs. 30, 30a, 30b and 30c.

Fig. 33 is a flow chart illustration of an exemplary embodiment of the operation of the 3D glasses of Figs. 30, 30a, 30b and 30c.

Fig. 34 is a graphical illustration of an exemplary embodiment of the operation of the 3D glasses of Figs. 30, 30a, 30b and 30c.

Fig. 35 is a flow chart illustration of an exemplary embodiment of the operation of the 3D glasses of Figs. 30, 30a, 30b and 30c.

Fig. 36 is a graphical illustration of an exemplary embodiment of the operation of the 3D glasses of Figs. 30, 30a 30b and 30c.

Fig. 37 is a flow chart illustration of an exemplary embodiment of the operation of the 3D glasses of Figs. 30, 30a, 30b and 30c.

Fig. 38 is a graphical illustration of an exemplary embodiment of the operation of the 3D glasses of Figs. 30, 30a, 30b and 30c.

Fig. 39 is a flow chart illustrations of an exemplary embodiment of the operation of the 3D glasses of Figs. 30, 30a, 30b and 30c.

Fig. 40 is a flow chart illustration of an exemplary embodiment of the operation of the 3D glasses of Figs. 30, 30a, 30b and 30c.

Fig. 41 is a graphical illustration of an exemplary embodiment of the operation of the 3D glasses of Figs. 30, 30a, 30b and 30c.

Fig. 42 is a flow chart illustration of an exemplary embodiment of the operation of the 3D glasses of Figs. 30, 30a, 30b and 30c.

Fig. 43 is a graphical illustration of an exemplary embodiment of the operation of the 3D glasses of Figs. 30, 30a, 30b and 30c.

Fig. 44 is a top view of an exemplary embodiment of 3D glasses.

Fig. 45 is a rear view of the 3D glasses of Fig. 44.

Fig. 46 is a bottom view of the 3D glasses of Fig. 44.

Fig. 47 is a front view of the 3D glasses of Fig. 44.

Fig. 48 is a perspective view of the 3D glasses of Fig. 44.

Fig. 49 is a perspective view of the use of a key to manipulate a housing cover for a battery for the 3D glasses of Fig. 44.

Fig. 50 is a perspective view of the key used to manipulate the housing cover for the battery for the 3D glasses of Fig. 44.

Fig. 51 is a perspective view of the housing cover for the battery for the 3D glasses of Fig. 44.

Fig. 52 is a side view of the 3D glasses of Fig. 44.

Fig. 53 is a perspective side view of the housing cover, battery and an O-ring seal for the 3D glasses of Fig. 44.

Fig. 54 a perspective bottom view of the housing cover, battery and the O-ring seal for the 3D glasses of Fig. 44.

Fig. 55 is a perspective view of an alternative embodiment of the glasses of Fig. 44 and an alternative embodiment of the key used to manipulate housing cover of Fig. 50.

Fig. 56 is a schematic illustration of an exemplary embodiment of a signal sensor for use in one or more of the exemplary embodiments.

Fig. 57 is a graphical illustration of an exemplary data signal suitable for use with the signal sensor of Fig. 56.

Fig. 58 is a block diagram of an exemplary embodiment of a system for conditioning a synchronization signal for use in 3D glasses.

Fig. 59 is a block diagram of an exemplary embodiment of a system for conditioning a synchronization signal for use in 3D glasses.

Figs. 59a-59d are graphical illustrations of exemplary experimental results of the operation of the system of Figs. 58 and 59.

Figs. 60, 60a and 60b are schematic illustrations of an exemplary embodiment of 3D glasses.

Fig. 61 is a block diagram of an exemplary embodiment of a system for conditioning a synchronization signal for use in 3D glasses.

Fig. 62 is a block diagram of an exemplary embodiment of a system for viewing 3D images by a user wearing 3D glasses.

Figs. 63 and 64 are block diagrams of an exemplary embodiment of a display system for use with 3D glasses.

Figs. 65 and 66 are graphical illustrations of exemplary embodiments of the operation of the display system of Figs. 63 and 64.

Figs. 67-70 are flow chart illustrations of exemplary embodiments of the operation of the display system of Figs. 63 and 64.

Fig. 71 is an illustration of an exemplary embodiment of a shutter assembly for 3D glasses.

Fig. 72 is a flow chart illustration of an exemplary embodiment of a method for operating the shutter assembly of Fig. 71.

### DETAILED DESCRIPTION

In the drawings and description that follows, like parts are marked throughout the specification and drawings with the same reference numerals, respectively. The drawings are not necessarily to scale. Certain features of the invention may be shown exaggerated in scale or in somewhat schematic form and some details of conventional elements may not be shown in the interest of clarity and conciseness. The present invention is susceptible to embodiments of different forms. Specific embodiments are described in detail and are shown in the drawings, with the understanding that the present disclosure is to be considered an exemplification of the principles of the invention, and is not intended to limit the invention to that illustrated and described herein. It is to be fully recognized that the different teachings of the embodiments discussed below may be employed separately or in any suitable combination to produce desired results. The various characteristics mentioned above, as well as other features and characteristics described in more detail below, will be readily apparent to those skilled in the art upon reading the following detailed description of the embodiments, and by referring to the accompanying drawings.

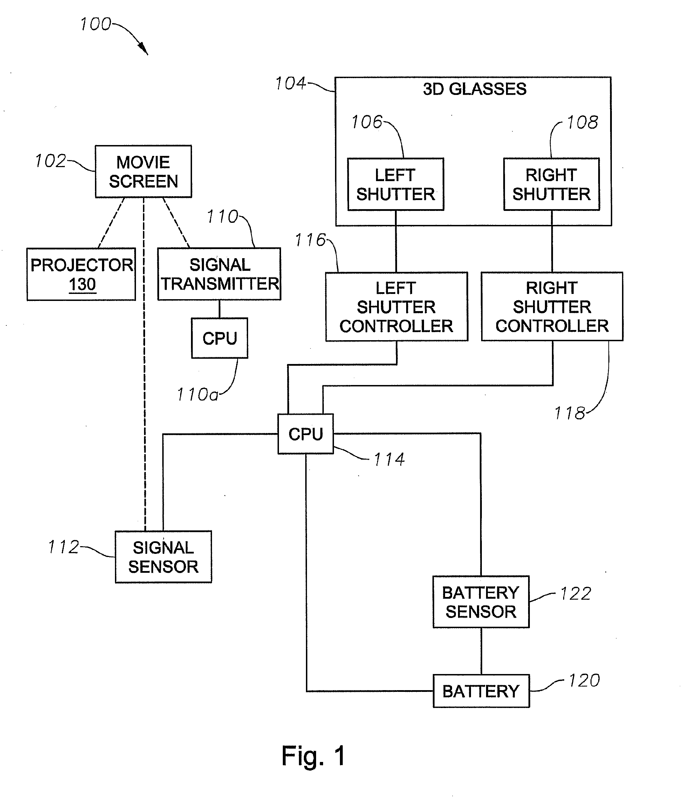

Referring initially to Fig. 1, a system 100 for viewing a three dimensional ("3D") movie on a movie screen 102 includes a pair of 3D glasses 104 having a left shutter 106 and a right shutter 108. In an exemplary embodiment, the 3D glasses 104 include a frame and the shutters, 106 and 108, are provided as left and right viewing lenses mounted and supported within the frame.

In an exemplary embodiment, the shutters, 106 and 108, are liquid crystal cells that open when the cell goes from opaque to clear, and the cell closes when the cell goes from clear back to opaque. Clear in this case, is defined as transmitting enough light for a user of the 3D glasses 104 to see an image projected on the movie screen 102. ln an exemplary embodiment, the user of the 3D glasses 104 may be able to see the image projected on the movie screen 102 when the liquid crystal cells of the shutters, 106 and/or 108, of the 3D glasses 104 become 25-30 percent transmissive. Thus, the liquid crystal cells of a shutter, 106 and/or 108, is considered to be open when the liquid crystal cell becomes 25-30 percent transmissive. The liquid crystal cells of a shutter, 106 and/or 108, may also transmit more than 25-30 percent of light when the liquid crystal cell is open.

In an exemplary embodiment, the shutters, 106 and 108, of the 3D glasses 104 include liquid crystal cells having a Pl-cell configuration utilizing a low viscosity, high index of refraction liquid crystal material such as, for example, Merck MLC6080. In an exemplary embodiment, the Pi-ceil thickness is adjusted so that in its relaxed state it forms a ½-wave retarder. In an exemplary embodiment, the PI-cell is made thicker so that the ½-wave state is achieved at less than full relaxation. One of the suitable liquid crystal materials is MLC6080 made by Merck, but any liquid crystal with a sufficiently high optical anisotropy, low rotational viscosity and/or birefringence may be used. The shutters, 106 and 108, of the 3D glasses 104 may also use a small cell gap, including, for example, a gap of 4 microns. Furthermore, a liquid crystal with a sufficiently high index of refraction and low viscosity may also be suitable for use in the shutters, 106 and 108, of the 3D glasses 104.

In an exemplary embodiment, the Pi-cells of the shutters, 106 and 108, of the 3D glasses 104 work on an electrically controlled birefringence ("ECB") principle. Birefringence means that the Pi-cell has different refractive indices, when no voltage or a small catching voltage is applied, for light with polarization parallel to the long dimension of the Pi-cell molecules and for light with polarization perpendicular to long dimension, no and ne. The difference no-ne=Δn is optical anisotropy. Δnxd, where d is thickness of the cell, is optical thickness. When Δnxd=1/2λ the Pi-cell is acting as a ½ wave retarder when cell is placed at 45° to the axis of the polarizer. So optical thickness is important not just thickness. In an exemplary embodiment, the Pi-cells of the shutters, 106 and 108, of the 3D glasses 104 are made optically too thick, meaning that Δnx<d>1/2λ. The higher optical anisotropy means thinner cell - faster cell relaxation. In an exemplary embodiment, when voltage is applied the molecules' of the Pi-cells of the shutters, 106 and 108, of the 3D glasses 104 long axes are perpendicular to substrates - homeotropic alignment, so there is no birefringence in that state, and, because the polarizers have transmitting axes crossed, no light is transmitted. In an exemplary embodiment, Pi-cells with polarizers crossed are said to work in normally white mode and transmit light when no voltage is applied. Pi-cells with polarizers' transmitting axes oriented parallel to each other work in a normally black mode, i.e., they transmit light when a voltage is applied.

In an exemplary embodiment, when high voltage is removed from the Pi-cells, the opening of the shutters, 106 and/or 108, start. This is a relaxation process, meaning that liquid crystal ("LC") molecules in the Pi-cell go back to the equilibrium state, i.e. molecules align with the alignment layer, i.e. the rubbing direction of the substrates. The Pi-cell's relaxation time depends on the cell thickness and rotational viscosity of the fluid.

In general, the thinner the Pi-cell, the faster the relaxation. In an exemplary embodiment, the important parameter is not the Pi-cell gap, d, itself, but rather the product Δnd, where Δn is the birefringence of the LC fluid. In an exemplary embodiment, in order to provide the maximum light transmission in its open state, the head-on optical retardation of the Pi-cell, Δnd, should be λ/2. Higher birefringence allows for thinner cell and so faster cell relaxation. In order to provide the fastest possible switching fluids with low rotational viscosity and higher birefringence - Δn (such as MLC 6080 by EM industries) are used.

In an exemplary embodiment, in addition to using switching fluids with low rotational viscosity and higher birefringence in the Pi-cells, to achieve faster switching from opaque to clear state, the Pi-cells are made optically too thick so that the ½-wave state is achieved at less than full relaxation. Normally, the Pi-cell thickness is adjusted so that in its relaxed state it forms a ½-wave retarder. However, making the Pi-cells optically too thick so that the ½-wave state is achieved at less than full relaxation results in faster switching from opaque to clear state. In this manner, the shutters 106 and 108 of the exemplary embodiments provide enhanced speed in opening versus prior art LC shutter devices that, in an exemplary experimental embodiment, provided unexpected results.

In an exemplary embodiment, a catch voltage may then be used to stop the rotation of the LC molecules in the Pi-cell before they rotate too far. By stopping the rotation of the LC molecules in the Pi-cell in this manner, the light transmission is held at or near its peak value.

In an exemplary embodiment, the system 100 further includes a signal transmitter 110, having a central processing unit ("CPU") 110a, that transmits a signal toward the movie screen 102. In an exemplary embodiment, the transmitted signal is reflected off of the movie screen 102 towards a signal sensor 112. The transmitted signal could be, for example, one or more of an infrared ("IR") signal, a visible light signal, multiple colored signal, or white light. In some embodiments, the transmitted signal is transmitted directly toward, the signal sensor 112 and thus, may not reflected off of the movie screen 102. In some embodiments, the transmitted signal could be, for example, a radio frequency ("RF") signal that is not reflected off of the movie screen 102.

The signal sensor 112 is operably coupled to a CPU 114. In an exemplary embodiment, the signal sensor 112 detects the transmitted signal and communicates the presence of the signal to the CPU 114. The CPU 110a and the CPU 114 may, for example, each include a general purpose programmable controller, an application specific intergrated circuit ("ASIC"), an analog controller, a localized controller, a distributed controller, a programmable state controller, and/or one or more combinations of the aforementioned devices.

The CPU 114 is operably coupled to a left shutter controller 116 and a right shutter controller 118 for monitoring and controlling the operation of the shutter controllers. In an exemplary embodiment, the left and right shutter controllers, 116 and 118, are in turn operably coupled to the left and right shutters, 106 and 108, of the 3D glasses 104 for monitoring and controlling the operation of the left and right shutters. The shutter controllers, 116 and 118, may, for example, include a general purpose programmable controller, an ASIC, an analog controller, an analog or digital switch, a localized controller, a distributed controller, a. programmable state controller, and/or one or more combinations of the aforementioned devices.

A battery 120 is operably coupled to at least the CPU 114 and provides power for operating one or more of the CPU, the signal sensor 112, and the shutter controllers, 116 and 118, of the 3D glasses 104. A battery sensor 122 is operably coupled to the CPU 114 and the batter 120 for monitoring the amount of power remaining in the battery.

In an exemplary embodiment, the CPU 114 may monitor and/or control the operation of one or more of the signal sensor 112, the shutter controllers, 116 and 118, and the battery sensor 122. Alternatively or in addition, one or more of the signal sensor 112, the shutter controllers, 116 and 118, and the battery sensor 122 may include a separate dedicated controller and/or a plurality of controllers, which may or may not also monitor and/or control one or more of signal sensor 112, the shutter controllers, 116 and 118, and the battery sensor 122. Alternatively, or in addition, the operation of the CPU 114 may at least be partially distributed among one or more of the other elements of the 3D glasses 104.

In an exemplary embodiment, the signal sensor 112, the CPU 114, the shutter controllers, 116 and 118, the battery 120, and the battery sensor 122 are mounted and supported within the frame of the 3D glasses 104. If the movie screen 102 is positioned within a movie theater, then a projector 130 may be provided for projecting one or more video images on the movie screen. In an exemplary embodiment, the signal transmitter 110 may be positioned proximate, or be included within, the projector 130. In an exemplary embodiment, the projector 130 may include, for example, one or more of an electronic projector device, an electromechanical projector device, a film projector, a digital video projector, or a computer display for displaying one or more video images on the movie screen 102. Alternatively, or in addition to the movie screen 102, a television ("TV") or other video display device may also be used such as, for example, a flat screen TV, a plasma TV, an LCD TV, or other display device for displaying images for viewing by a user of the 3D glasses that may, for example, include the signal transmitter 110, or an additional signal transmitter for signaling to the 3D glasses 104, that may be positioned proximate and/or within the display surface of the display device.

In an exemplary embodiment, during operation of the system 100, the CPU 114 controls the operation of the shutters, 106 and 108, of the 3D glasses 104 as a function of the signals received by the signal sensor 112 from the signal transmitter 110 and/or as a function of signals received by the CPU from the battery sensor 122. In an exemplary embodiment, the CPU 114 may direct the left shutter controller 116 to open the left shutter 106 and/or direct the right shutter controller 118 to open the right shutter 108.

In an exemplary embodiment, the shutter controllers, 116 and 118, control the operation of the shutters, 106, and 108, respectively, by applying a voltage across the liquid crystal cells of the shutter. In an exemplary embodiment, the voltage applied across the liquid crystal cells of the shutters, 106 and 108, alternates between negative and positive. In an exemplary embodiment, the liquid crystal cells of the shutters, 106 and 108, open and close the same way regardless of whether the applied voltage is positive or negative. Alternating the applied voltage prevents the material of the liquid crystal cells of the shutters, 106 and 108, from plating out on the surfaces of the cells.

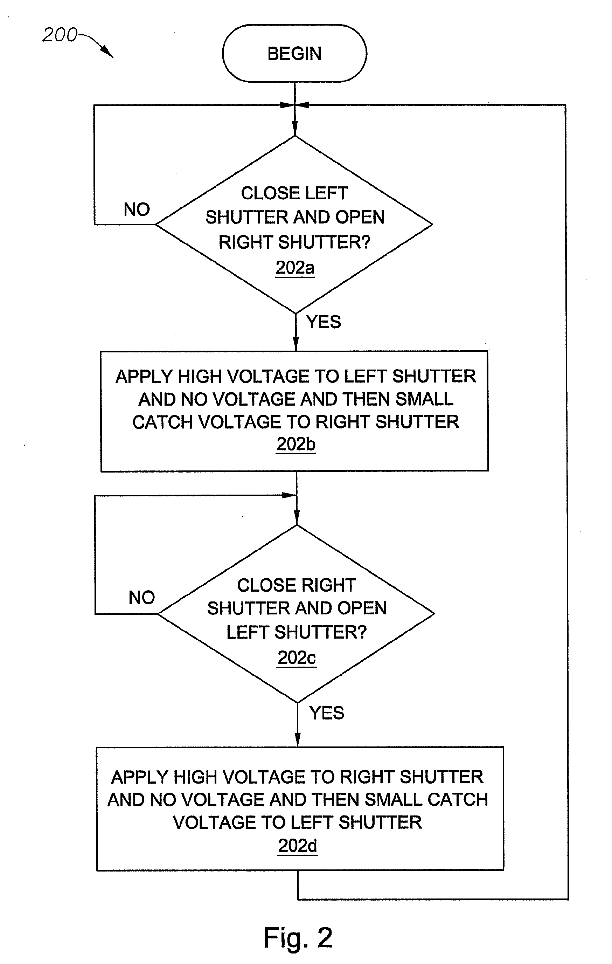

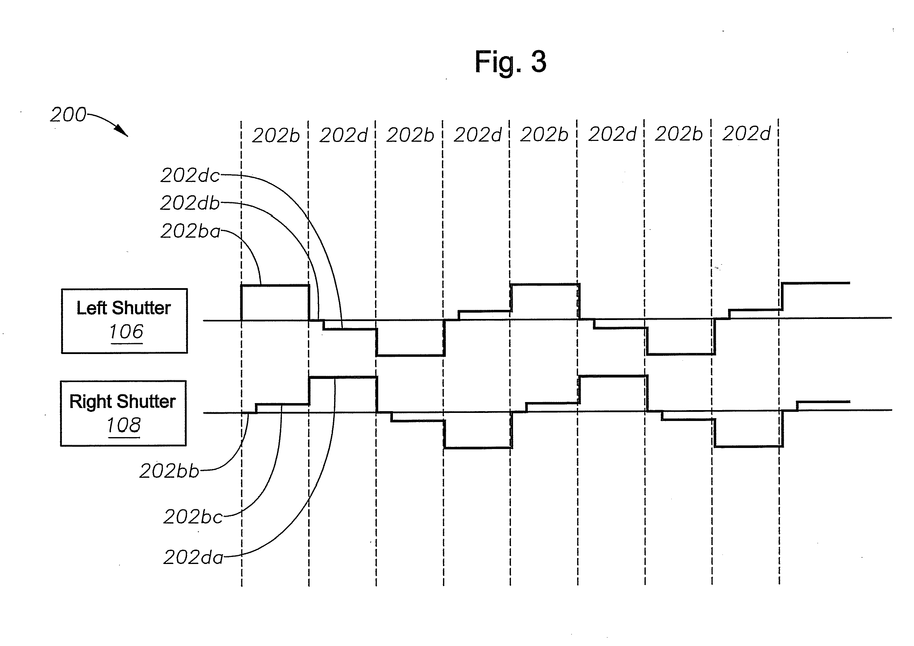

In an exemplary embodiment, during operation of the system 100, as illustrated in Figs. 2 and 3, the system may implement a left-right shutter method 200 in which, if in 202a, the left shutter 106 will be closed and the right shutter 108 will be opened, then in 202b, a high voltage 202ba is applied to the left shutter 106 and no voltage 202bb followed by a small catch voltage 202bc are applied to the right shutter 108 by the shutter controllers, 116 and 118, respectively. In an exemplary embodiment, applying the high voltage 202ba to the left shutter 106 closes the left shutter, and applying no voltage to the right shutter 108 starts opening the right shutter. In an exemplary embodiment, the subsequent application of the small catch voltage 202bc to the right shutter 108 prevents the liquid crystals in the right shutter from rotating too far during the opening of the right shutter 108. As a result, in 202b, the left shutter 106 is closed and the right shutter 108 is opened.

If in 202c, the left shutter 108 will be opened and the right shutter 108 will be closed, then in 202d, a high voltage 202da is applied to the right shutter 108 and no voltage 202db followed by a small catch voltage 202dc are applied to the left shutter 100 by the shutter controllers, 118 and 116, respectively. In an exemplary embodiment, applying the high voltage 202da to the right shutter 108 closes the right shutter, and applying no voltage to the left, shutter 106 starts opening the left shutter. In an exemplary embodiment, the subsequent application of the small catch voltage 202dc to the left shutter 106 prevents the liquid crystals in the left shutter from rotating too far during the opening of the left shutter 106. As a result, in 202d, the left shutter 106 is opened and the right shutter 108 is closed.

In an exemplary embodiment, the magnitude of the catch voltage used in 202b and 202d ranges from about 10 to 20 % of the magnitude of the high voltage used in 202b and 202d.

In an exemplary embodiment, during the operation of the system 100, during the method 200, during the time that the left shutter 106 is closed and the right shutter 108 is open in 202b, a video image is presented for the right eye, and during the time that the left shutter 106 is opened and the right shutter 108 is closed in 202d, a video image is presented for the left eye. In an exemplary embodiment, the video image may be displayed on one or more of the movie theater screen 102, an LCD television screen, a digital light processing ("DLP") television, a DLP projector, a plasma screen, and the like.

In an exemplary embodiment, the DLP projector incorporate a conventional 1-chip DLP projection system and/or a conventional 3-chip DLP projection system, commercially available from Texas Instruments.

In an exemplary embodiment, during the operation of the system 100, the CPU 114 will direct each shutter, 106 and 108, to open at the same time the image intended for that shutter, and viewer eye, is presented. In an exemplary embodiment, a synchronization signal may be used to cause the shutters, 106 and 108, to open at the correct time.

In an exemplary embodiment, a synchronization signal is transmitted by the signal transmitter 110 and the synchronization signal could, for example, include an infrared light. In an exemplary embodiment, the signal transmitter 110 transmits the synchronization signal toward a reflective surface and the surface reflects the signal to the signal sensor 112 positioned and mounted within the frame of the 3D glasses 104. The reflective surface could, for example, be the movie theater screen 102 or another reflective device located on or near the movie screen such that the user of the 3D glasses 104 is generally facing the reflector while watching the movie. In an exemplary embodiment, the signal transmitter 110 may send the synchronization signal directly to the sensor 112. In an exemplary embodiment, the signal sensor 112 may include a photo diode mounted and supported on the frame of the 3D glasses 104.

The synchronization signal may provide a pulse at the beginning of each left-right lens shutter sequence 200. The synchronization signal could be more frequent, for example providing a pulse to direct the opening of each shutter, 106 or 108. The synchronization signal could be less frequent, for example providing a pulse once per shutter sequence 200, once per five shutter sequences, or once per 100 shutter sequences. The CPU 114 may have an internal timer to maintain proper shutter sequencing in the absence of a synchronization signal.

In an exemplary embodiment, the combination of viscous liquid crystal material and narrow cell gap in the shutters, 106 and 108, may result in a cell that is optically too thick. The liquid crystal in the shutters, 106 and 108, blocks light transmission when voltage is applied. Upon removing the applied voltage, the molecules in the liquid crystals in the shutters, 106 and 108, rotate back to the orientation of the alignment layer. The alignment layer orients the molecules in the liquid crystal cells to allow light transmission. In a liquid crystal cell that is optically too thick, the liquid crystal molecules rotate rapidly upon removal of power and thus rapidly increase light transmission but then the molecules rotate too far and light transmission decreases. The time from when the rotation of the liquid crystal cell molecules starts until the light transmission stabilizes, i.e. liquid crystal molecules rotation stops, is the true switching time.

In an exemplary embodiment, when the shutter controllers, 110 and 118, apply the small catch voltage to the shutters, 106 and 108, this catch voltage stops the rotation of the liquid crystal cells in the shutters before they rotate too far. By stopping the rotation of the molecules in the liquid crystal cells in the shutters, 106 and 108, before they rotate too far, the light transmission through the molecules in the liquid crystal cells in the shutters is held at or near its peak value. Thus, the effective switching time is from when the liquid crystal cells in the shutters, 106 and 108, start their rotation until the rotation of the molecules in the liquid crystal cells is stopped at or near the point of peak light transmission.

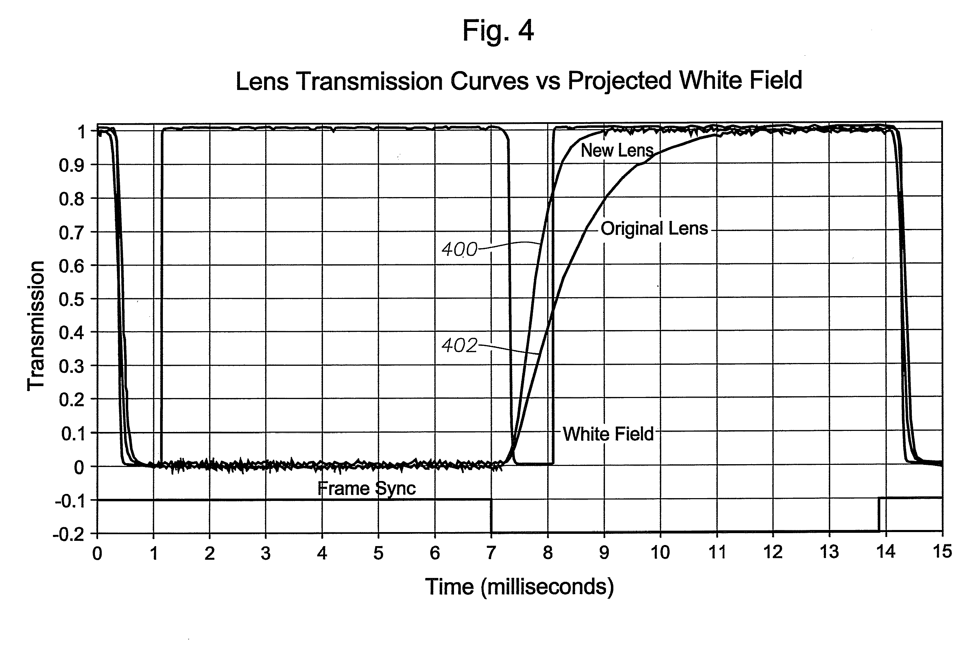

Referring now to Fig. 4, the transmission refers to the amount of light transmitted through a shutter, 106 or 108, wherein a transmission value of 1 refers to the point of maximum, or a point near the maximum, light transmission through the liquid crystal cell of the shutter, 106 or 108. Thus, for a shutter, 106 or 108, to be able to transmit its maximum of 37% of light, a transmission level of 1 indicates that the shutter, 106 or 108, is transmitting its maximum, i.e., 37%, of available light. Of course, depending upon the particular liquid crystal cell used, the maximum amount of light transmitted by a shutter, 106 or 108, could be any amount, including, for example, 33%, 30%, or significantly more or less.

As illustrated in Fig. 4, in an exemplary experimental embodiment, a shutter, 106 or 108, was operated and the light transmission 400 was measured during operation of the method 200. In the exemplary experimental embodiment of the shutter, 106 or 108, the shutter closed in approximately 0.5 milliseconds, then remained closed through the first half of the shutter cycle for about 7 milliseconds, then the shutter was opened to about 90% of the maximum light transmission in about one millisecond, and then the shutter remained open for about 7 milliseconds and then was closed. As a comparison, a commercially available shutter was also operated during the operation of the method 200 and exhibited the light transmission 402. The light transmission of the shutter, 106 and 108, of the present exemplary embodiments, during the operation of the method 200, reached about 25-30 percent transmissive, i.e., about 90% of the maximum light transmission, as shown in Fig. 4, in about one millisecond whereas the other shutter only reached about 25-30 percent transmissive, i.e., about 90% of the maximum light transmission, as shown in Fig. 4, after about 2.5 milliseconds. Thus, the shutters, 106 and 108, of the present exemplary embodiments, provided a significantly more responsive operation than commercially available shutters. This was an unexpected result.

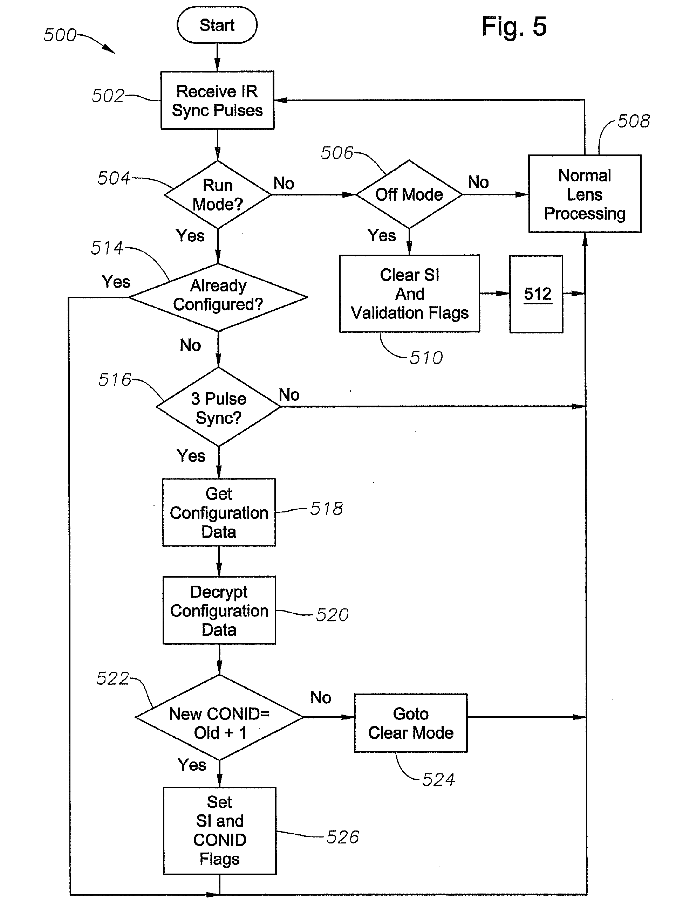

Referring now to Fig. 5, in an exemplary embodiment, the system 100 implements a method 500 of operation in which, in 502, the signal sensor 114 receives an infrared synchronization ("sync") pulse from the signal transmitter 110. If the 3D glasses 104 are not in the RUN MODE in 504, then the CPU 114 determines if the 3D glasses 104 are in the OFF MODE in 506. If the CPU 114 determines that the 3D glasses 104 are not in the OFF MODE in 506, then the CPU 114 continues normal processing in 508 and then returns to 502. If the CPU 114 determines that the 3D glasses 104 are in the OFF MODE in 506, then the CPU 114 clears the sync inverter ("SI") and validation flags in 510 to prepare the CPU 114 for the next encrypted signals, initiates a warm up sequence for the shutters, 106 and 108, in 512, and then proceeds with normal operations 508 and returns to 502.

If the 3D glasses 104 are in the RUN MODE in 504, then the CPU 114 determines whether the 3D glasses 104 are already configured for encryption in 514. If the 3D glasses 104 are already configured for encryption in 514, then the CPU 114 continues normal operations in 508 and proceeds to 502. If the 3D glasses 104 are not already configured for encryption in 514, then the CPU 114 checks to determine if the incoming signal is a three pulse sync signal in 516. If the incoming signal is not a three pulse sync signal in 516, then the CPU 114 continues normal operations in 508 and proceeds to 502. If the incoming signal is a three pulse sync signal in 516, then the CPU 114 receives configuration data from the signal transmitter 11D in 518 using the signal sensor 112. The CPU 114 then decrypts the received configuration data to determine if it is valid in 520. If the received configuration data is valid in 520, then the CPU 114 checks to see if the new configuration ID ("CONID") matches the previous CONID in 522. In an exemplary embodiment, the previous CONID may be stored in a memory device such as, for example, a nonvolatile memory device, operably coupled to the CPU 114 during the manufacture or field programming of the 3D glasses 104. If the new CONID does not match the previous CONID in 522, then the CPU 114 directs the shutters, 106 and 108, of the 3D glasses 104 to go into CLEAR MODE in 524. If the new CONID does match the previous CONID, in 522, then the CPU 114 sets the Sl and CONID flags to trigger the NORMAL MODE shutter sequence for viewing three dimensional images in 526.

In an exemplary embodiment, in the RUN or NORMAL MODE, the 3D glasses 104 are fully operational. In an exemplary embodiment, in the OFF MODE, the 3D glasses are not operational. In an exemplary embodiment, in the NORMAL MODE, the 3D glasses are operational and may implement the method 200.

In an exemplary embodiment, the signal transmitter 110 may be located near the theater projector 130. In an exemplary embodiment, the signal transmitter 110, among other functions, sends a synchronization signal ("sync signal") to the signal sensor 112 of the 3D glasses 104. The signal transmitter 110 may instead, or in addition to, receive a synchronization signal from the theater projector 130 and/or any display and/or any emitter device. In an exemplary embodiment, an encryption signal may be used to prevent the 3D glasses 104 from operating with a signal transmitter 110 that does not contain the correct encryption signal. Furthermore, in an exemplary embodiment, the encrypted transmitter signal will not properly actuate 3D glasses 104 that are not equipped to receive and process the encrypted signal. In an exemplary embodiment, the signal transmitter 110 may also send encryption data to the 3D glasses 104.

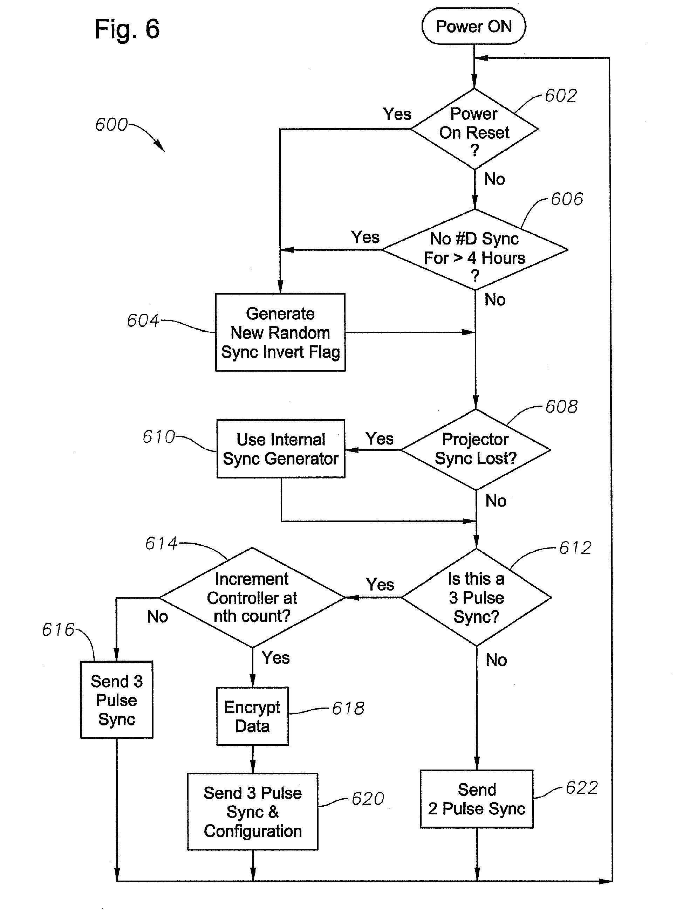

Referring now to Fig. 6, in an exemplary embodiment, during operation, the system 100 implements a method 600 of operation in which, in 602, the system determines if the signal transmitter 110 was reset because the power just came on in 602. lf the signal transmitter 110 was reset because the power just came on in 602, then the signal transmitter generates a new random sync invert flag in 604. If the signal transmitter 110 did not have a power on reset condition in 602, then the CPU 110a of the signal transmitter 110 determines whether the same sync encoding has been used for more than a predetermined amount of time in 606. in an exemplary embodiment, the predetermined time in 606 could be four hours or the length of a typical movie or any other suitable time. If the same sync encoding has been used for more than four hours in 606, then the CPU 110a of the signal transmitter 110 generates a new sync invert flag in 604.

The CPU 110a of the signal transmitter 110 then determines if the signal transmitter is still receiving a signal from the projector 130 in 608. lf the signal transmitter 110 is not still receiving a signal from the projector 130 in 608, then the signal transmitter 110 may use its own internal sync generator to continue sending sync signals to the signal sensor 112 at the proper time in 610.

During operation, the signal transmitter 110 may, for example, alternate between two-pulse sync signals and three-pulse sync signals, In an exemplary embodiment, a two-pulse sync signal directs the 3D glasses 104 to open the left shutter 108, and a three-pulse sync signal directs the 3D glasses 104 to open the right shutter 106. In an exemplary embodiment, the signal transmitter 110 may send an encryption signal after every n^{th} signal.

If the signal transmitter 110 determines that it should send a three-pulse sync signal in 612, then the signal transmitter determines the signal count since the last encryption cycle in 614. In an exemplary embodiment, the signal transmitter 110 sends an encryption signal only once out of every ten signals. However, in an exemplary embodiment, there could be more or less signals cycles between encryption signals. If the CPU 110a of the signal transmitter 110 determines this is not the n^{th} three-pulse sync in 614, then the CPU directs the signal transmitter to send a standard three pulse sync signal in 616. If the sync signal is the n^{th} three-pulse signal, then the CPU 110a of the signal transmitter 110 encrypts the data in 618 and sends a three pulse sync signal with embedded configuration data in 620. If the signal transmitter 110 determines that it should not send a three-pulse sync signal in 612, then the signal transmitter sends a two-pulse sync signal in 622.

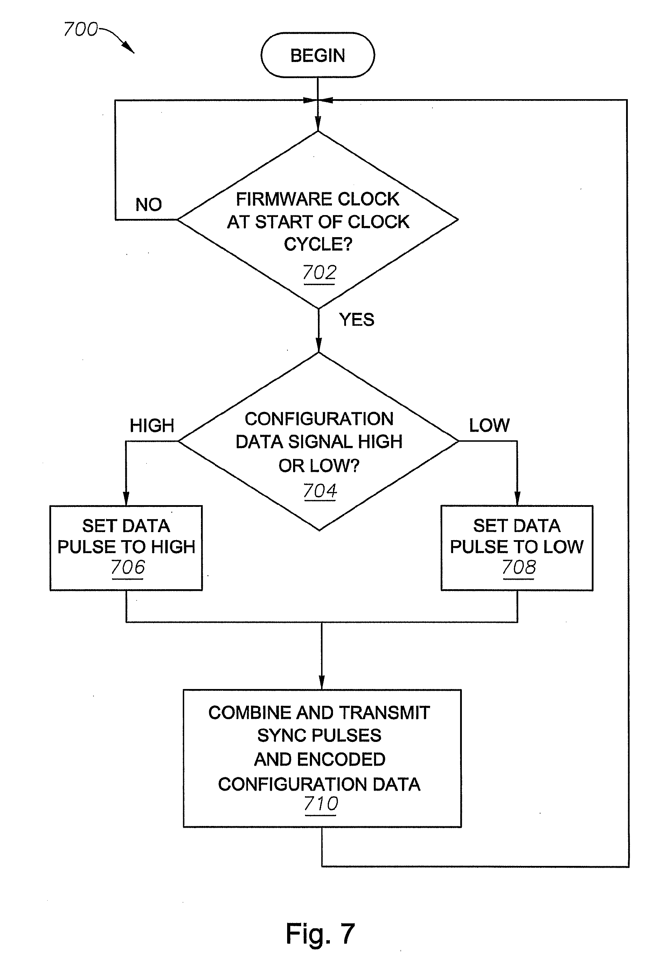

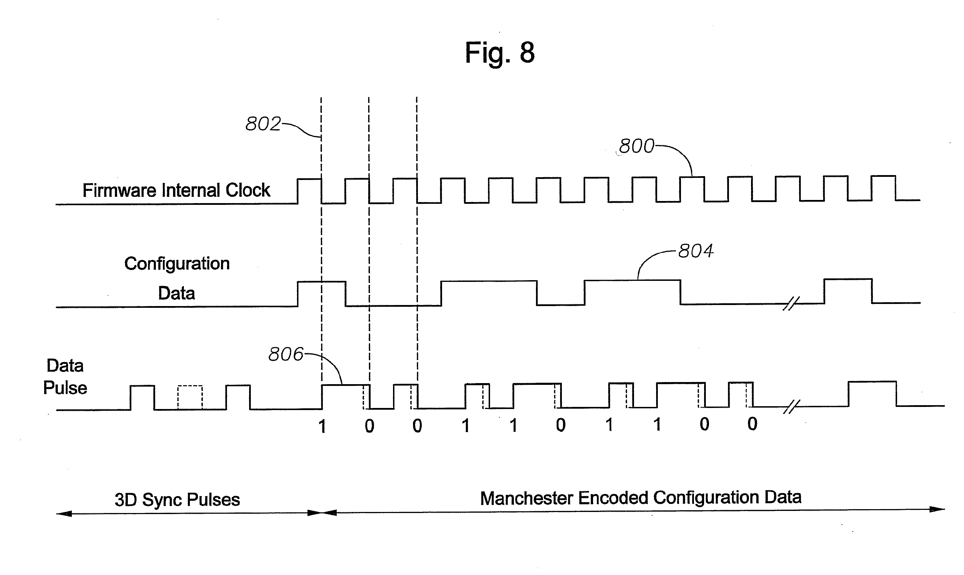

Referring now to Figs. 7 and 8, in an exemplary embodiment, during operation of the system 100, the signal transmitter 110 implements a method 700 of operation in which the sync pulses are combined with encoded configuration data and then transmitted by the signal transmitter 110. In particular, the signal transmitter 110 includes a firmware internal clock that generate a clock signal 800. In 702, the CPU 110a of the signal transmitter 110 determines if the clock signal 800 is at the beginning of the clock cycle 802. If the CPU, 110a of the signal transmitter 110 determines that the clock signal 800 is at the beginning of the clock cycle in 702, then the CPU of the signal transmitter checks to see if a configuration data signal 804 is high or low in 704. If the configuration data signal 804 is high, then a data pulse signal 806 is set to a high value in 708. If the configuration data signal 804 is low, then the data pulse signal 806 is set to a low value in 708. In an exemplary embodiment, the data pulse signal 806 may already include the sync signal. Thus, the data pulse signal 806 is combined with the synch signal in 710 and transmitted by the signal transmitter 110 in 710.

In an exemplary embodiment, the encrypted form of the configuration data signal 804 may be sent during every sync signal sequence, after a predetermined number of sync signal sequences, embedded with the sync signal sequences, overlayed with the sync signal sequences, or combined with the sync signal sequences -- before or after the encryption operation. Furthermore, the encrypted form of the configuration data signal 804 could be sent on either the two or three pulse sync signal, or both, or signals of any other number of pulses. In addition, the encrypted configuration data could be transmitted between the transmission of the sync signal sequence with or without encrypting the sync signals on either end of the transmission.

In an exemplary embodiment, encoding the configuration data signal 804, with or without the sync signal sequence, may be provided, for example, using Manchester encoding.

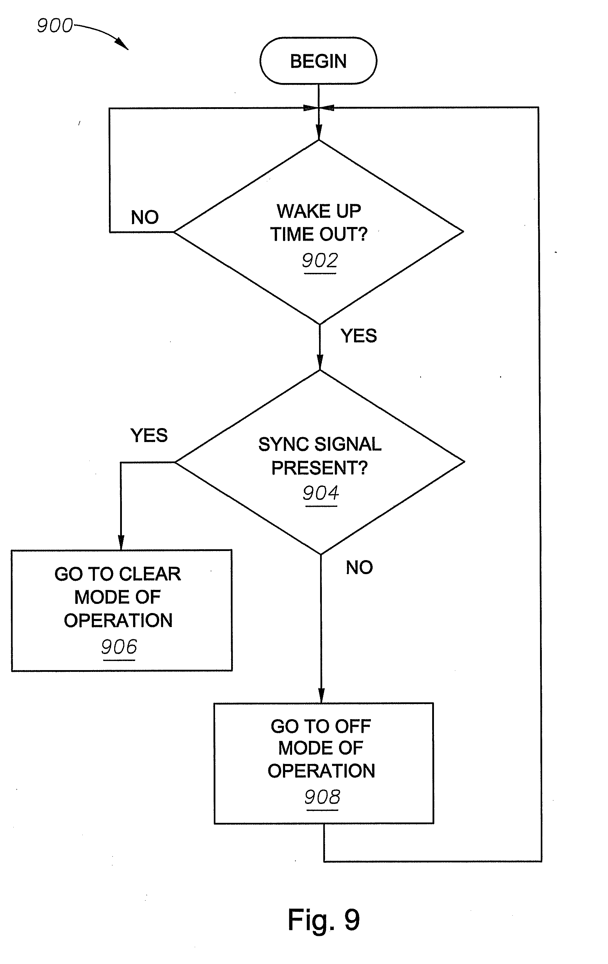

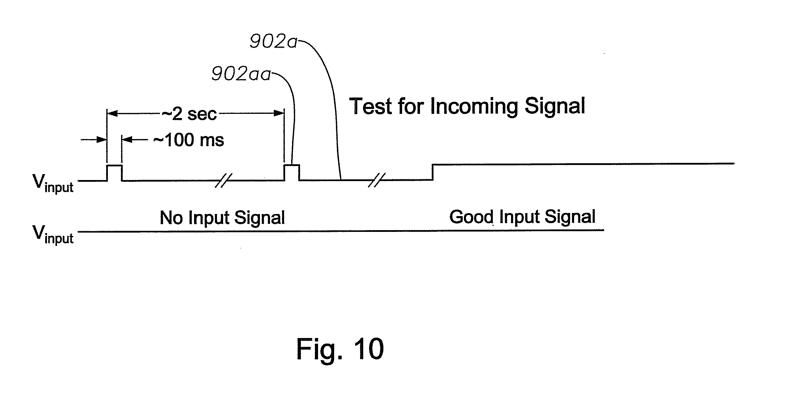

Referring now to Figs. 2, 5, 8, 9 and 10, in an exemplary embodiment, during the operation of the system 100, the 3D glasses 104 implement a method 900 of operation in which, in 902, the CPU 114 of the 3D glasses 104 checks for a wake up mode time out. In an exemplary embodiment, the presence of a wake up mode time out in 902 is provided by a clock signal 902a having a high pulse 902aa with a duration of 100 milliseconds that may occur every 2 seconds, or other predetermined time period. In an exemplary embodiment, the presence of the high pulse 902aa indicates a wake up mode time out.

If the CPU 114 detects a wake up time out in 902, then the CPU checks for the presence or absence of a sync signal using the signal sensor 112 in 904. If the CPU 114 detects a sync signal in 904, then the CPU places the 3D glasses 104 in a CLEAR MODE of operation in 906. In an exemplary embodiment, in the CLEAR MODE of operation, the 3D glasses implement, at least portions of, one or more of the methods 200 and 500, receiving sync pulses, and/or processing configuration data 804. In an exemplary embodiment, in the CLEAR mode of operation, the 3D glasses may provide at least the operations of the method 1300, described below.

If the CPU 114 does not detect a sync signal in 904, then the CPU places the 3D glasses 104 in an OFF MODE of operation in 908 and then, in 902, the CPU checks for a wake up mode time out. In an exemplary embodiment, in the OFF MODE of operation, the 3D glasses do not provide the features of NORMAL or CLEAR mode of operations.

In an exemplary embodiment, the method 900 is implemented by the 3D glasses 104 when the 3D glasses are in either the OFF MODE or the CLEAR MODE.

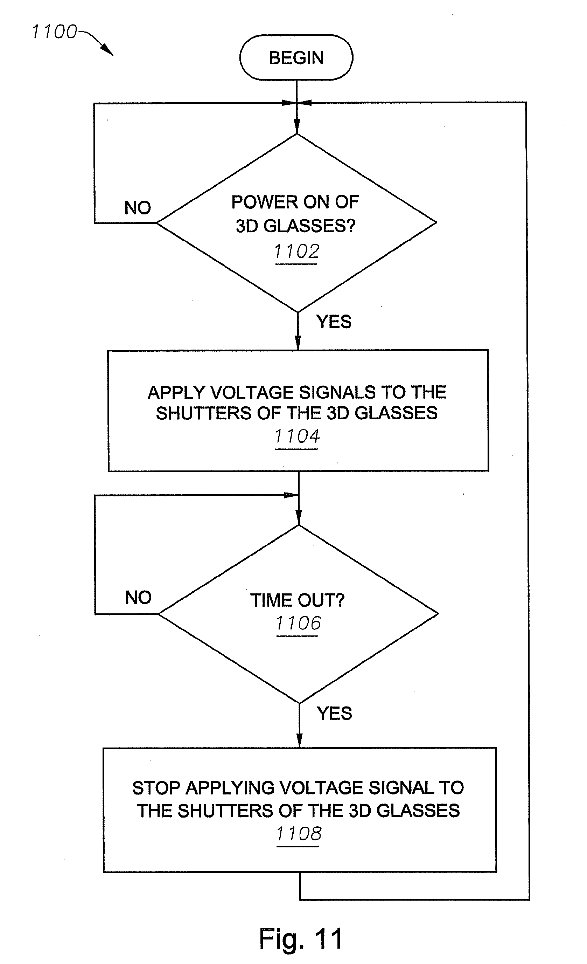

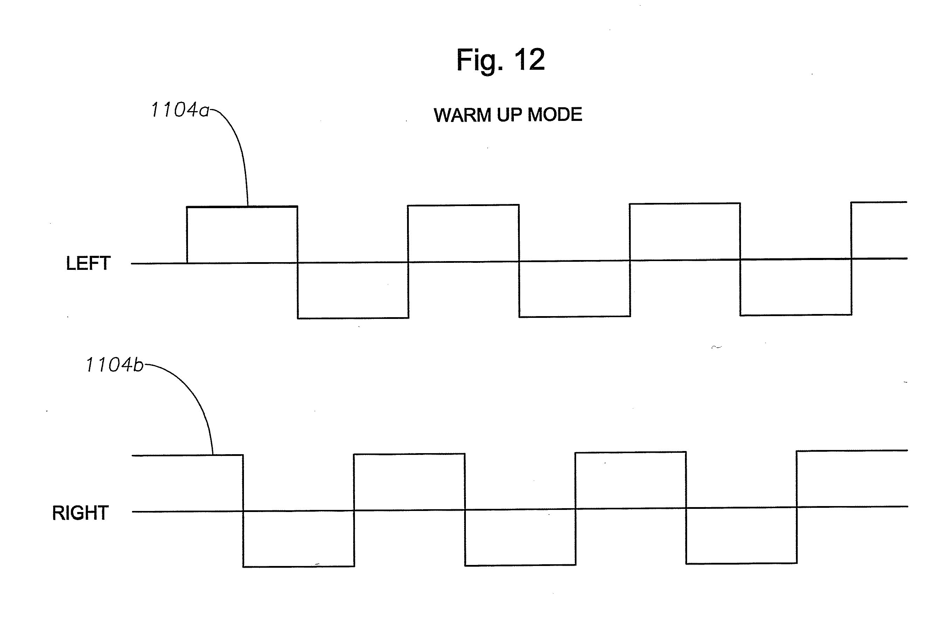

Referring now to Figs. 11 and 12, in an exemplary embodiment, during operation of the system 100, the 3D glasses 104 implement a warm up method 1100 of operation in which, in 1102, the CPU 114 of the 3D glasses checks for a power on of the 3D glasses. In an exemplary embodiment, the 3D glasses 104 may be powered on either by a user activating a power on switch or by an automatic wakeup sequence. In the event of a power on of the 3D glasses 104, the shutters, 106 and 108, of the 3D glasses may, for example, require a warm-up sequence. The molecules of the liquid crystal cells of the shutters, 106 and 108, that do not have power for a period of time may be in an indefinite state.

If the CPU 114 of the 3D glasses 104 detect a power on of the 3D glasses in 1102, then the CPU applies alternating voltage signals, 1104a and 1104b, to the shutters, 106 and 108, respectively, in 1104. In an exemplary embodiment, the voltage applied to the shutters, 106 and 108, is alternated between positive and negative peak values to avoid ionization problems in the liquid crystal cells of the shutter. In an exemplary embodiment, the voltage signals, 1104a and 1104b, are at least partly out of phase with one another. Alternatively, the voltage signals, 1104a and 1104b, may be in phase or completely out of phase. In an exemplary embodiment, one or both of the voltage signals, 1104a and 1104b, may be alternated between a zero voltage and a peak voltage. In an exemplary embodiment, other forms of voltage signals may be applied to the shutters, 106 and 108, such that the liquid crystal cells of the shutters are placed in a definite operational state. In an exemplary embodiment, the application of the voltage signals, 1104a and 1104b, to the shutters, 106 and 108, causes the shutters to open and close, either at the same time or at different times. Alternatively, the application of the voltage signals, 1104a and 1104b, causes the shutters, 106 and 108, to be closed all of the time.

During the application of the voltage signals, 1104a and 1104b, to the shutters, 106 and 108, the CPU 114 checks for a warm up time out in 1106. If the CPU 114 detects a warm up time out in 1106, then the CPU will stop the application of the voltage signals, 1104a and 1104b, to the shutters, 106 and 108, in 1108.

In an exemplary embodiment, in 1104 and 1106, the CPU 114 applies the voltage signals, 1104a and 1104b, to the shutters, 106 and 108, for a period of time sufficient to actuate the liquid crystal cells of the shutters. In an exemplary embodiment, the CPU 114 applies the voltage signals, 1104a and 1104b, to the shutters, 106 and 108, for a time out period of two seconds. In an exemplary embodiment, the maximum magnitude of the voltage signals, 1104a and 1104b, may be 14 volts. In an exemplary embodiment, the time out period in 1106 may be two seconds. In an exemplary embodiment, the maximum magnitude of the voltage signals, 1104a and 1104b, may be greater or lesser than 14 volts, and the time out period may be longer or shorter. In an exemplary embodiment, during the method 1100, the CPU 114 may open and close the shutters, 106 and 108, at a different rate than would be used for viewing a movie. In an exemplary embodiment, in 1104 the voltage signals, 1104a and 1104b, applied to the shutters, 106 and 108, alternate at a different rate than would be used for viewing a movie. In an exemplary embodiment, in 1104, the voltage signals applied to the shutters, 106 and 108, do not alternate and are applied constantly during the warm up time period and therefore the liquid crystal cells of the shutters may remain opaque for the entire warm up period. In an exemplary embodiment, the warm-up method 1100 may occur with or without the presence of a synchronization signal. Thus, the method 1100 provides a WARM UP mode of the operation for the 3D glasses 104. In an exemplary embodiment, after implementing the warm up method 1100, the 3D glasses are placed in a NORMAL RUN MODE of operation and may then implement the method 200. Alternatively, in an exemplary embodiment, after implementing the warm up method 1100, the 3D glasses are placed in a CLEAR MODE of operation and may then implement the method 1300, described below.

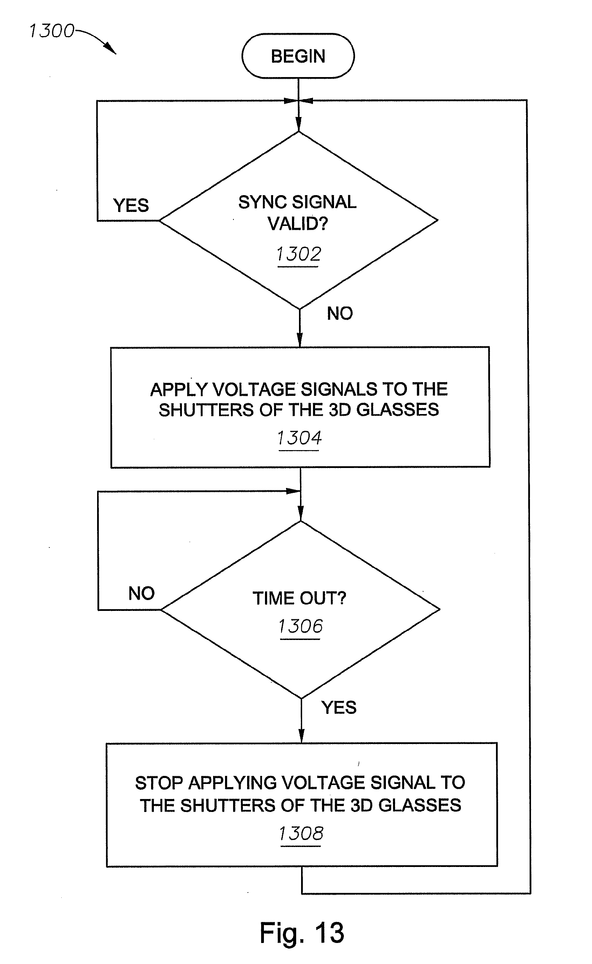

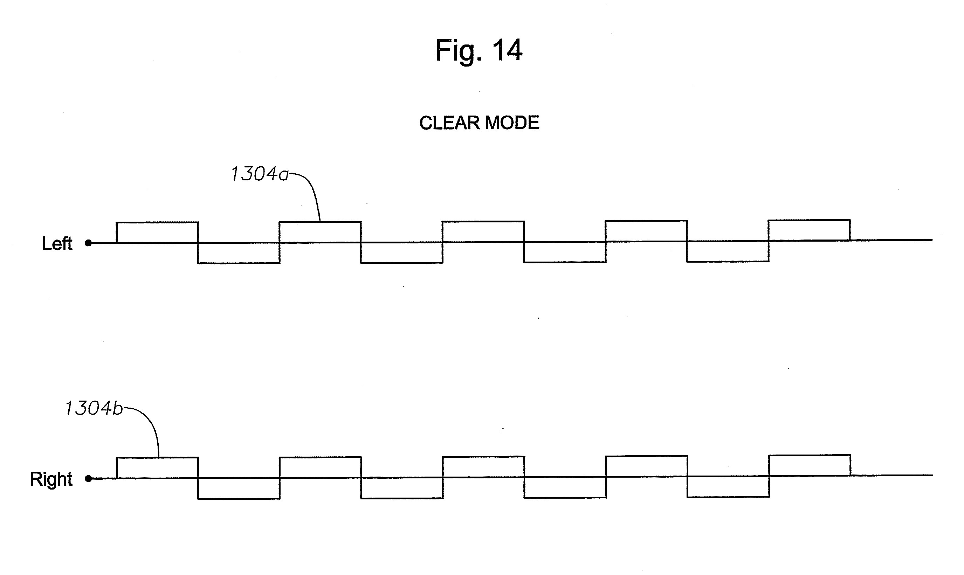

Referring now to Figs. 13 and 14, in an exemplary embodiment, during the operation of the system 100, the 3D glasses 104 implement a method 1300 of operation in which, in 1302, the CPU 114 checks to see if the sync signal detected by the signal sensor 112 is valid or invalid. If the CPU 114 determines that the sync signal is invalid in 1302, then the CPU applies voltage signals, 1304a and 1304b, to the shutters, 106 and 108, of the 3D glasses 104 in 1304. In an exemplary embodiment, the voltage applied to the shutters, 106 and 108, is alternated between positive and negative peak values to avoid ionization problems in the liquid crystal cells of the shutter. In an exemplary embodiment, one or both of the voltage signals, 1104a and 1104b, may be alternated between a zero voltage and a peak voltage. In an exemplary embodiment, other forms of voltage signals may be applied to the shutters, 106 and 108, such that the liquid crystal cells of the shutters remain open so that the user of the 3D glasses 104 can see normally through the shutters. In an exemplary embodiment, the application of the voltage signals, 1104a and 1104b, to the shutters, 106 and 108, causes the shutters to open.

During the application of the voltage signals, 1304a and 1304b, to the shutters, 106 and 108, the CPU 114 checks for a clearing time out in 1306. If the CPU 114 detects a clearing time out in 1306, then the CPU will stop the application of the voltage signals, 1304a and 1304b, to the shutters, 106 and 108, in 1308.

Thus, in an exemplary embodiment, if the 3D glasses 104 do not detect a valid synchronization signal, they may go to a clear mode of operation and implement the method 1300. In the clear mode of operation, in an exemplary embodiment, both shutters, 106 and 108, of the 3D glasses 104 remain open so that the viewer can see normally through the shutters of the 3D glasses. In an exemplary embodiment, a constant voltage is applied, alternating positive and negative, to maintain the liquid crystal cells of the shutters, 106 and 108, of the 3D glasses in a clear state. The constant voltage could, for example, be in the range of 2-3 volts, but the constant voltage could be any other voltage suitable to maintain reasonably clear shutters. In an exemplary embodiment, the shutters, 106 and 108, of the 3D glasses 104 may remain clear until the 3D glasses are able to validate an encryption signal. In an exemplary embodiment, the shutters, 106 and 108, of the 3D glasses may alternately open and close at a rate that allows the user of the 3D glasses to see normally.

Thus, the method 1300 provides a method of clearing the operation of the 3D glasses 104 and thereby provide a CLEAR MODE of operation.

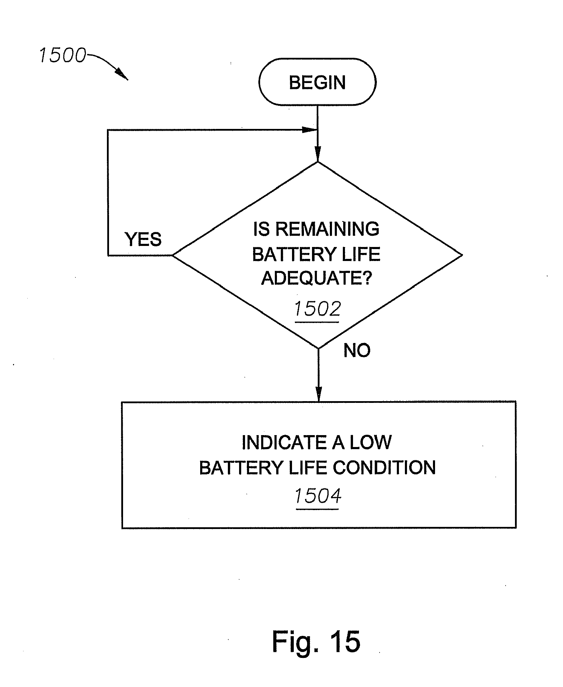

Referring now to Fig. 15, in an exemplary embodiment, during the operation of the system 100, the 3D glasses 104 implement a method 1500 of monitoring the battery 120 in which, in 1502, the CPU 114 of the 3D glasses uses the battery sensor 122 to determine the remaining useful life of the battery. If the CPU 114 of the 3D glasses determines that the remaining useful life of the battery 120 is not adequate in 1502, then the CPU provides an indication of a low battery life condition in 1504.

In an exemplary embodiment, an inadequate remaining battery life may, for example, be any period less than 3 hours. In an exemplary embodiment, an adequate remaining battery life may be preset by the manufacturer of the 3D glasses and/or programmed by the user of the 3D glasses.

In an exemplary embodiment, in 1504, the CPU 114 of the 3D glasses 104 will indicate a low battery life condition by causing the shutters, 106 and 108, of the 3D glasses to blink slowly, by causing the shutters to simultaneously blink at a moderate rate that is visible to the user of the 3D glasses, by flashing an indicator light, by generating an audible sound, and the like.

In an exemplary embodiment, if the CPU 114 of the 3D glasses 104 detects that the remaining battery life is insufficient to last for a specified period of time, then the CPU of the 3D glasses will indicate a low battery condition in 1504 and then prevent the user from turning on the 3D glasses.

In an exemplary embodiment, the CPU 114 of the 3D glasses 104 determines whether or not the remaining battery life is adequate every time the 3D glasses transition to the CLEAR MODE of operation.

In an exemplary embodiment, if the CPU 114 of the 3D glasses determines that the battery will last for at least the predetermined adequate amount of time, then the 3D glasses will continue to operate normally. Operating normally may include staying in the CLEAR MODE of operation for five minutes while checking for a valid signal from the signal transmitter 110 and then going to an OFF MODE wherein the 3D glasses 104 periodically wake up to check for a signal from the signal transmitter.

In an exemplary embodiment, the CPU 114 of the 3D glasses 104 checks for a low battery condition just before shutting off the 3D glasses. In an exemplary embodiment, if the battery 120 will not last for the predetermined adequate remaining life time, then the shutters, 106 and 108, will begin blinking slowly,

In an exemplary embodiment, if the battery 120 will not last for the predetermined adequate remaining life time, the shutters, 106 and/or 108, are placed into an opaque condition, i.e., the liquid crystal cells are closed, for two seconds and then placed into a clear condition, i.e., the liquid crystal cells are opened, for 1/10^{th} of a second. The time period that the shutters, 106 and/or 108, are closed and opened may be any time period.

In an exemplary embodiment, the 3D glasses 104 may check for a low battery condition at any time including during warm up, during normal operation, during clear mode, during power off mode or at the transition between any conditions. In an exemplary embodiment, if a low battery life condition is detected at a time when the viewer is likely to be in the middle of a movie, the 3D glasses 104 may not immediately indicate the low battery condition.

In some embodiments, if the CPU 114 of the 3D glasses 104 detects a low battery level, the user will not be able to power the 3D glasses on.

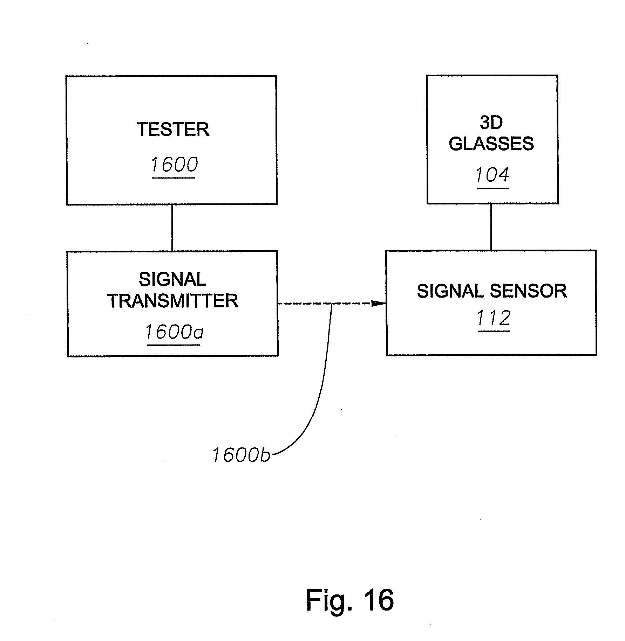

Referring now to Fig. 16, in an exemplary embodiment, a tester 1600 may be positioned proximate the 3D glasses 104 in order to verify that the 3D glasses are working properly. In an exemplary embodiment, the tester 1600 includes a signal transmitter 1600a for transmitting test signals 1600b to the signal sensor 112 of the 3D glasses. In an exemplary embodiment, the test signal 1600b may include a sync signal having a low frequency rate to cause the shutters, 108 and 108, of the 3D glasses 104 to blink at a low rate that is visible to the user of the 3D glasses. In an exemplary embodiment, a failure of the shutters, 106 and 108, to blink in response to the test signal 1600b may indicate a failure on the part of the 3D glasses 104 to properly operate.

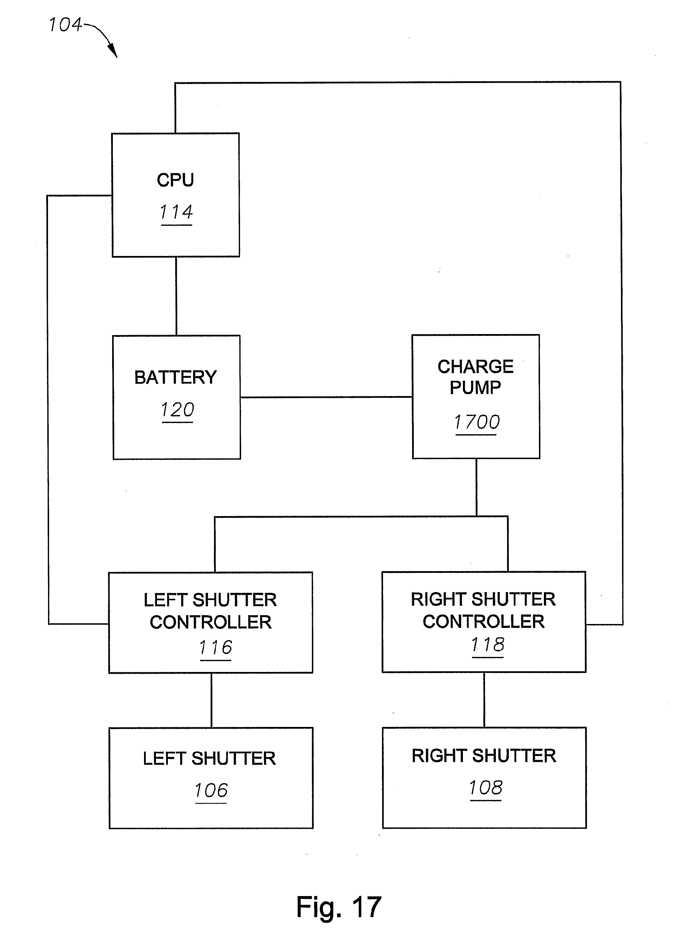

Referring now to Fig. 17, in an exemplary embodiment, the 3D glasses 104 further include a charge pump 1700 operably coupled to the CPU 114, the shutter controllers, 116 and 118, the battery 120 for converting the output voltage of the battery to a higher output voltage for use in operating the shutter controllers.

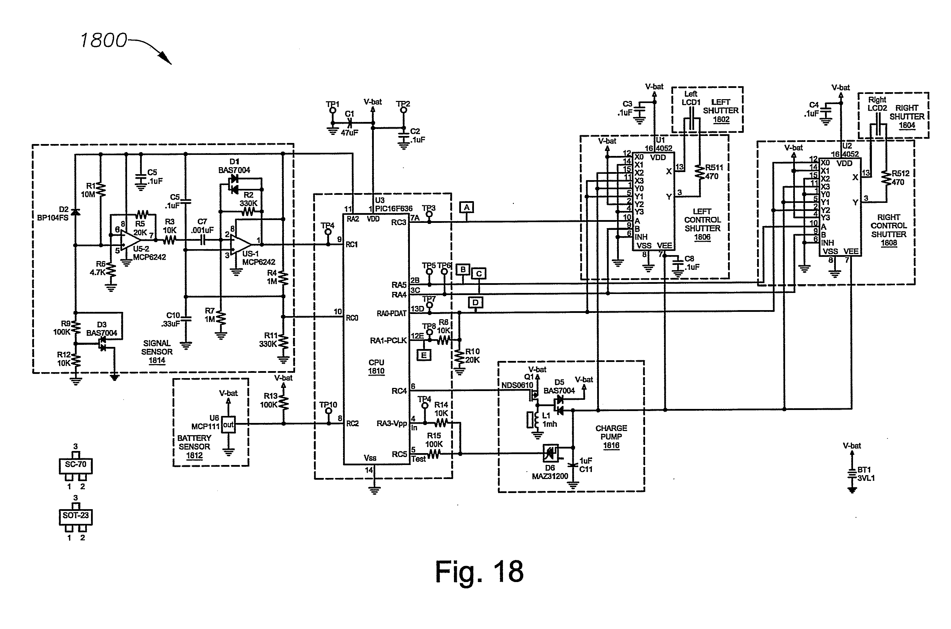

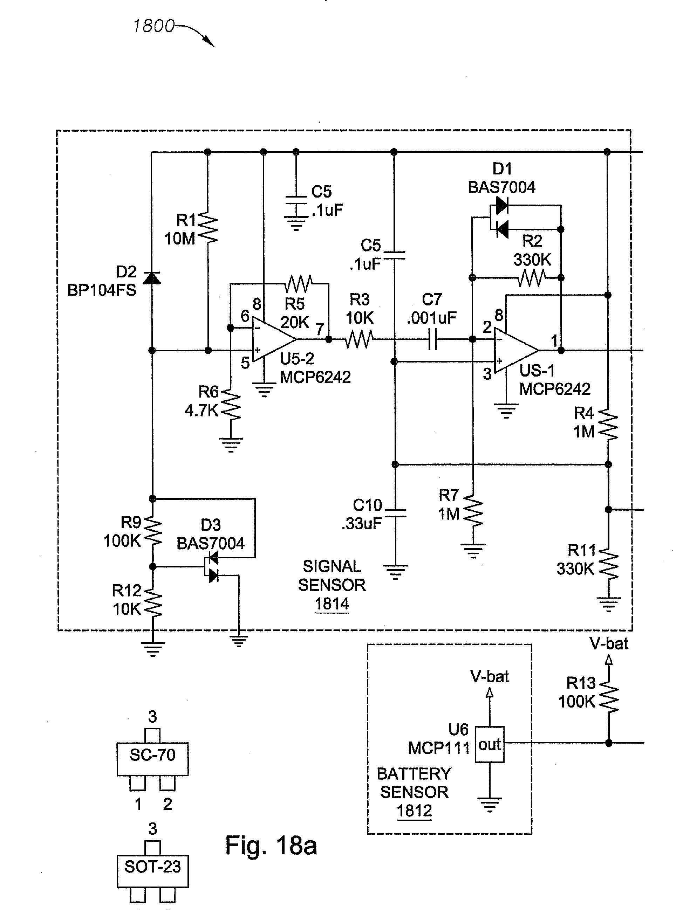

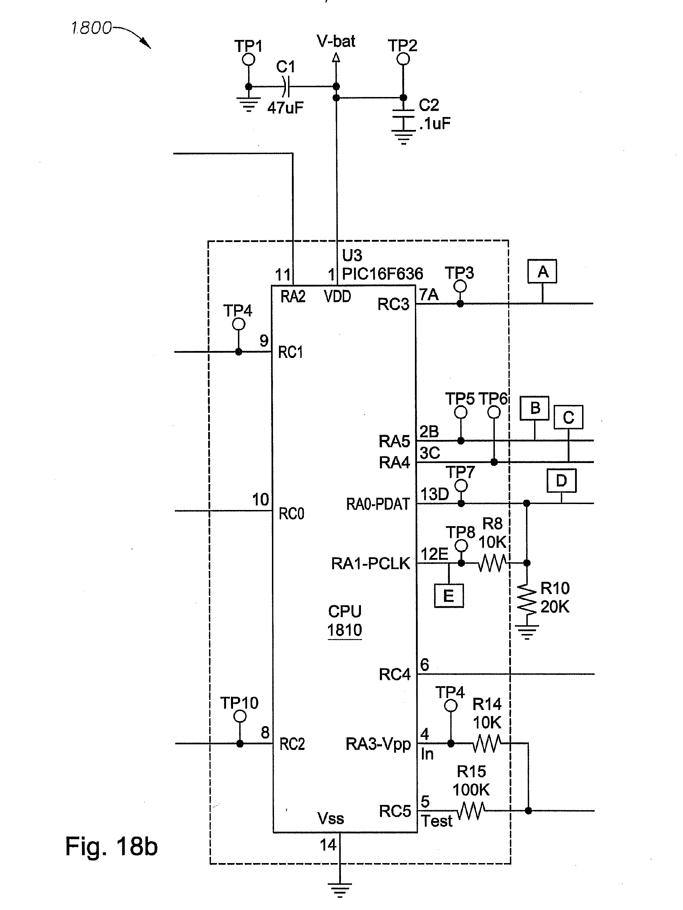

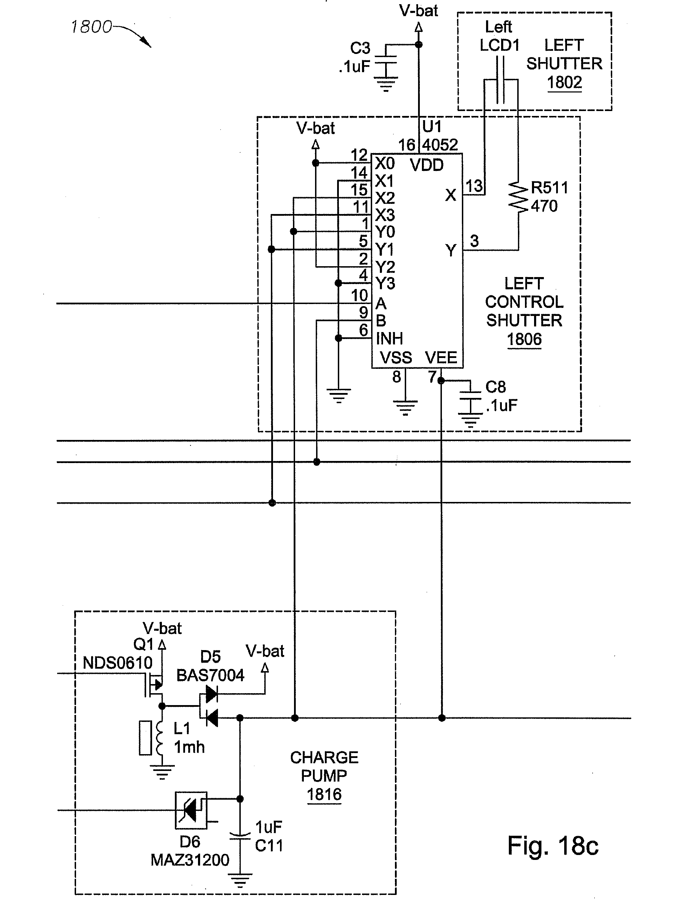

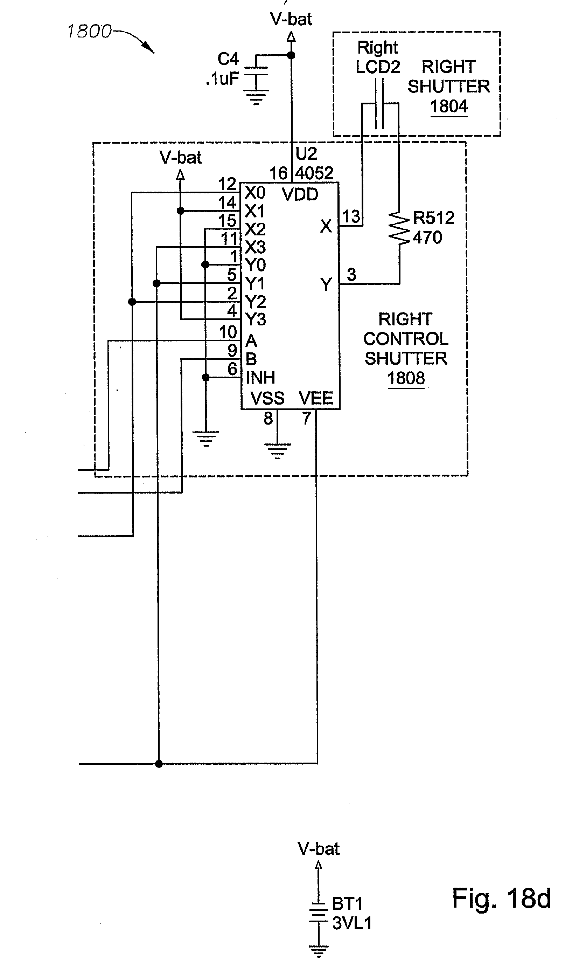

Referring to Figs. 18, 18a, 18b, 18c, and 18d, an exemplary embodiment of 3D glasses 1800 is provided that is substantially identical in design and operation as the 3D glasses 104 illustrated and described above except as noted below. The 3D glasses 1800 include a left shutter 1802, a right shutter 1804, a left shutter controller 1806, a right shutter controller 1808, a CPU 1810, a battery sensor 1812, a signal sensor 1814 and a charge pump 1816. In an exemplary embodiment, the design and operation of the left shutter 1802, the right shutter 1804, the left shutter controller 1806, the right shutter controller 1808, the CPU 1810, the battery sensor 1812, the signal sensor 1814, and the charge pump 1816 of the 3D glasses 1800 are substantially identical to the left shutter 106, the right shutter 108, the left shutter controller 116, the right shutter controller 118, the CPU 114, the battery sensor 122, the signal sensor 112, and the charge pump 1700 of the 3D glasses 104 described and illustrated above.

In an exemplary embodiment, the 3D glasses 1800 include the following components:

| **NAME** | **VALUE/ID** |
|---|---|
| R12 | 10K |
| R9 | 100K |
| D3 | BAS7004 |
| R6 | 4.7K |
| D2 | BP104FS |
| R1 | 10M |
| C5 | 1uF |
| R5 | 20K |
| U5-2 | MCP6242 |
| R3 | 10K |
| C6 | .1uF |
| C7 | .001 uf |
| C10 | .33uF |
| R7 | 1M |
| D1 | BAS7004 |
| R2 | 330K |
| U5-1 | MCP6242 |
| R4 | 1M |
| R11 | 330K |
| U6 | MCP111 |
| R13 | 100K |
| U3 | PIC16F636 |
| C1 | 47uF |
| C2 | .1uF |
| R8 | 10K |
| R10 | 20K |
| R14 | 10K |
| R15 | 100K |
| Q1 | NDS0610 |
| D6 | MAZ31200 |
| D5 | BAS7004 |
| L1 | 1mh |
| C11 | 1uF |
| C3 | .1uF |
| U1 | 4052 |
| R511 | 470 |
| C8 | .1uF |
| C4 | .1uF |
| U2 | 4052 |
| R512 | 470 |
| C1 | 47uF |
| C11 | 1uf |
| Left Lens | LCD 1 |
| Right Lens | LCD 2 |
| BT1 | 3V Li |

In an exemplary embodiment, the left shutter controller 1806 includes a digitally controlled analog switch U1 that, under the control of the CPU 1810, depending upon the mode of operation, applies a voltage across the left shutter 1802 for controlling the operation of the left shutter. In similar fashion, the right shutter controller 1808 includes a digitally controller analog switch U2 that, under the control of the CPU 1810, depending upon the mode of operation, applies a voltage across the right shutter 1804 for controlling the operation of the right shutter. In an exemplary embodiment, U1 and U2 are conventional commercially available digitally controlled analog switches available from Unisonic Technologies or Texas Instruments as part numbers, UTC 4052 and TI 4052, respectively.

As will be recognized by persons having ordinary skill in the art, the 4052 digitally controlled analog switch includes control input signals A, B and INHIBIT ("INH"), switch I/O signals X0, X1, X2, X3, Y0, Y1. Y2 and Y3, and output signals X and Y and further provides the following truth table:

**TRUTH TABLE**

| Control Inputs | | | ON Switches | |
|---|---|---|---|---|
| Inhibit | Select | | | |
| | B | A | | |
| 0 | 0 | 0 | Y0 | X0 |
| 0 | 0 | 1 | Y1 | X1 |
| 0 | 1 | 0 | Y2 | X2 |
| 0 | 1 | 1 | Y3 | X3 |
| 1 | X | X | None | |

| | | | | |
|---|---|---|---|---|
| * X=Don't Care | | | | |

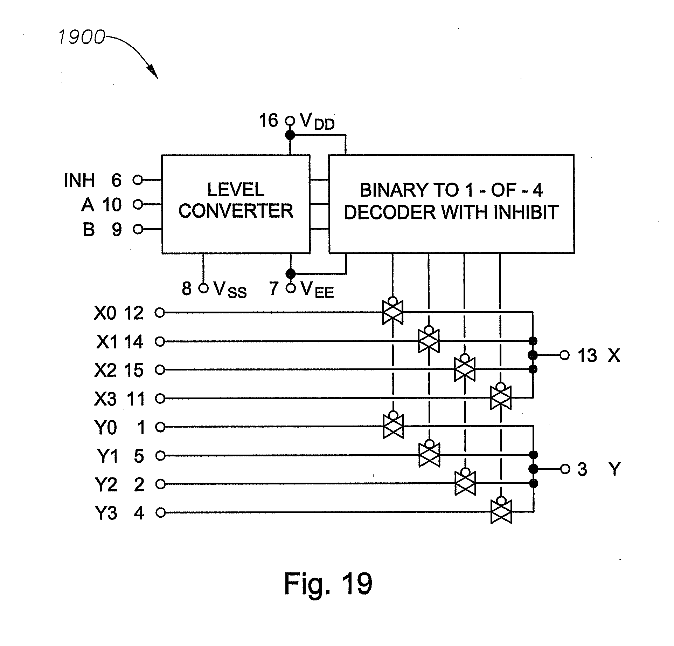

And, as illustrated in Fig. 19, the 4052 digitally controlled analog switch also provides a functional diagram 1900. Thus, the 4052 digitally controlled analog switch provides a digitally controlled analog switch, each having two independent switches, that permits the left and right shutter controllers, 1806 and1808, to selectively apply a controlled voltage across the left and right shutters, 1802 and 1804, to control the operation of the shutters.

In an exemplary embodiment, the CPU 1810 includes a microcontroller U3 for generating output signals A, B, C, D and E for controlling the operation of the digitally controlled analog switches, U1 and U2, of the left and right shutter controllers, 1806 and 1808. The output control signals A, B and C of the microcontroller U3 provide the following input control signals A and B to each of the digitally controlled analog switches, U1 and U2:

| **U3 - Output Control Signals** | **U1 - Input Control Signals** | **U2 - Input Control Signal** |
|---|---|---|
| A | A | |
| B | | A |
| C | B | B |

In an exemplary embodiment, the output control signals D and E of the microcontroller U3 provide, or otherwise affect, the switch I/O signals X0, X1, X2, X3, Y0, Y1, Y2 and Y3 of the digitally controlled analog switches, U1 and U2:

| **U3 - Output Control Signals** | **U1 - Switch I/O Signals** | **U2 - Switch I/O Signals** |
|---|---|---|
| D | X3, Y1 | X0, Y2 |
| E | X3, Y1 | X0, Y2 |

In an exemplary embodiment, the microcontroller U3 of the CPU 1810 is a model number PIC16F636 programmable microcontroller, commercially available from Microchip.

In an exemplary embodiment, the battery sensor 1812 includes a power detector U6 for sensing the voltage of the battery 120. In an exemplary embodiment, the power detector U6 is a model MCP111 micropower voltage detector, commercially available from Microchip.

In an exemplary embodiment, the signal sensor 1814 includes a photodiode D2 for sensing the transmission of the signals, including the sync signal and/or configuration data, by the signal transmitter 110. In an exemplary embodiment, the photodiode D2 is a model BP104FS photodiode, commercially available from Osram. In an exemplary embodiment, the signal sensor 1814 further includes operational amplifiers, U5-1 and U5-2, and related signal conditioning components, resistors R1, R2, R3, R4, R5, R6, R7, R9, R11, and R12, capacitors C5, C6, C7, and C10, and schottky diodes, D1 and D3.

In an exemplary embodiment, the charge pump 1816 amplifies the magnitude of the output voltage of the battery 120, using a charge pump, from 3V to -12V. In an exemplary embodiment, the charge pump 1816 includes a MOSFET Q1, a schottky diode D5, an inductor L1, and a zener diode D6. In an exemplary embodiment, the output signal of the charge pump 1816 is provided as input signals to switch I/O signals X2 and Y0 of the digitally controlled analog switch U1 of the left shutter controller 1806 and as input signals to switch I/O signals X3 and Y1 of the digitally controlled analog switch U2 of the right shutter controller 1808.

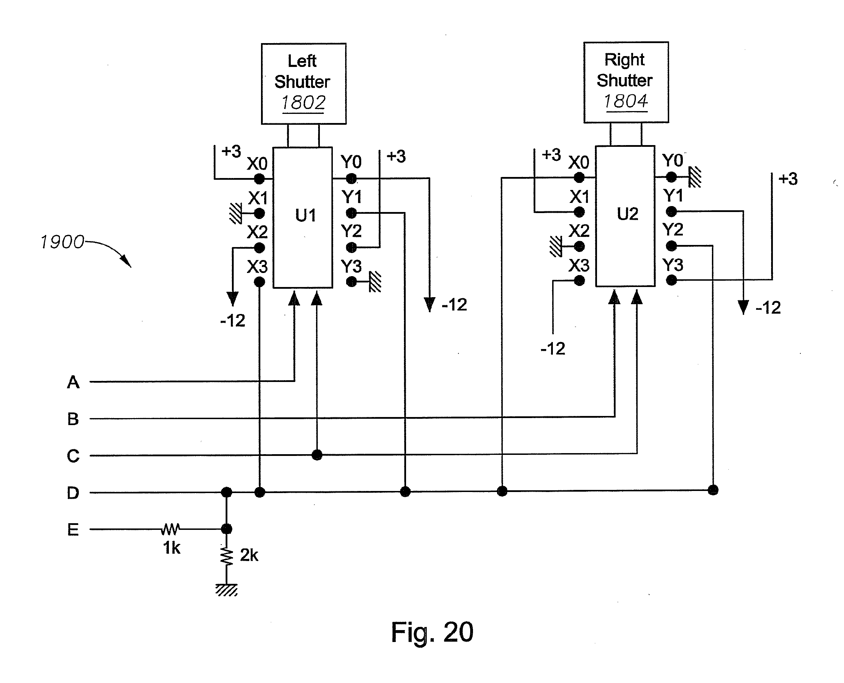

As illustrated in Fig. 20, in an exemplary embodiment, during operation of the 3D glasses 1800, the digitally controlled analog switches, U1 and U2, under the control of the control signals A, B, C, D, and E of the CPU 1810, may provide various voltages across one or both of the left and right shutters, 1802 and 1804. In particular, the digitally controlled analog switches, U1 and U2, under the control of the control signals A, B, C, D, and E of the CPU 1810, may provide: 1) a positive or negative 15 volts across one or both of the left and right shutters, 1802 and 1804, 2) a positive or negative voltage, in the range of 2-3 volts, across one or both of the left and right shutters, or 3) provide 0 volts, i.e., a neutral state, across one or both of the left and right shutters. In an exemplary embodiment the digitally controlled analog switches, U1 and U2, under the control of the control signals A, B, C, D, and E of the CPU 1810, may provide 15 volts by, for example, combining +3 volts with -12 volts to achieve a differential of 15 volts across the one or both of the left and right shutters, 1802 and 1804. In an exemplary embodiment, the digitally controlled analog switches, U1 and U2, under the control of the control signals A, B, C, D, and E of the CPU 1810, may provide a 2 volt catch voltage, for example, by reducing the 3 volt output voltage of the battery 120 to 2 volts with a voltage divider, including components R8 and R10.

Alternatively, the digitally controlled analog switches, U1 and U2, under the control of the control signals A, B, C, D, and E of the CPU 1810, may provide: 1) a positive or negative 15 volts across one or both of the left and right shutters, 1802 and 1804, 2) a positive or negative voltage, of about 2 volts, across one or both of the left and right shutters, 3) a positive or negative voltage, of about 3 volts, across one or both of the left and right shutters, or 4) provide 0 volts, i.e., a neutral state, across one or both of the left and right shutters. In an exemplary embodiment, the digitally controlled analog switches, U1 and U2, under the control of the control signals A, B, C, D, and E of the CPU 1810, may provide 15 volts by, for example, combining +3 volts with -12 volts to achieve a differential of 15 volts across the one or both of the left and right shutters, 1802 and 1804. In an exemplary embodiment, the digitally controlled analog switches, U1 and U2, under the control of the control signals A, B, C, D, and E of the CPU 1810, may provide a 2 volt catch voltage, for example, by reducing the 3 volt output voltage of the battery 120 to 2 volts with a voltage divider, including components R8 and R10.

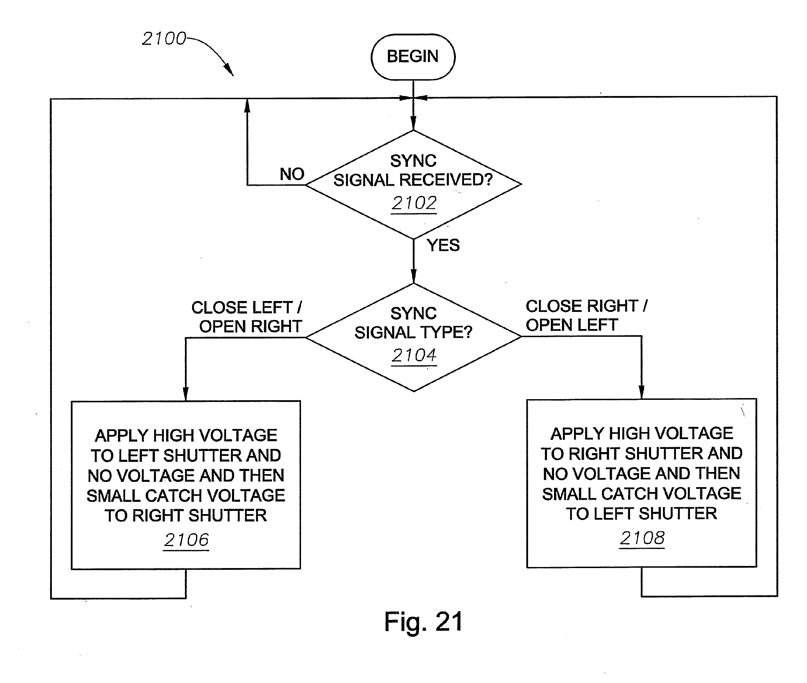

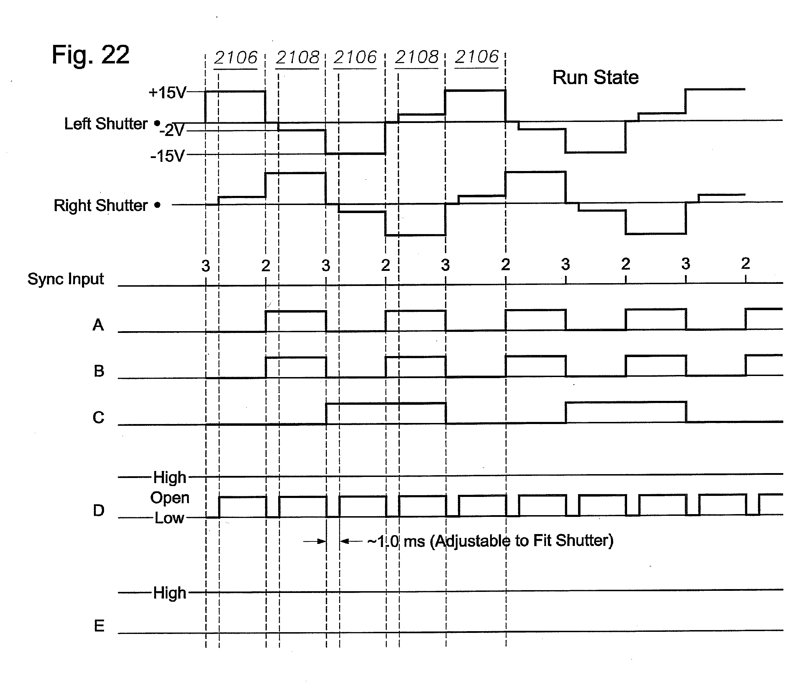

Referring now to Figs. 21 and 22, in an exemplary embodiment, during the operation of the 3D glasses 1800, the 3D glasses execute a normal run mode of operation 2100 in which the control signals A, B, C, D and E generated by the CPU 1810 are used to control the operation of the left and right shutter controllers, 1806 and 1808, to in turn control the operation of the left and right shutters, 1802 and 1804, as a function of the type of sync signal detected by the signal sensor 1814.

In particular, in 2102, if the CPU 1810 determines that the signal sensor 1814 has received a sync signal, then, in 2104, the CPU determines the type of sync signal received. In an exemplary embodiment, a sync signal that includes 3 pulses indicates that the left shutter 1802 should be closed and the right shutter 1804 should be opened while a sync signal that includes 2 pulses indicates that the left shutter should be opened and the right shutter should be closed. More generally, any number of different pulses may used to control the opening and closing of the left and right shutters, 1802 and 1804.

If, in 2104, the CPU 1810 determines that sync signal received indicates that the left shutter 1802 should be closed and the right shutter 1804 should be opened, then the CPU transmits control signals A, B, C, D and E to the left and right shutter controllers, 1806 and 1808, in 2106, to apply a high voltage to the left shutter 1802 and no voltage followed by a small catch voltage to the right shutter 1804. In an exemplary embodiment, the magnitude of the high voltage applied to the left shutter 1802 in 2106 is 15 volts. In an exemplary embodiment, the magnitude of the catch voltage applied to the right shutter 1804 in 2106 is 2 volts. In an exemplary embodiment, the catch voltage is applied to the right shutter 1804 in 2106 by controlling the operational state of the control signal D, which can be either low, high or open, to be open thereby enabling the operation of the voltage divider components R8 and R10, and maintaining the control signal E at a high state. In an exemplary embodiment, the application of the catch voltage in 2106 to the right shutter 1804 is delayed by a predetermined time period to allow faster rotation of the molecules within the liquid crystals of the right shutter during the predetermined time period. The subsequent application of the catch voltage, after the expiration of the predetermined time period, then prevents the molecules within the liquid crystals in the right shutter 1804 from rotating too far during the opening of the right shutter.

Alternatively, if, in 2104, the CPU 1820 determines that sync signal received indicates that the left shutter 1802 should be opened and the right shutter 1804 should be closed, then the CPU transmits control signals A, B, C, D and E to the left and right shutter controllers, 1806 and 1808, in 2108, to apply a high voltage to the right shutter 1804 and no voltage followed by a small catch voltage to the left shutter 1802. In an exemplary embodiment, the magnitude of the high voltage applied to the right shutter 1804 in 2108 is 15 volts, In an exemplary embodiment, the magnitude of the catch voltage applied to the left shutter 1802 in 2108 is 2 volts. In an exemplary embodiment, the catch voltage is applied to the left shutter 1802 in 2108 by controlling the control signal D to be open thereby enabling the operation of the voltage divider components R8 and R10, and maintaining the control signal E at a high level. In an exemplary embodiment, the application of the catch voltage in 2108 to the left shutter 1802 is delayed by a predetermined time period to allow faster rotation of the molecules within the liquid crystals of the left shutter during the predetermined time period. The subsequent application of the catch voltage, after the expiration of the predetermined time period, then prevents the molecules within the liquid crystals in the left shutter 1802 from rotating too far during the opening of the left shutter.

In an exemplary embodiment, during the method 2100, the voltages applied to the left and right shutters, 1802. and 1804, are alternately positive and negative in subsequent repetitions of the steps 2106 and 2108 in order to prevent damage to the liquid crystal cells of the left and right shutters.

Thus, the method 2100 provides a NORMAL or RUN MODE of operation for the 3D glasses 1800.

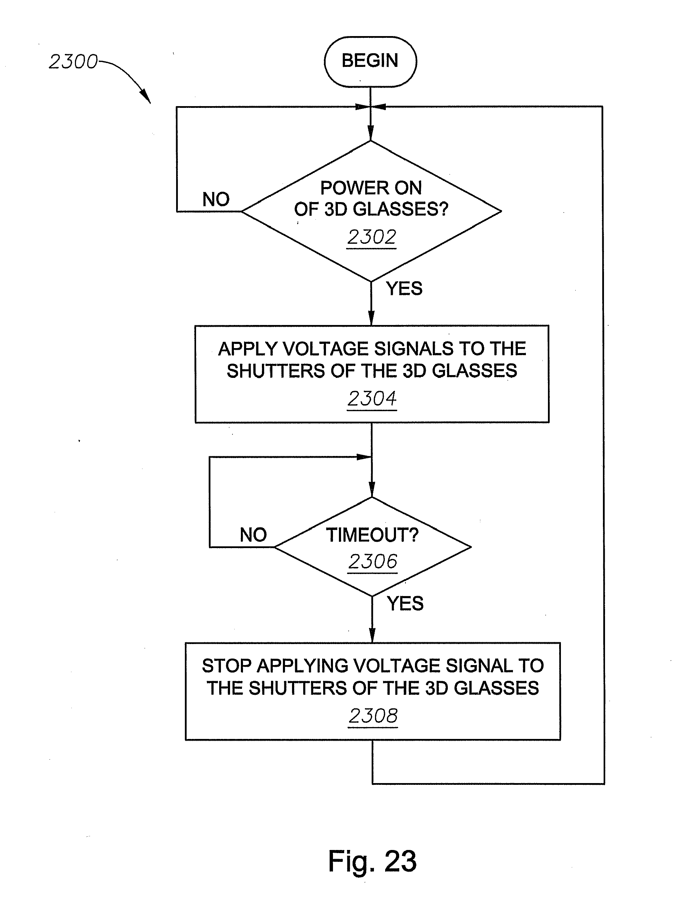

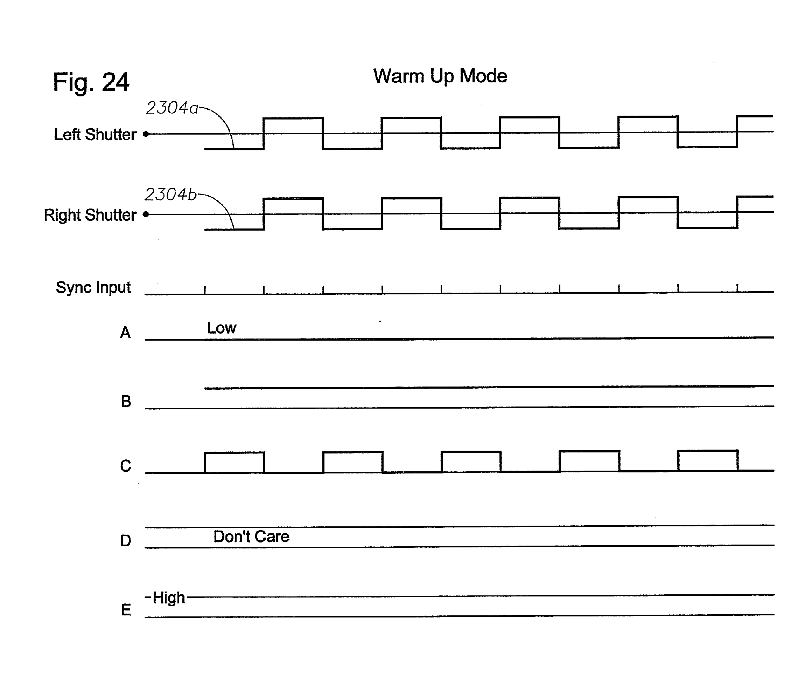

Referring now to Figs. 23 and 24, in an exemplary embodiment, during operation of the 3D glasses 1800, the 3D glasses implement a warm up method 2300 of operation in which the control signals A, B, C, D and E generated by the CPU 1810 are used to control the operation of the left and right shutter controllers, 1806 and 1808, to in turn control the operation of the left and right shutters, 1802 and 1804.

In 2302, the CPU 1810 of the 3D glasses checks for a power on of the 3D glasses. In an exemplary embodiment, the 3D glasses 1810 may be powered on either by a user activating a power on switch or by an automatic wakeup sequence. In the event of a power on of the 3D glasses 1810, the shutters, 1802 and 1804, of the 3D glasses may, for example, require a warm-up sequence. The liquid crystal cells of the shutters, 1802 and 1804, that do not have power for a period of time may be in an indefinite state.

lf the CPU 1810 of the 3D glasses 1800 detects a power on of the 3D glasses in 2302, then the CPU applies alternating voltage signals, 2304a and 2304b, to the left and right shutters, 1802 and 1804, respectively, in 2304. In an exemplary embodiment, the voltage applied to the left and right shutters, 1802 and 1804, is alternated between positive and negative peak values to avoid ionization problems in the liquid crystal cells of the shutter. In an exemplary embodiment, the voltage signals, 2304a and 2304b, may be at least partially out of phase with one another. In an exemplary embodiment, one or both of the voltage signals, 2304a and 2304b, may be alternated between a zero voltage and a peak voltage. In an exemplary embodiment, other forms of voltage signals may be applied to the left and right shutters, 1802 and 1804, such that the liquid crystal cells of the shutters are placed in a definite operational state. In an exemplary embodiment, the application of the voltage signals, 2304a and 2304b, to the left and right shutters, 1802 and 1804, causes the shutters to open and close, either at the same time or at different times. Alternatively, the application of the voltage signals, 2304a and 2304b, to the left and right shutters, 1802 and 1804, may causes the shutters to remain closed.

During the application of the voltage signals, 2304a and 2304b, to the left and right shutters, 1802 and 1804, the CPU 1810 checks for a warm up time out in 2306. If the CPU 1810 detects a warm up time out in 2306, then the CPU will stop the application of the voltage signal 2304a and 2304b, to the left and right shutters, 1802 and 1804, in 2308.

In an exemplary embodiment, in 2304 and 2306, the CPU 1810 applies the voltage signals, 2304a and 2304b. to the left and right shutters, 1802 and 1804, for a period of time sufficient to actuate the liquid crystal cells of the shutters. In an exemplary embodiment, the CPU 1810 applies the voltage signals, 2304a and 2304b, to the left and right shutters, 1802 and 1804, for a period of two seconds. In an exemplary embodiment, the maximum magnitude of the voltage signals, 2304a and 2304b, may be 15 volts. In an exemplary embodiment, the time out period in 2306 may be two seconds. In an exemplary embodiment, the maximum magnitude of the voltage signals, 2304a and 2304b, may be greater or lesser than 15 volts, and the time out period may be longer or shorter. In an exemplary embodiment, during the method 2300, the CPU 1810 may open and close the left and right shutters, 1802 and 1804, at a different rate than would be used for viewing a movie. In an exemplary embodiment, in 2304, the voltage signals applied to the left and right shutters, 1802 and 1804, do not alternate and are applied constantly during the warm up time period and therefore the liquid crystal cells of the shutters may remain opaque for the entire warm up period. In an exemplary embodiment, the warm-up method 2300 may occur with or without the presence of a synchronization signal. Thus, the method 2300 provides a WARM UP mode of the operation for the 3D glasses 1800. In an exemplary embodiment, after implementing the warm up method 2300, the 3D glasses 1800 are placed in a NORMAL or RUN MODE of operation and may then implement the method 2100. Alternatively, in an exemplary embodiment, after implementing the warm up method 2300, the 3D glasses 1800 are placed in a CLEAR MODE of operation and may then implement the method 2500 described below.

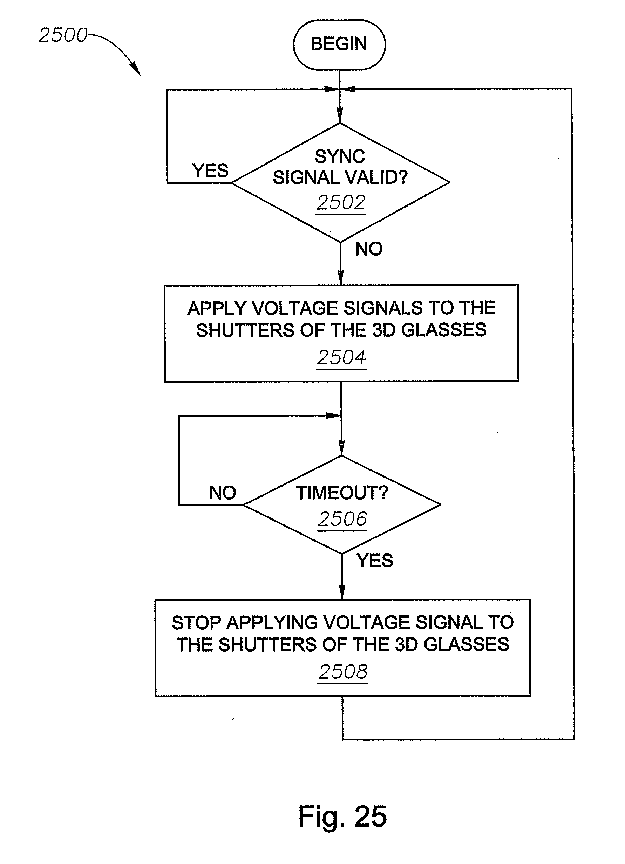

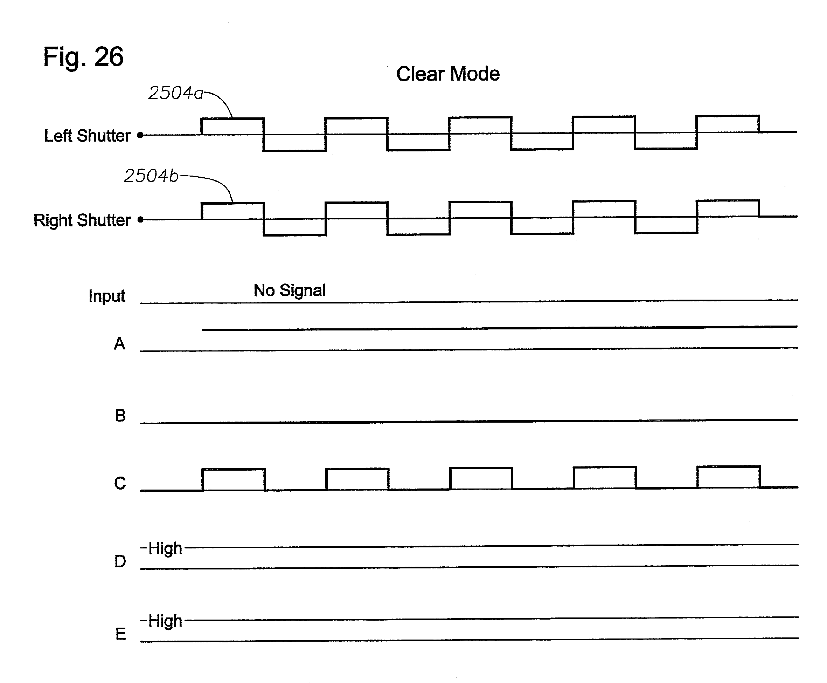

Referring now to Figs. 25 and 26, in an exemplary embodiment, during the operation of the 3D glasses 1800, the 3D glasses implement a method 2500 of operation in which the control signals A, B, C, D and E generated by the CPU 1810 are used to control the operation of the left and right shutter controllers, 1806 and 1808, to in turn control the operation of the left and right shutters, 1802 and 1804, as a function of the sync signal received by the signal sensor 1814.

In 2502, the CPU 1810 checks to see if the sync signal detected by the signal sensor 1814 is valid or invalid. If the CPU 1810 determines that the sync signal is invalid in 2502, then the CPU applies voltage signals, 2504a and 2504b, to the left and right shutters, 1802 and 1804, of the 3D glasses 1800 in 2504. In an exemplary embodiment, the voltage applied 2504a and 2504b, to the left and right shutters, 1802 and 1804, is alternated between positive and negative peak values to avoid ionization problems in the liquid crystal cells of the shutter. In an exemplary embodiment, one or both of the voltage signals, 2504a and 2504b, may be alternated between a zero voltage and a peak voltage. In an exemplary embodiment, other forms of voltage signals may be applied to the left and right shutters, 1802 and 1804, such that the liquid crystal cells of the shutters remain open so that the user of the 3D glasses 1800 can see normally through the shutters. In an exemplary embodiment, the application of the voltage signals, 2504a and 2504b, to the left and right shutters, 1802 and 1804, causes the shutters to open.

During the application of the voltage signals, 2504a and 2504b, to the left and right shutters, 1802 and 1804, the CPU 1810 checks for a clearing time out in 2506. If the CPU 1810 detects a clearing time out in 2506, then the CPU 1810 will stop the application of the voltage signals, 2504a and 2504b, to the shutters, 1802 and 1804, in 2508.

Thus, in an exemplary embodiment, if the 3D glasses 1800 do not detect a valid synchronization signal, they may go to a clear mode of operation and implement the method 2500. In the clear mode of operation, in an exemplary embodiment, both shutters, 1802 and 1804, of the 3D glasses 1800 remain open so that the viewer can see normally through the shutters of the 3D glasses. In an exemplary embodiment, a constant voltage is applied, alternating positive and negative, to maintain the liquid crystal cells of the shutters, 1802 and 1804, of the 3D glasses 1800 in a clear state. The constant voltage could, for example, be in the range of 2-3 volts, but the constant voltage could be any other voltage suitable to maintain reasonably clear shutters. In an exemplary embodiment, the shutters, 1802 and 1804, of the 3D glasses 1800 may remain clear until the 3D glasses are able to validate an encryption signal and/or until a clearing mode time out. In an exemplary embodiment, the shutters, 1802 and 1804, of the 3D glasses 1800 may remain clear until the 3D glasses are able to validate an encryption signal and then may implement the method 2100 and/or if a time out occurs in 2506, then may implement the method 900. In an exemplary embodiment, the shutters, 1802 and 1804, of the 3D glasses 1800 may alternately open and close at a rate that allows the user of the 3D glasses to see normally.

Thus, the method 2500 provides a method of clearing the operation of the 3D glasses 1800 and thereby provide a CLEAR MODE of operation.

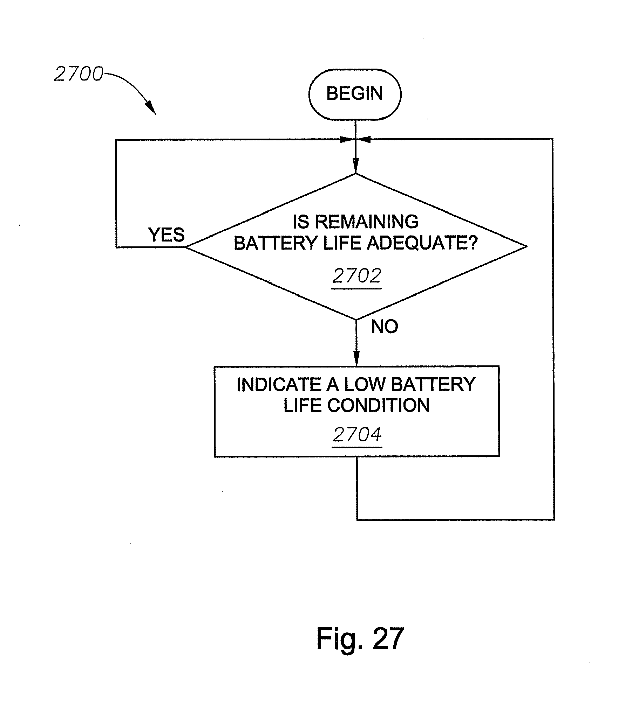

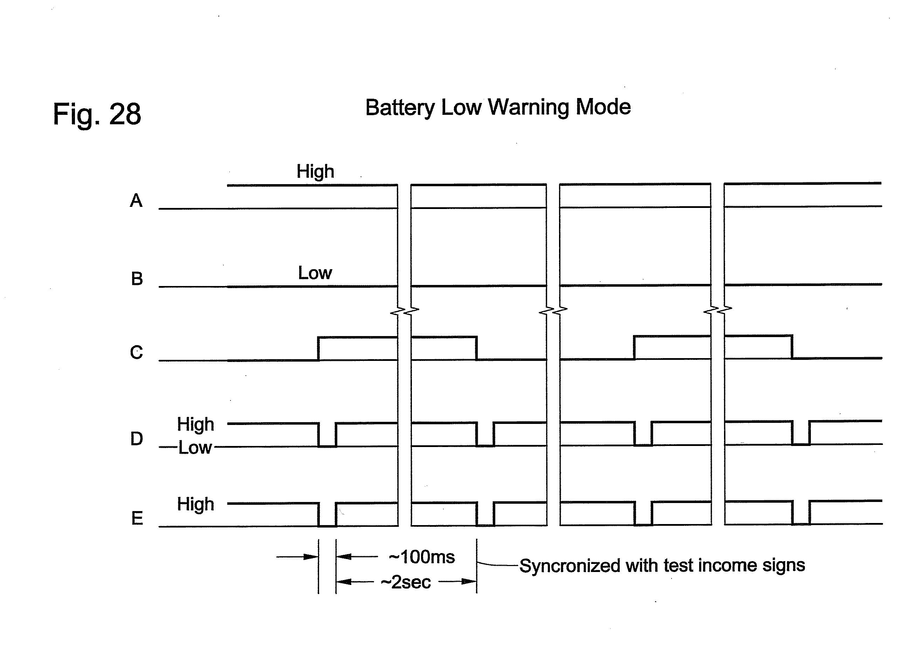

Referring now to Figs. 27 and 28, in an exemplary embodiment, during the operation of the 3D glasses 1800, the 3D glasses implement a method 2700 of monitoring the battery 120 in which the control signals A, B, C, D and E generated by the CPU 1810 are used to control the operation of the left and right shutter controllers, 1806 and 1808, to in turn control the operation of the left and right shutters, 1802 and 1804, as a function of the condition of the battery 120 as detected by battery sensor 1812.

In 2702, the CPU 1810 of the 3D glasses uses the battery sensor 1812 to determine the remaining useful life of the battery 120. If the CPU 1810 of the 3D glasses 1800 determines that the remaining useful life of the battery 120 is not adequate in 2702, then the CPU provides an indication of a low battery life condition in 2704.

In an exemplary embodiment, an inadequate remaining battery life may, for example, be any period less than 3 hours. In an exemplary embodiment, an adequate remaining battery life may be preset by the manufacturer of the 3D glasses 1800 and/or programmed by the user of the 3D glasses.

In an exemplary embodiment, in 2704, the CPU 1810 of the 3D glasses 1800 will indicate a low battery life condition by causing the left and right shutters, 1802 and 1804, of the 3D glasses to blink slowly, by causing the shutters to simultaneously blink at a moderate rate that is visible to the user of the 3D glasses, by flashing an indicator light, by generating an audible sound, and the like.

In an exemplary embodiment, if the CPU 1810 of the 3D glasses 1800 detects that the remaining battery life is insufficient to last for a specified period of time, then the CPU of the 3D glasses will indicate a low battery condition in 2704 and then prevent the user from turning on the 3D glasses.

In an exemplary embodiment, the CPU 1810 of the 3D glasses 1800 determines whether or not the remaining: battery life is adequate every time the 3D glasses transition to the OFF MODE and/or to the CLEAR MODE of operation.

In an exemplary embodiment, if the CPU 1810 of the 3D glasses 1800 determines that the battery will last for at least the predetermined adequate amount of time, then the 3D glasses will continue to operate normally. Operating normally may, for example, include staying in the CLEAR MODE of operation for five minutes while checking for a signal from the signal transmitter 110 and then going to the OFF MODE or to a turn-on mode wherein the 3D glasses 1800 periodically wake up to check for a signal from the signal transmitter.

In an exemplary embodiment, the CPU 1810 of the 3D glasses 1800 checks for a low battery condition just before shutting off the 3D glasses. In an exemplary embodiment, if the battery 120 will not last for the predetermined adequate remaining life time, then the shutters, 1802 and 1804, will begin blinking slowly.

In an exemplary embodiment, if the battery 120 will not last for the predetermined adequate remaining life time, the shutters, 1802 and/or 1804, are placed into an opaque condition, i.e., the liquid crystal cells are closed, for two seconds and then placed into a clear condition, i.e., the liquid crystal cells are opened, for 1/10^{th} of a second. The time period that the shutters, 1802 and/or 1804, are closed and opened may be any time period. In an exemplary embodiment, the blinking of the shutters, 1802 and 1804, is synchronized with providing power to the signal sensor 1814 to permit the signal sensor to check for a signal from the signal transmitter 110.

In an exemplary embodiment, the 3D glasses 1800 may check for a low battery condition at any time including during warm up, during normal operation, during clear mode, during power off mode, or at the transition between any conditions. In an exemplary embodiment, if a low battery life condition is detected at a time when the viewer is likely to be in the middle of a movie, the 3D glasses 1800 may not immediately indicate the low battery condition.

In some embodiments, if the CPU 1810 of the 3D glasses 1800 detects a low battery level, the user will not be able to power the 3D glasses on.

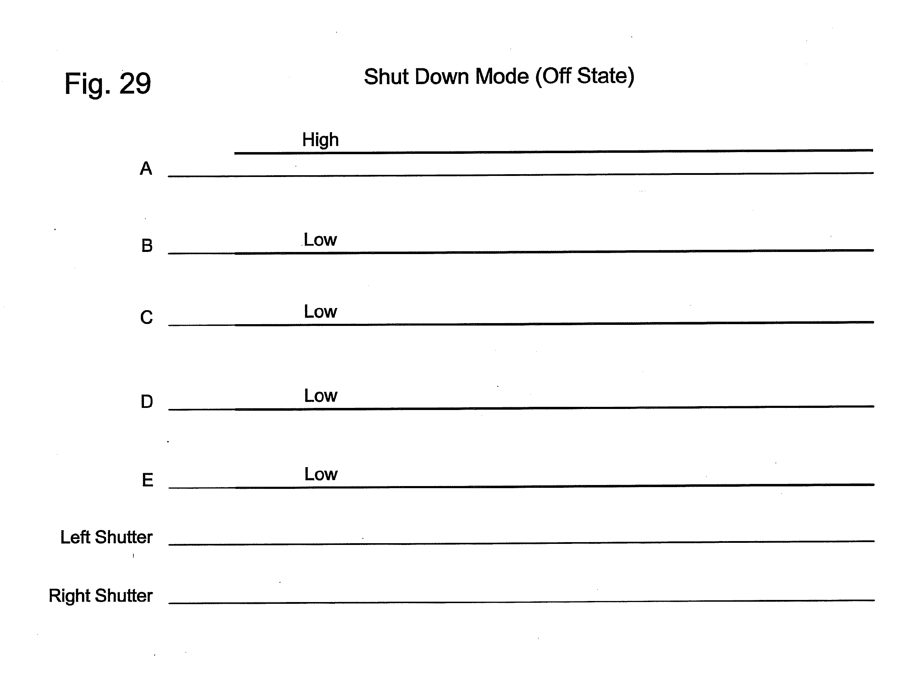

Referring now to Fig. 29, in an exemplary embodiment, during the operation of the 3D glasses 1800, the 3D glasses implement a method for shutting down the 3D glasses in which the control signals A, B, C, D and E generated by the CPU 1810 are used to control the operation of the left and right shutter controllers, 1806 and 1808, to in turn control the operation of the left and right shutters, 1802 and 1804, as a function of the condition of the battery 120 as detected by the battery sensor 1812. In particular, if the user of 3D glasses 1800 selects shutting down the 3D glasses or the CPU 1810 selects shutting down the 3D glasses, then the voltage applied to the left and right shutters, 1802 and 1804, of the 3D glasses are both set to zero.

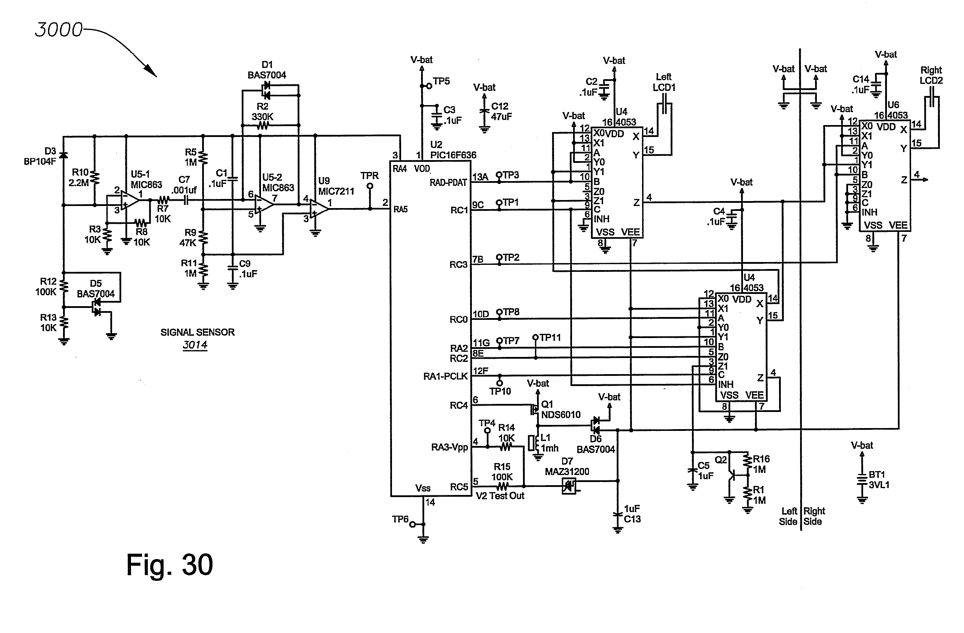

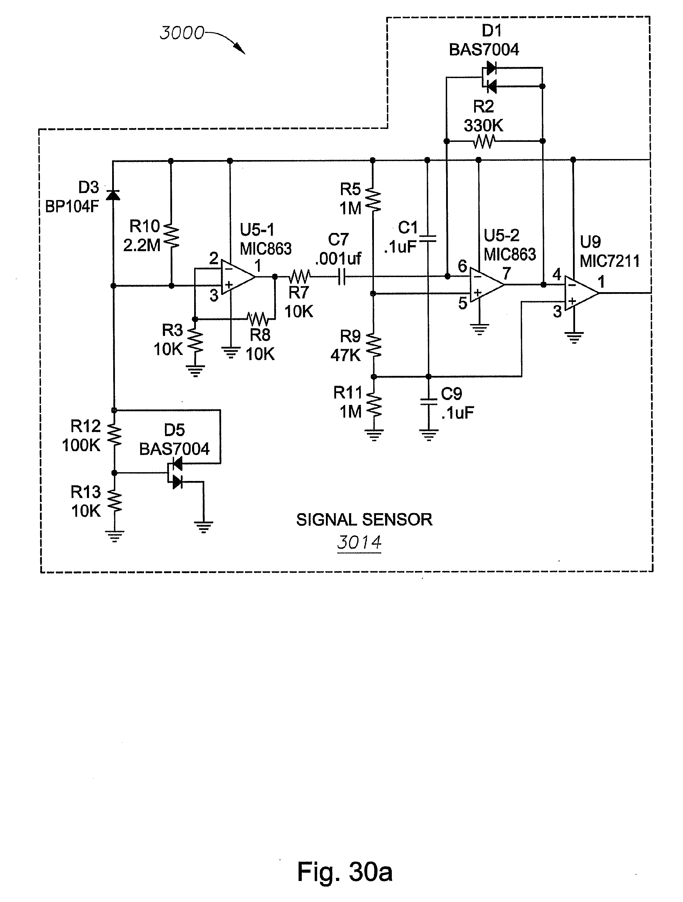

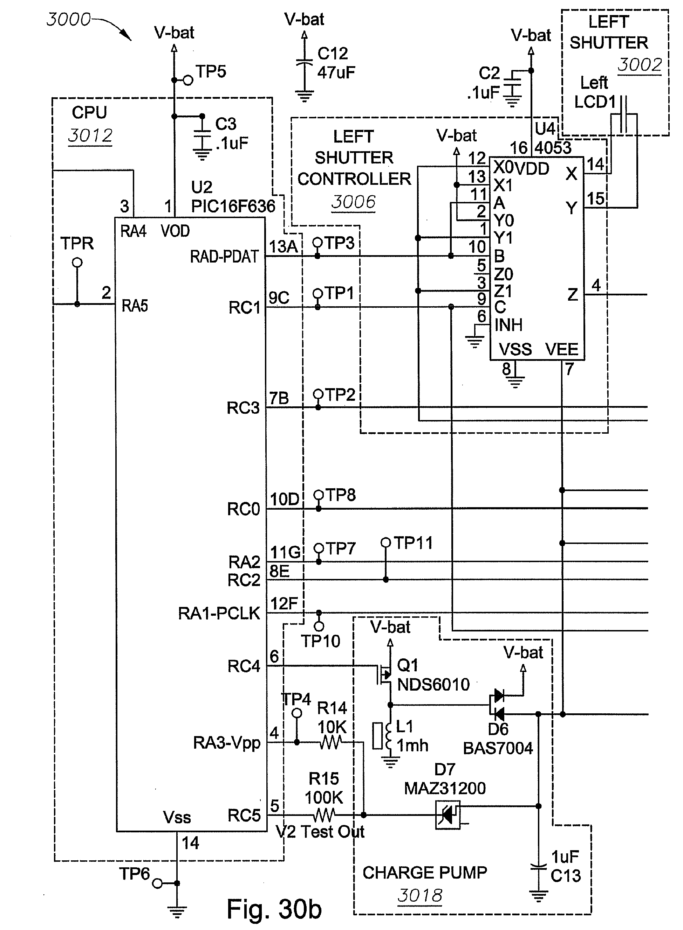

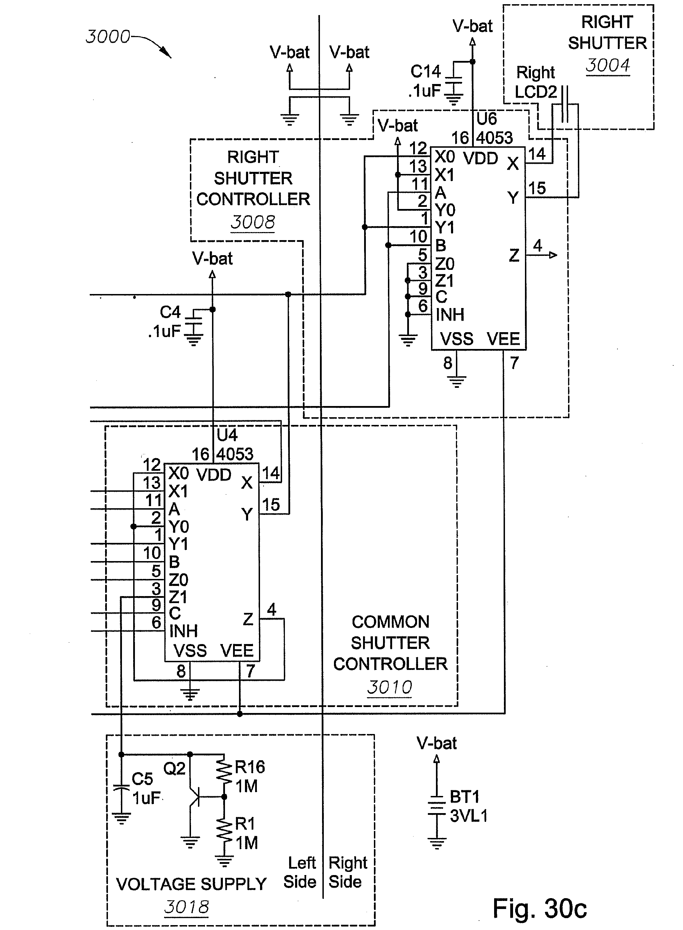

Referring to Figs. 30, 30a, 30b, and 30c, an exemplary embodiment of 3D glasses 3000 is provided that is substantially identical in design and operation as the 3D glasses 104 illustrated and described above except as noted below. The 3D glasses 3000 include a left shutter 3002, a right shutter 3004, a left shutter controller 3006, a right shutter controller 3008, common shutter controller 3010, a CPU 3012, a signal sensor 3014, a charge pump 3016, and a voltage supply 3018. In an exemplary embodiment, the design and operation of the left shutter 3002, the right shutter 3004, the left shutter controller 3006, the right shutter controller 3008, the CPU 3012, the signal sensor 3014, and the charge pump 3016 of the 3D glasses 3000 are substantially identical to the left shutter 106, the right shutter 108, the left shutter controller 116, the right shutter controller 118, the CPU 114, the signal sensor 112, and the charge pump 1700 of the 3D glasses 104 described and illustrated above, except as described below and illustrated herein.

In an exemplary embodiment, the 3D glasses 3000 include the following components:

| **NAME** | **VALUE/ID** |
|---|---|
| R13 | 10K |
| D5 | BAS7004 |
| R12 | 100K |
| D3 | BP104F |
| R10 | 2.2M |
| U5-1 | MIC863 |
| R3 | 10K |
| R7 | 10K |
| R8 | 10K |
| R5 | 1M |
| C7 | .001uF |
| R9 | 47K |
| R11 | 1M |
| C1 | .1uF |
| C9 | .1uF |
| D1 | BAS7004 |
| R2 | 330K |
| U5-2 | MIC863 |
| U3 | MIC7211 |
| U2 | PIC16F636 |
| C3 | .1uF |
| C12 | 47uF |
| C2 | .1uF |
| LCD1 | LEFT SHUTTER |
| C14 | .1uF |
| LCD2 | RIGHT SHUTTER |
| U1 | 4053 |
| U6 | 4053 |
| C4 | .1uF. |
| U4 | 4053 |
| R14 | 10K |
| R15 | 100K |
| Q1 | NDS0610 |
| L1 | 1mh |
| D6 | BAS7004 |
| D7 | MAZ31200 |
| C13 | 1uF |
| C5 | 1uF |
| Q2 | |
| R16 | 1M |
| R1 | 1M |
| BT1 | 3V Li |

In an exemplary embodiment, the left shutter controller 3006 includes a digitally controlled analog switch U1 that, under the control of the common controller 3010, that includes a digitally controlled analog switch U4, and the CPU 3012, depending upon the mode of operation, applies a voltage across the left shutter 3002 for controlling the operation of the left shutter. In similar fashion, the right shutter controller 3008 includes a digitally controller analog switch U6 that, under the control of the common controller 3010 and the CPU 3012, depending upon the mode of operation, applies a voltage across the right shutter 3004 for controlling the operation of the right shutter 3004. In an exemplary embodiment, U1, U4 and U6 are conventional commercially available digitally controlled analog switches available from Unisonic Technologies as part number UTC 4053.

As will be recognized by persons having ordinary skill in the art, the UTC 4053 digitally controlled analog switch includes control input signals A, B, C and INHIBIT ("INH"), switch I/O signals X0, X1, Y0, Y1, Z0 and Z1, and output signals X, Y and Z, and further provides the following truth table:

**TRUTH TABLE**

| Control Inputs | | | | ON Switches | | |
|---|---|---|---|---|---|---|
| Inhibit | Select | | | | | |
| | C | B | A | UTC 4053 | | |
| 0 | 0 | 0 | 0 | Z0 | Y0 | X0 |
| 0 | 0 | 0 | 1 | Z0 | Y0 | X1 |
| 0 | 0 | 1 | 0 | Z0 | Y1 | X0 |
| 0 | 0 | 1 | 1 | Z0 | Y1 | X1 |
| 0 | 1 | 0 | 0 | Z1 | Y0 | X0 |
| 0 | 1 | 0 | 1 | Z1 | Y0 | X1 |
| 0 | 1 | 1 | 0 | Z1 | Y1 | X0 |
| 0 | 1 | 1 | 1 | Z1 | Y1 | X1 |
| 1 | X | X | X | None | | |

| | | | | | | |
|---|---|---|---|---|---|---|
| x = Don't Care | | | | | | |

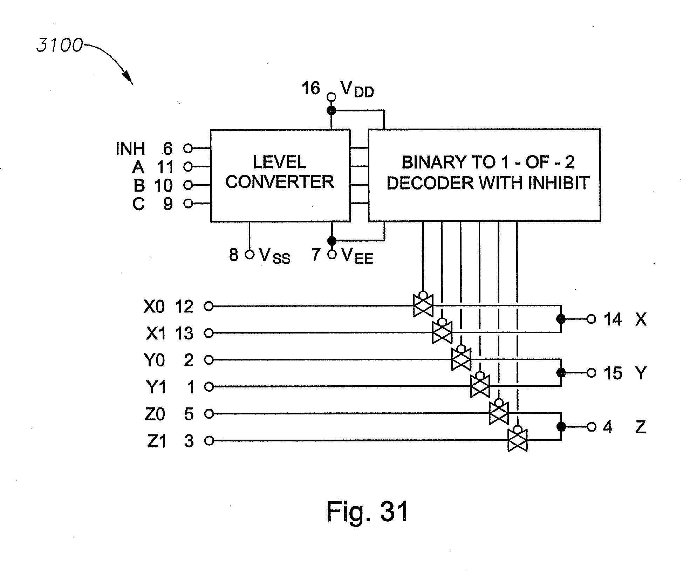

And, as illustrated in Fig. 31, the UTC 4053 digitally controlled analog switch also provides a functional diagram 3100. Thus, the UTC 4053 provides a digitally controlled analog switch, each having three independent switches, that permits the left and right shutter controllers, 3006 and 3008, and the common shutter controller 3010, under the control of the CPU 3012, to selectively apply a controlled voltage across the left and right shutters, 3002 and 3004, to control the operation of the shutters.

In an exemplary embodiment, the CPU 3012 includes a microcontroller U2 for generating output signals A, B, C, D, E, F and G for controlling the operation of the digitally controlled analog switches, U1, U6 and U4, of the left and right shutter controllers, 3006 and 3008, and the common shutter controller 3010.

The output control signals A, B, C, D, E, F and G of the microcontroller U2 provide the following input control signals A, B, C and INH to each of the digitally controlled analog switches, U1, U6 and U4:

| **U2** - **Output Control Signals** | **U1 - Input Control Signals** | **U6 - Input Control Signals** | **U4 - Input Control Signals** |
|---|---|---|---|
| A | A, B | | |
| B | | A, B | |
| C | C | | INH |
| D | | | A |
| E | | | |
| F | | | C |
| G | | | B |

In an exemplary embodiment, input control signal INH of U1 is connected to ground and input control signals C and INH of U6 are connected ground.

In an exemplary embodiment, the switch I/O signals X0, X1, Y0, Y1, Z0 and Z1 of the digitally controlled analog switches, U1, U6 and U4, are provided with the following inputs :

| **U1-Switch I/O Signals** | **INPUT For U1** | **U6 ― Switch I/O Signals** | **INPUT For U6** | **U4 - Switch I/O Signals** | **INPUT For U4** |
|---|---|---|---|---|---|
| X0 | X of U4 | X0 | Z of U1 Y of U4 | X0 | Z of U4 |
| X1 | V-bat | X1 | V-bat | X1 | output of charge pump 3016 |
| Y0 | V-bart | Y0 | V-bat | Y0 | Z of U4 |
| Y1 | X of U4 | Y1 | Z of U1 Y of U4 | Y1 | output of charge pump 3016 |
| Z0 | GND | Z0 | GND | Z0 | E of U2 |
| Z1 | X of U4 | Z1 | GND | Z1 | output of voltage supply 3018 |

In an exemplary embodiment, the microcontroller U2 of the CPU 3012 is a model number PIC16F636 programmable microcontroller, commercially available from Microchip.

In an exemplary embodiment, the signal sensor 3014 includes a photodiode D3 for sensing the transmission of the signals, including the sync signal and/or configuration data, by the signal transmitter 110. In an exemplary embodiment, the photodiode D3 is a model BP104FS photodiode, commercially available from Osram. In an exemplary embodiment, the signal sensor 3014 further includes operational amplifiers, U5-1, U5-2, and U3, and related signal conditioning components, resistors R2, R3, R5, R7, R8, R9, R10, R11, R12 and R13, capacitors C1, C7, and C9, and schottky diodes, D1 and D5, that may, for example, condition the signal by preventing clipping of the sensed signal by controlling the gain.

In an exemplary embodiment, the charge pump 3010 amplifies the magnitude of the output voltage of the battery 120, using a charge pump, from 3V to -12V. In an exemplary embodiment, the charge pump 3016 includes a MOSFET Q1, a schottky diode D6, an inductor L1, and a zener diode D7. In an exemplary embodiment, the output signal of the charge pump 3016 is provided as input signals to switch I/O signals X1 and Y1 of the digitally controlled analog switch U4 of the common shutter controller 3010 and as input voltage VEE to the digitally controlled analog switches U1, U6, and U4 of the left shutter controller 3006, the right shutter controller 3008, and the common shutter controller 3010.

In an exemplary embodiment, the voltage supply 3018 includes a transistor Q2, a capacitor C5, and resistors R1 and R16. In an exemplary embodiment, the voltage supply 3018 provides 1V signal as an input signal to switch I/O signal Z1 of the digitally controlled analog switch U4 of the common shutter controller 3010. In an exemplary embodiment, the voltage supply 3018 provides a ground lift.

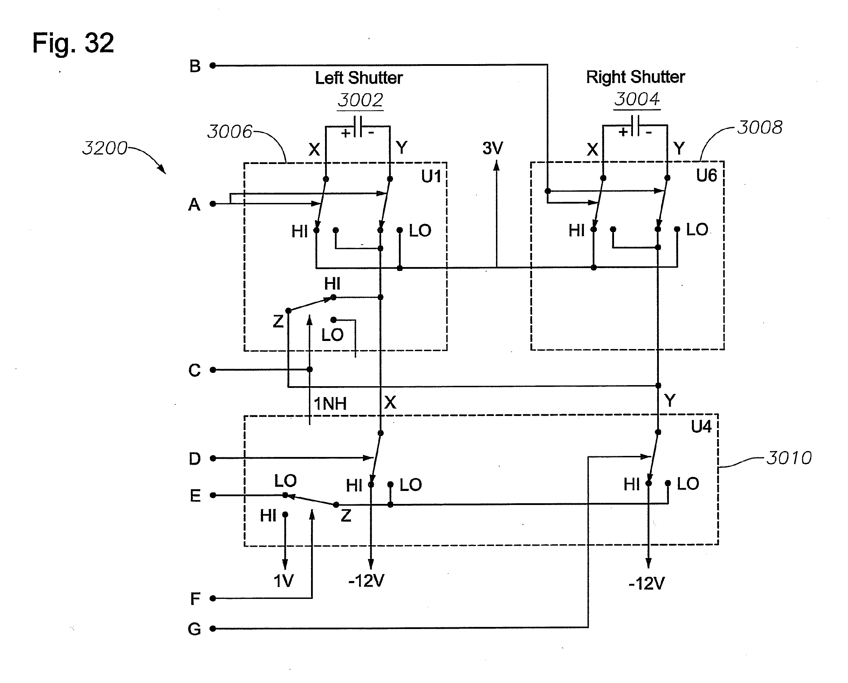

As illustrated in Fig. 32, in an exemplary embodiment, during operation of the 3D glasses 3000, the digitally controlled analog switches, U1, U6 and U4, under the control of the control signals A, B, C, D, E, F and G of the CPU 3012, may provide various voltages across one or both of the left and right shutters, 3002 and 3004. In particular, the digitally controlled analog switches, U1, U6 and U4, under the control of the control signals A, B, C, D, E, F and G of the CPU 3012, may provide: 1) a positive or negative 15 volts across one or both of the left and right shutters, 3002 and 3004, 2) a positive or negative 2 volts across one or both of the left and right shutters, 3) a positive or negative 3 volts across one or both of the left and right shutters, and 4) provide 0 volts, i.e., a neutral state, across one or both of the left and right shutters.

In an exemplary embodiment, as illustrated in Fig. 32, the control signal A controls the operation of left shutter 3002 and the control signal B controls the operation of the right shutter 3004 by controlling the operation of the switches within the digitally controlled analog switches, U1 and U6, respectively, that generate output signals X and Y that are applied across the left and right shutters. In an exemplary embodiment, the control inputs A and B of each of the digitally controlled analog switches U1 and U6 are connected together so that switching between two pairs of input signals occurs simultaneously and the selected inputs are forwarded to terminals of the left and right shutters, 3002 and 3004. In an exemplary embodiment, control signal A from the CPU 3012 controls the first two switches in the digitally controlled analog switch U1 and control signal B from the CPU controls first two switches in the digitally controlled analog switch U6.

In an exemplary embodiment, as illustrated in Fig. 32, one of the terminals of each of the left and right shutters, 3002 and 3004, are always connected to 3V. Thus, in an exemplary embodiment, the digitally controlled analog switches U1, U6 and U4, under the control of the control signals A, B, C, D, E, F and G of the CPU 3012, are operated to bring either -12V, 3V, 1V or 0V to the other terminals of the left and right shutters, 3002 and 3004. As a result, in an exemplary embodiment, the digitally controlled analog switches U1, U6 and U4, under the control of the control signals A, B, C, D, E, F and G of the CPU 3012, are operated to generate a potential difference of 15V, 0V, 2V or 3V across the terminals of the left and right shutters, 3002 and 3004.

In an exemplary embodiment, the third switch of the digitally controlled analog switch U6 is not used and all of the terminals for the third switch are grounded. In an exemplary embodiment, the third switch of the digitally controlled analog switch U1 is used for power saving.

In particular, in an exemplary embodiment, as illustrated in Fig. 32, the control signal C controls the operation of the switch within the digitally controlled analog switch U1 that generates the output signal Z. As a result, when the control signal C is a digital high value, the input signal INH for the digitally controlled analog switch U4 is also a digital high value thereby causing all of the output channels of the digitally controlled analog switch U4 to be off. As a result, when the control signal C is a digital high value, the left and right shutters, 3002 and 3004, are short circuited thereby permitting half of the charge to be transferred between the shutters thereby saving power and prolonging the life of the battery 120.

In an exemplary embodiment, by using the control signal C to short circuit the left and right shutters, 3002 and 3004, the high amount of charge collected on one shutter that is in the closed state can be used to partially charge the other shutter just before it goes to the closed state, therefore saving the amount of charge that would otherwise have to be fully provided by the battery 120.

In an exemplary embodiment, when the control signal C generated by the CPU 3012 is a digital high value, for example, the negatively charged plate, -12V, of the left shutter 3002, then in the closed state and having a 15V potential difference there across, is connected to the more negatively charged plate of the right shutter 3004, then in the open state and still charged to +1V and having a 2V potential difference there across. In an exemplary embodiment, the positively charged plates on both shutters, 3002 and 3004, will be charged to +3V. In an exemplary embodiment, the control signal C generated by the CPU 3012 goes to a digital high value for a short period of time near the end of the closed state of the left shutter 3002 and just before the closed state of the right shutter 3004. When the control signal C generated by the CPU 3012 is a digital high value, the inhibit terminal INH on the digitally controlled analog switch U4 is also a digital high value. As a result, in an exemplary embodiment, all of the output channels, X, Y and Z, from U4 are in the off state. This allows the charge stored across the plates of the left and right shutters, 3002 and 3004, to be distributed between the shutters so that the potential difference across both of the shutter is approximately 17/2V or 8.5V. Since one terminal of the shutters, 3002 and 3004, is always connected to 3V, the negative terminals of the shutters, 3002 and 3004, are then at -5.5V. In an exemplary embodiment, the control signal C generated by the CPU 3012 then changes to a digital low value and thereby disconnects the negative terminals of the shutters, 3002 and 3004, from one another. Then, in an exemplary embodiment, the closed state for the right shutter 3004 begins and the battery two further charges the negative terminal of the right shutter, by operating the digitally controlled analog switch U4, to -12V. As a result, in an exemplary experimental embodiment, a power savings of approximately 40% was achieved during a normal run mode of operation, as described below with reference to the method 3300, of the 3D glasses 3000.

In an exemplary embodiment, the control signal C generated by the CPU 3012 is provided as a short duration pulse that transitions from high to low when the control signals A or B, generated by the CPU, transition from high to low or low to high, to thereby start the next left shutter open/right shutter closed or right shutter open/left shutter closed.

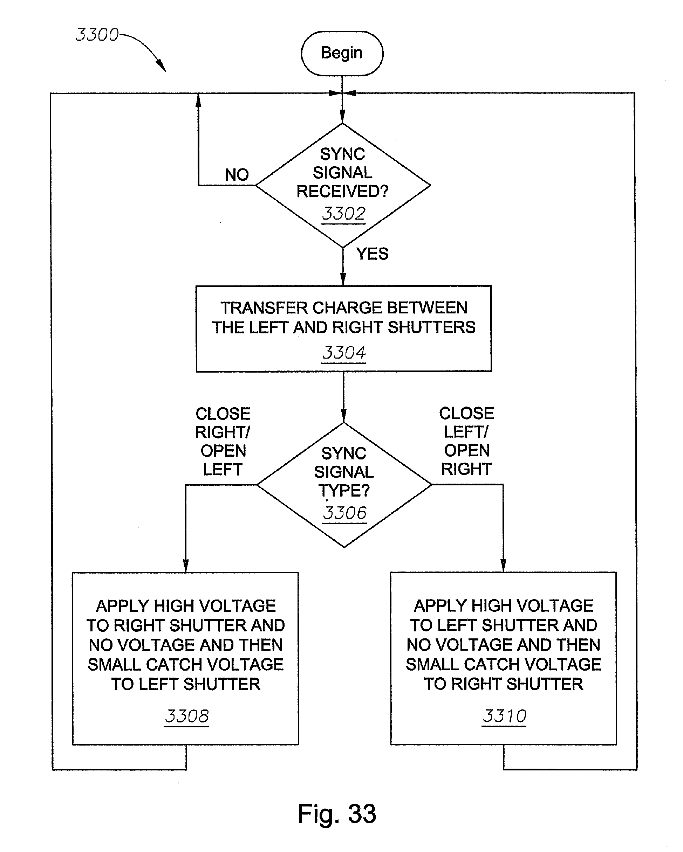

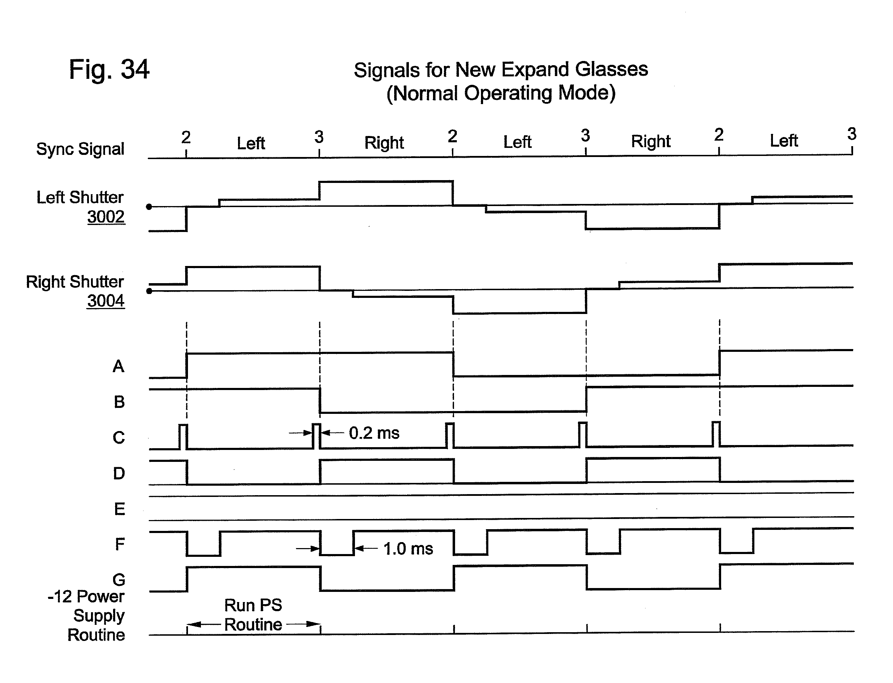

Referring now to Figs. 33 and 34, in an exemplary embodiment, during the operation of the 3D glasses 3000, the 3D glasses execute a normal run mode of operation 3300 in which the control signals. A, B, C, D, E, F and G generated by the CPU 3012 are used to control the operation of the left and right shutter controllers, 3006 and 3008, and central shutter controller 3010, to in turn control the operation of the left and right shutters, 3002 and 3004, as a function of the type of sync signal detected by the signal sensor 3014.

In particular, in 3302, if the CPU 3012 determines that the signal sensor 3014 has received a sync signal, then, in 3304, control signals A, B, C, D, E, F and G generated by the CPU 3012 are used to control the operation of the left and right shutter controllers, 3006 and 3008, and central shutter controller 3010, to transfer charge between the left and right shutters, 3002 and 3004, as described above with reference to Fig. 32.

In an exemplary embodiment, in 3304, the control signal C generated by the CPU 3012 is set to a high digital value for approximately 0.2 milliseconds to thereby short circuit the terminals of the left and right shutters, 3002 and 3004, and thus transfer charge between the left and right shutters. In an exemplary embodiment, in 3304, the control signal C generated by the CPU 3012 is set to a high digital value for approximately 0.2 milliseconds to thereby short circuit the more negatively charged terminals of the left and right shutters, 3002 and 3004, and thus transfer charge between the left and right shutters. Thus, the control signal C is provided as a short duration pulse that transitions from high to low when, or before, the control signals A or B transition from high to low or from low to high. As a result, power savings is provided during the operation of the 3D glasses 3000 during the cycle of alternating between open left/closed right and closed left/opened right shutters.

The CPU 3012 then determines the type of sync signal received in 3306. In an exemplary embodiment, a sync signal that includes 2 pulses indicates that the left shutter 3002 should be opened and the right shutter 3004 should be closed while a sync signal that includes 3 pulses indicates that the right shutter should be opened and the left shutter should be closed. In an exemplary embodiment, other different numbers and formats of sync signals may be used to control the alternating opening and closing of the left and right shutters, 3002 and 3004.

If, in 3306, the CPU 3012 determines that sync signal received indicates that the left shutter 3002 should be opened and the right shutter 3004 should be closed, then the CPU transmits control signals A, B, C, D, E, F and G to the left and right shutter controllers, 3006 and 3008, and the common shutter controller 3010, in 3308, to apply a high voltage across the right shutter 3004 and no voltage followed by a small catch voltage to the left shutter 3002. In an exemplary embodiment, the magnitude of the high voltage applied across the right shutter 3004 in 3308 is 15 volts. In an exemplary embodiment, the magnitude of the catch voltage applied to the left shutter 3002 in 3308 is 2 volts. In an exemplary embodiment, the catch voltage is applied to the left shutter 3002 in 3308 by controlling the operational state of the control signal D to be low and the operational state of the control signal F, which may be either be low or high, to be high. In an exemplary embodiment, the application of the catch voltage in 3308 to the left shutter 3002 is delayed by a predetermined time period to allow faster rotation of the molecules within the liquid crystal of the left shutter. The subsequent application of the catch voltage, after the expiration of the predetermined time period, prevents the molecules within the liquid crystals in the left shutter 3002 from rotating too far during the opening of the left shutter. In an exemplary embodiment, the application of the catch voltage in 3308 to the left shutter 3002 is delayed by about 1 millisecond.

Alternatively, if, in 3306, the CPU 3012 determines that sync signal received indicates that the left shutter 3002 should be closed and the right shutter 3004 should be opened, then the CPU transmits control signals A, B, C, D, E, F and G to the left and right shutter controllers, 3006 and 3008, and the common shutter controller 3010, in 3310, to apply a high voltage across the left shutter 3002 and no voltage followed by a small catch voltage to the right shutter 3004. In an exemplary embodiment, the magnitude of the high voltage applied across the left shutter 3002 in 3310 is 15 volts. In an exemplary embodiment, the magnitude of the catch voltage applied to the right shutter 3004 in 3310 is 2 volts. In an exemplary embodiment, the catch voltage is applied to the right shutter 3004 in 3310 by controlling the control signal F to be high and the control signal G to be low. In an exemplary embodiment, the application of the catch voltage in 3310 to the right shutter 3004 is delayed by a predetermined time period to allow faster rotation of the molecules within the liquid crystal of the right shutter. The subsequent application of the catch voltage, after the expiration of the predetermined time period, prevents the molecules within the liquid crystals in the right shutter 3004 from rotating too far during the opening of the right shutter. In an exemplary embodiment, the application of the catch voltage in 3310 to the right shutter 3004 is delayed by about 1 millisecond.

In an exemplary embodiment, during the method 3300, the voltages applied to the left and right shutters, 3002 and 3004, are alternately positive and negative in subsequent repetitions of the steps 3308 and 3310 in order to prevent damage to the liquid crystal cells of the left and right shutters.

Thus, the method 3300 provides a NORMAL or RUN MODE of operation for the 3D glasses 3000.

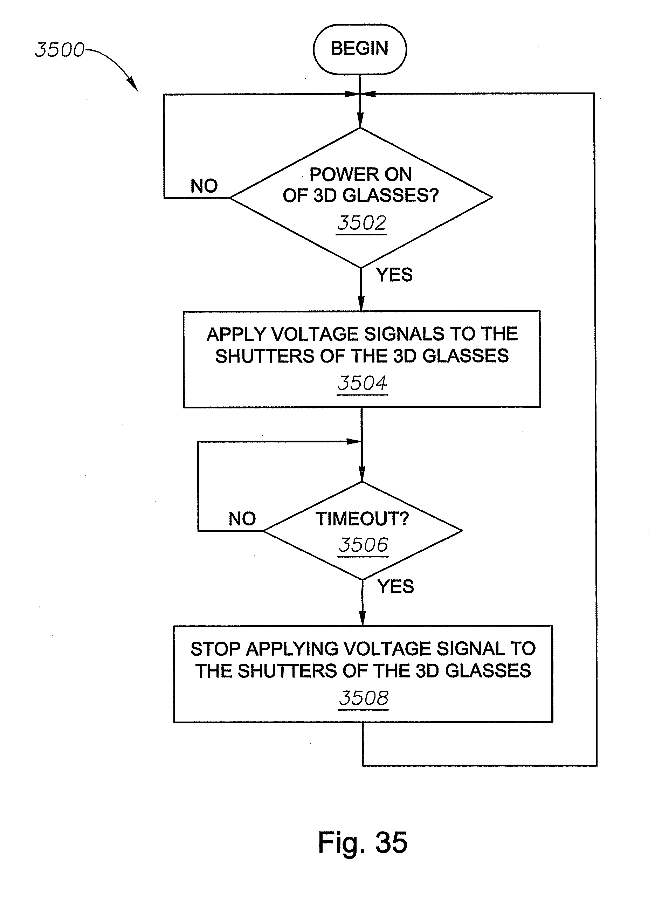

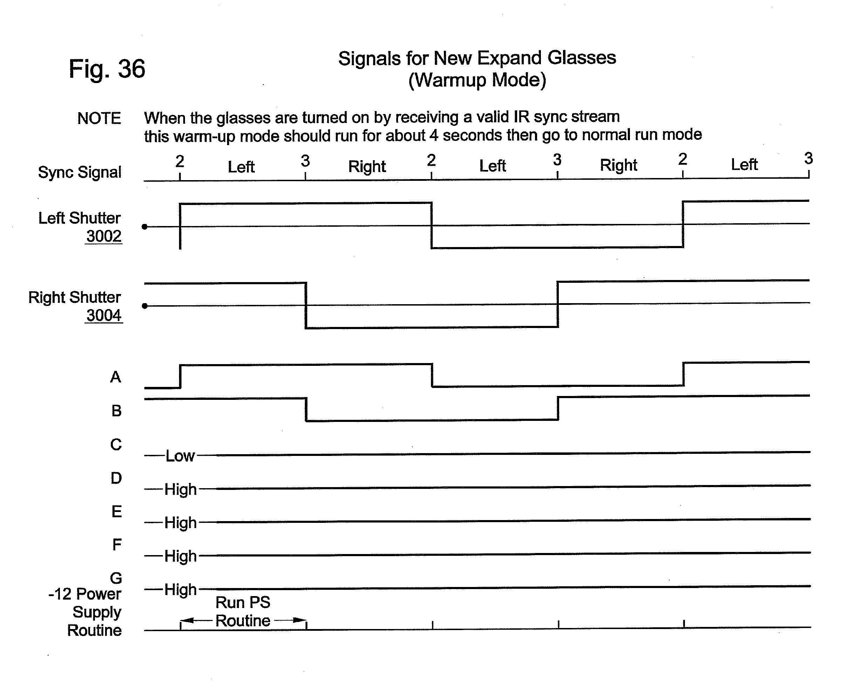

Referring now to Figs. 35 and 36, in an exemplary embodiment, during operation of the 3D glasses 3000, the 3D glasses implement a warm up method 3500 of operation in which the control signals A, B, C, D, E, F and G generated by the CPU 3012 are used to control the operation of the left and right shutter controllers, 3006 and 3008, and central shutter controller 3010, to in turn control the operation of the left and right shutters, 3002 and 3004.

In 3502, the CPU 3012 of the 3D glasses checks for a power on of the 3D glasses. In an exemplary embodiment, the 3D glasses 3000 may be powered on either by a user activating a power on switch, by an automatic wakeup sequence, and/or by the signal sensor 3014 sensing a valid sync signal. In the event of a power on of the 3D glasses 3000, the shutters, 3002 and 3004, of the 3D glasses may, for example, require a warm-up sequence. The liquid crystal cells of the shutters, 3002 and 3004, that do not have power for a period of time may be in an indefinite state.

If the CPU 3012 of the 3D glasses 3000 detects a power on of the 3D glasses in 3502, then the CPU applies alternating voltage signals to the left and right shutters, 3002 and 3004, respectively, in 3504. In an exemplary embodiment, the voltage applied to the left and right shutters, 3002 and 3004, is alternated between positive and negative peak values to avoid ionization problems in the liquid crystal cells of the shutter. In an exemplary embodiment, the voltage signals applied to the left and right shutters, 3002 and 3004, may be at least partially out of phase with one another. In an exemplary embodiment, one or both of the voltage signals applied to the left and right shutters, 3002 and 3004, may be alternated between a zero voltage and a peak voltage. In an exemplary embodiment, other forms of voltage signals may be applied to the left and right shutters, 3002 and 3004, such that the liquid crystal cells of the shutters are placed in a definite operational state. In an exemplary embodiment, the application of the voltage signals to the left and right shutters, 3002 and 3004, causes the shutters to open and close, either at the same time or at different times.

During the application of the voltage signals to the left and right shutters, 3002 and 3004, the CPU 3012 checks for a warm up time out in 3506. If the CPU 3012 detects a warm up time out in 3506, then the CPU will stop the application of the voltage signals to the left and right shutters, 3002 and 3004, in 3508.

In an exemplary embodiment, in 3504 and 3506, the CPU 3012 applies the voltage signals to the left and right shutters, 3002 and 3004, for a period of time sufficient to actuate the liquid crystal cells of the shutters. In an exemplary embodiment, the CPU 3012 applies the voltage signals to the left and right shutters, 3002 and 3004, for a period of two seconds. In an exemplary embodiment, the maximum magnitude of the voltage signals applied to the left and right shutters, 3002 and 3004, may be 15 volts. In an exemplary embodiment, the time out period in 3506 may be two seconds. In an exemplary embodiment, the maximum magnitude of the voltage signals applied to the left and right shutters, 3002 and 3004, may be greater or lesser than 15 volts, and the time out period may be longer or shorter. In an exemplary embodiment, during the method 3500, the CPU 3012 may open and close the left and right shutters, 3002 and 3004, at a different rate than would be used for viewing a movie. In an exemplary embodiment, in 3504, the voltage signals applied to the left and right shutters, 3002 and 3004, do not alternate and are applied constantly during the warm up time period and therefore the liquid crystal cells of the shutters may remain opaque for the entire warm up period. In an exemplary embodiment, the warm-up method 3500 may occur with or without the presence of a synchronization signal. Thus, the method 3500 provides a WARM UP mode of the operation for the 3D glasses 3000. In an exemplary embodiment, after implementing the warm up method 3500, the 3D glasses 3000 are placed in a NORMAL MODE, RUN MODE or CLEAR MODE of operation and may then implement the method 3300.

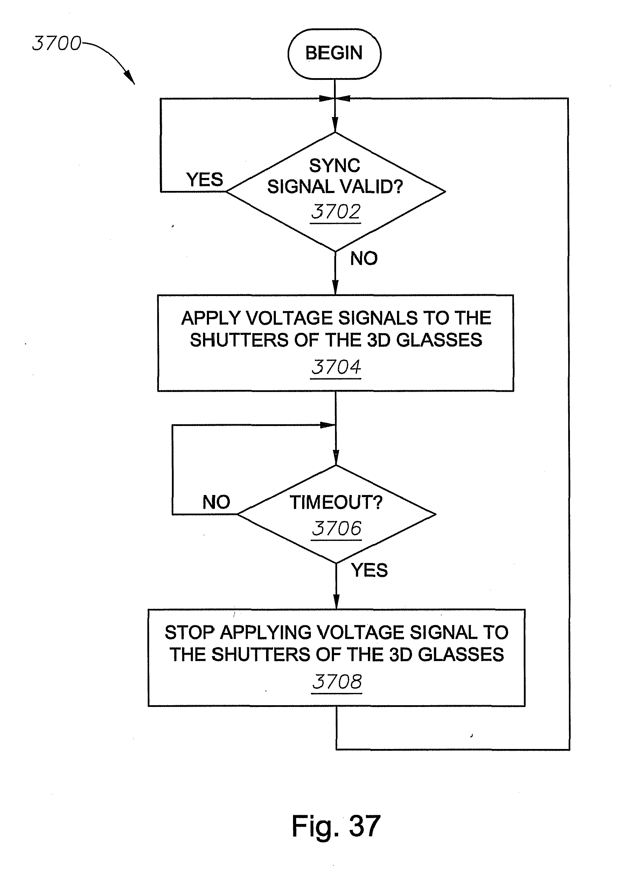

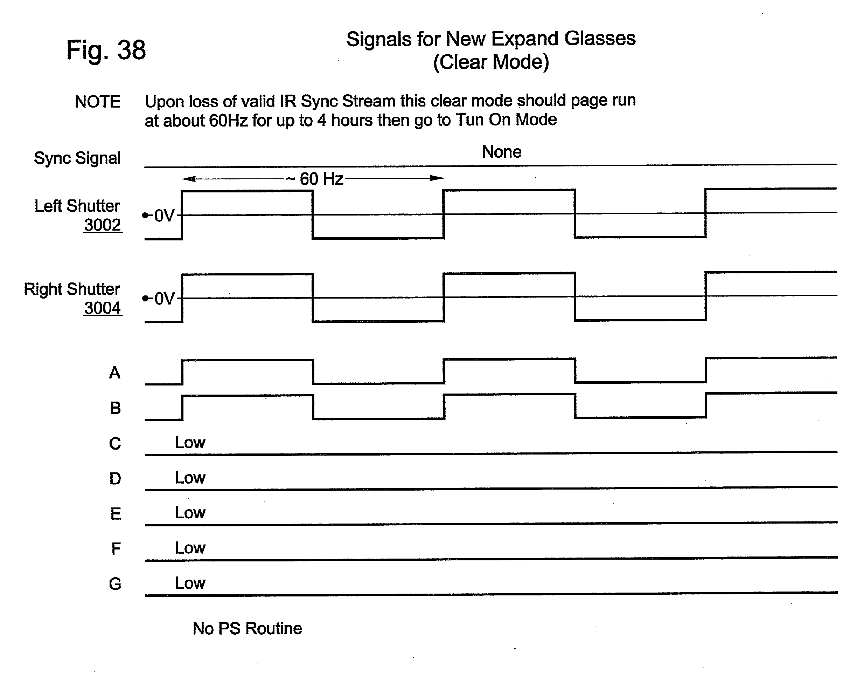

Referring now to Figs. 37 and 38, in an exemplary embodiment, during the operation of the 3D glasses 3000, the 3D glasses implement a method 3700 of operation in which the control signals A, B, C, D, E, F and G generated by the CPU 3012 are used to control the operation of the left and right shutter controllers, 3006 and 3008, and the common shutter controller 3010, to in turn control the operation of the left and right shutters, 3002 and 3004, as a function of the sync signal received by the signal sensor 3014.

In 3702, the CPU 3012 checks to see if the sync signal detected by the signal sensor 3014 is valid or invalid. If the CPU 3012 determines that the sync signal is invalid in 3702, then the CPU applies voltage signals to the left and right shutters, 3002 and 3004, of the 3D glasses 3000 in 3704. In an exemplary embodiment, the voltage applied to the left and right shutters, 3002 and 3004, in 3704, is alternated between positive and negative peak values to avoid ionization problems in the liquid crystal cells of the shutter. In an exemplary embodiment, the voltage applied to the left and right shutters, 3002 and 3004, in 3704, is alternated between positive and negative peak values to provide a square wave signal having a frequency of 60 Hz. In an exemplary embodiment, the square wave signal alternates between +3V and -3V. In an exemplary embodiment, one or both of the voltage signals applied to the left and right shutters, 3002 and 3004, in 3704, may be alternated between a zero voltage and a peak voltage. In an exemplary embodiment, other forms, including other frequencies, of voltage signals may be applied to the left and right shutters, 3002 and 3004, in 3704, such that the liquid crystal cells of the shutters remain open so that the user of the 3D glasses 3000 can see normally through the shutters. In an exemplary embodiment, the application of the voltage signals to the left and right shutters, 3002 and 3004, in 3704, causes the shutters to open.

During the application of the voltage signals to the left and right shutters, 3002 and 3004, in 3704, the CPU 3012 checks for a clearing time out in 3706. If the CPU 3012 detects a clearing time out in 3706, then the CPU 3012 will stop the application of the voltage signals to the shutters, 3002 and 3004, in 3708, which may then place the 3D glasses 3000 into an OFF MODE of operation. In an exemplary embodiment, the duration of the clearing time out may, for example, be up to about 4 hours in length.

Thus, in an exemplary embodiment, if the 3D glasses 3000 do not detect a valid synchronization signal, they may go to a clear mode of operation and implement the method 3700. In the clear mode of operation, in an exemplary embodiment, both shutters, 3002 and 3004, of the 3D glasses 3000 remain open so that the viewer can see normally through the shutters of the 3D glasses. In an exemplary embodiment, a constant voltage is applied, alternating positive and negative, to maintain the liquid crystal cells of the shutters, 3002 and 3004, of the 3D glasses 3000 in a clear state. The constant voltage could, for example, be 2 volts, but the constant voltage could be any other voltage suitable to maintain reasonably clear shutters. In an exemplary embodiment, the shutters, 3002 and 3004, of the 3D glasses 3000 may remain clear until the 3D glasses are able to validate an encryption signal. In an exemplary embodiment, the shutters, 3002 and 3004, of the 3D glasses 3000 may alternately open and close at a rate that allows the user of the 3D glasses to see normally.

Thus, the method 3700 provides a method of clearing the operation of the 3D glasses 3000 and thereby provide a CLEAR MODE of operation.

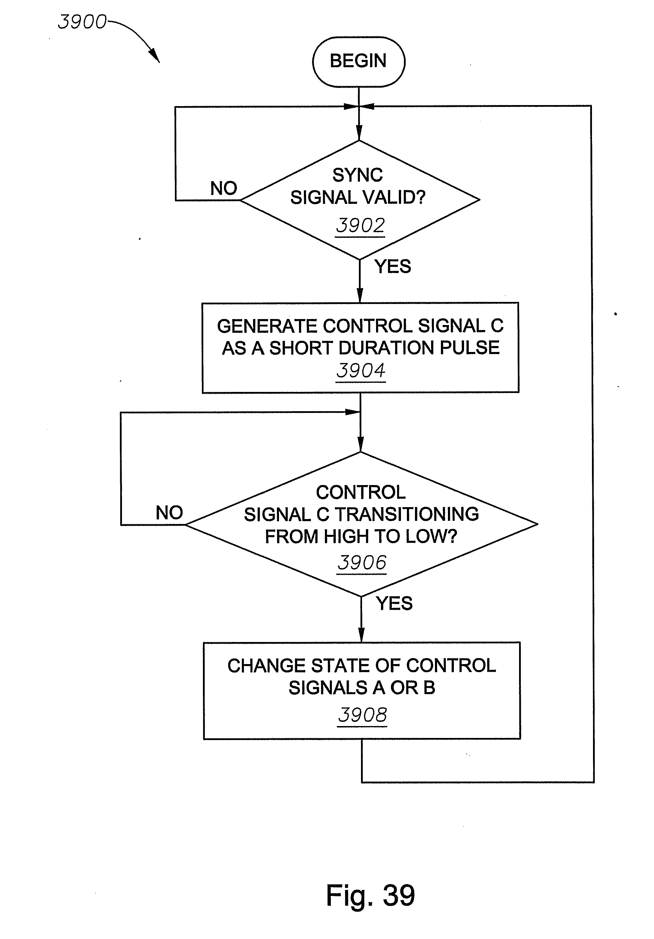

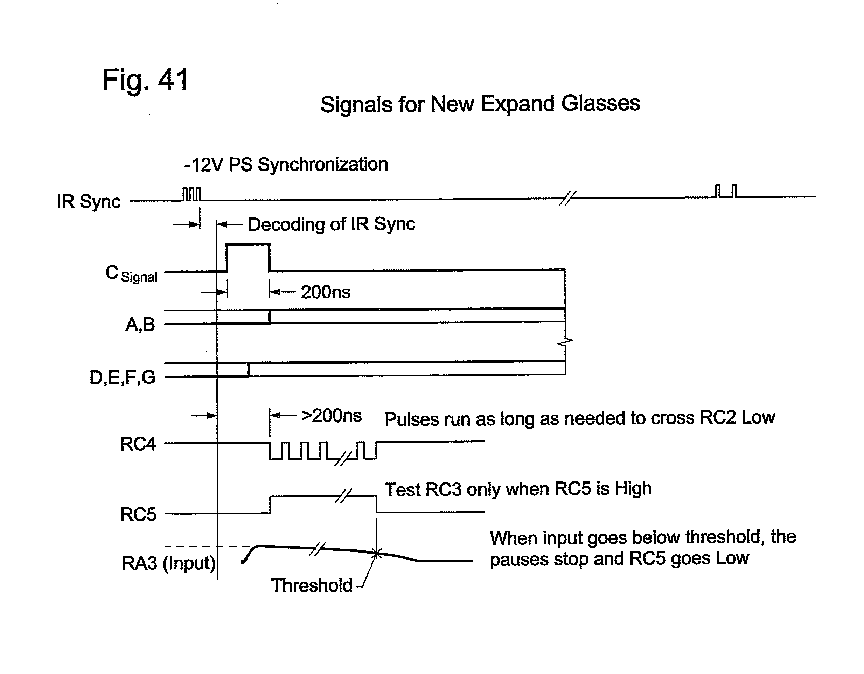

Referring now to Figs. 39 and 41, in an exemplary embodiment, during the operation of the 3D glasses 3000, the 3D glasses implement a method 3900 of operation in which the control signals A, B, C, D, E, F and G generated by the CPU 3012 are used to transfer charge between the shutters, 3002 and 3004. In 3902, the CPU 3012 determines if a valid synchronization signal has been detected by the signal sensor 3014. If the CPU 3012 determines that a valid synchronization signal has been detected by the signal sensor 3014, then the CPU generates the control signal C in 3904 in the form of a short duration pulse lasting, in an exemplary embodiment, about 200 µs. In an exemplary embodiment, during the method 3900, the transfer of charge between the shutters, 3002 and 3004, occurs during the short duration pulse of the control signal C, substantially as described above with reference to Figs. 33 and 34.

In 3906, the CPU 3012 determines if the control signal C has transitioned from high to low. If the CPU 3012 determines that the control signal C has transitioned from high to low, then the CPU changes the state of the control signals A or B in 3908 and then the 3D glasses 3000 may continue with normal operation of the 3D glasses, for example, as described and illustrated above with reference to Figs. 33 and 34.

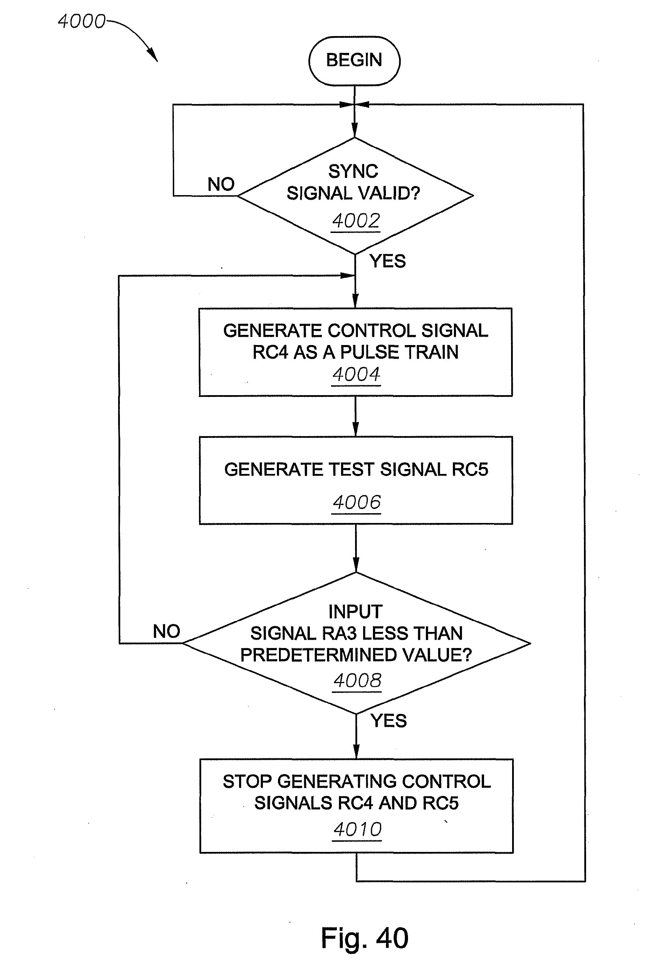

Referring now to Figs. 30a, 40 and 41, in an exemplary embodiment, during the operation of the 3D glasses 3000, the 3D glasses implement a method 4000 of operation in which the control signals RC4 and RC5 generated by the CPU 3012 are used to operate the charge pump 3016 during the normal or warm up modes of operation of the 3D glasses 3000, as described and illustrated above with reference to Figs. 32, 33, 34, 35 and 36. In 4002, the CPU 3012 determines if a valid synchronization signal has been detected by the signal sensor 3014. If the CPU 3012 determines that a valid synchronization signal has been detected by the signal sensor 3014, then the CPU generates the control signal RC4 in 4004 in the form of a series of short duration pulses.

In an exemplary embodiment, the pulses of the control signal RC4 control the operation of the transistor Q1 to thereby transfer charge to the capacitor C13 until the potential across the capacitor reaches a predetermined level. In particular, when the control signal RC4 switches to a low value, the transistor Q1 connects the inductor L1 to the battery 120. As a result, the inductor L1 stores energy from the battery 120. Then, when the control signal RC4 switches to a high value, the energy that was stored in the inductor L1 is transferred to the capacitor C13. Thus, the pulses of the control signal RC4 continually transfer charge to the capacitor C13 until the potential across the capacitor C13 reaches a predetermined level. In an exemplary embodiment, the control signal RC4 continues until the potential across the capacitor C13 reaches -12V.

In an exemplary embodiment, in 4006, the CPU 3012 generates a control signal RC5. As a result, an input signal RA3 is provided having a magnitude that decreases as the potential across the capacitor C13 increases. In particular, when the potential across the capacitor C13 approaches the predetermined value, the zener diode D7 starts to conduct current thereby reducing the magnitude of the input control signal RA3. In 4008, the CPU 3012 determines if the magnitude of the input control signal RA3 is less than a predetermined value. If the CPU 3012 determines that the magnitude of the input control signal RA3 is less than the predetermined value, then, in 4010, the CPU stops generating the control signals RC4 and RC5. As a result, the transfer of charge to the capacitor C13 stops.

In an exemplary embodiment, the method 4000 may be implemented after the method 3900 during operation of the 3D glasses 3000.

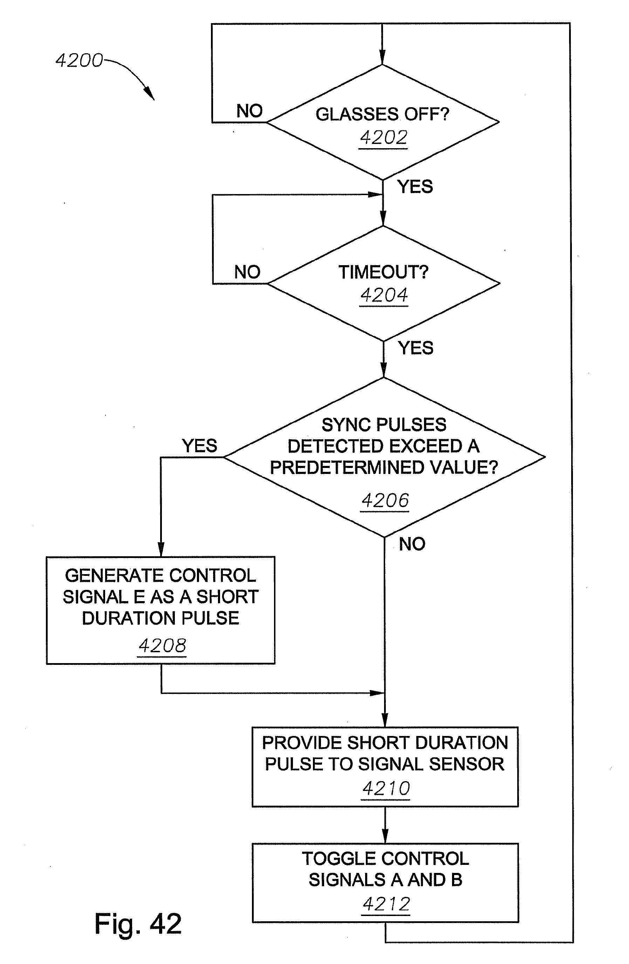

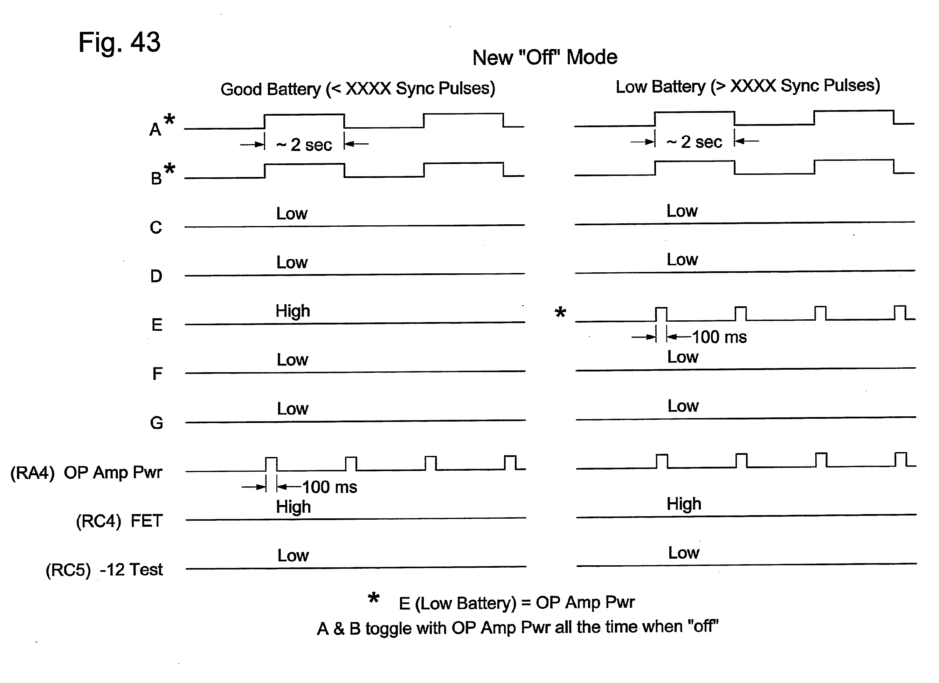

Referring now to Figs. 30a, 42 and 43, in an exemplary embodiment, during the operation of the 3D glasses 3000, the 3D glasses implement a method 4200 of operation in which the control signals A, B, C, D, E, F, G, RA4, RC4 and RC5 generated by the CPU 3012 are used to determine the operating status of the battery 120 when the 3D glasses 3000 have been switched to an off condition. In 4202, the CPU 3012 determines if the 3D glasses 3000 are off or on. If the CPU 3012 determines that the 3D glasses 3000 are off, then the CPU determines, in 4204, if a predetermined timeout period has elapsed in 4204. In an exemplary embodiment, the timeout period is 2 seconds in length.

If the CPU 3012 determines that the predetermined timeout period has elapsed, then the CPU determines, in 4206, if the number of synchronization pulses detected by the signal sensor 3014 within a predetermined prior time period exceeds a predetermined value. In an exemplary embodiment, in 4206, predetermined prior time period is a time period that has elapsed since the most recent replacement of the battery 120.

If the CPU 3012 determines that the number of synchronization pulses detected by the signal sensor 3014 within a predetermined prior time period does exceed a predetermined value, then the CPU, in 4208, generates control signal E as a short duration pulse, in 4210, provides the control signal RA4 as a short duration pulse to the signal sensor 3014, and, in 4212, toggles the operational state of the control signals A and B, respectively. In an exemplary embodiment, if the number of synchronization pulses detected by the signal sensor 3014 within a predetermined prior time period does exceed a predetermined value, then this may indicate that the remaining power in the battery 120 is low.

Alternatively, if the CPU 3012 determines that the number of synchronization pulses detected by the signal sensor 3014 within a predetermined prior time period does not exceed a predetermined value, then the CPU, in 4210, provides the control signal RA4 as a short duration pulse to the signal sensor 3014, and, in 4212, toggles the operational state of the control signals A and B, respectively. In an exemplary embodiment, if the number of synchronization pulses detected by the signal sensor 3014 within a predetermined prior time period does not exceed a predetermined value, then this may indicate that the remaining power in the battery 120 is not low.

In an exemplary embodiment, the combination of the control signals A and B toggling and the short duration pulse of the control signal E, in 4208 and 4212, causes the shutters, 3002 and 3004, of the 3D glasses 3000 to be closed, except during the short duration pulse of the control signal E. As a result, in an exemplary embodiment, the shutters, 3002 and 3004, provide a visual indication to the user of the 3D glasses 3000 that the power remaining within the battery 120 is low by flashing the shutters of the 3D glasses open for a short period of time. In an exemplary embodiment, providing the control signal RA4 as a short duration pulse to the signal sensor 3014, in 4210, permits the signal sensor to search for and detect synchronization signals during the duration of the pulse provided.

In an exemplary embodiment, the toggling of the control signals A and B, without also providing the short duration pulse of the control signal E, causes the shutters, 3002 and 3004, of the 3D glasses 3000 to remain closed. As a result, in an exemplary embodiment, the shutters, 3002 and 3004, provide a visual indication to the user of the 3D glasses 3000 that the power remaining within the battery 120 is not low by not flashing the shutters of the 3D glasses open for a short period of time.

In embodiments that lack a chronological clock, time may be measured in terms of sync pulses. The CPU 3012 may determine time remaining in the battery 120 as a factor of the number of sync pulses for which the battery may continue to operate and then provide a visual indication to the user of the 3D glasses 3000 by flashing the shutters, 3002 and 3004, open and closed.

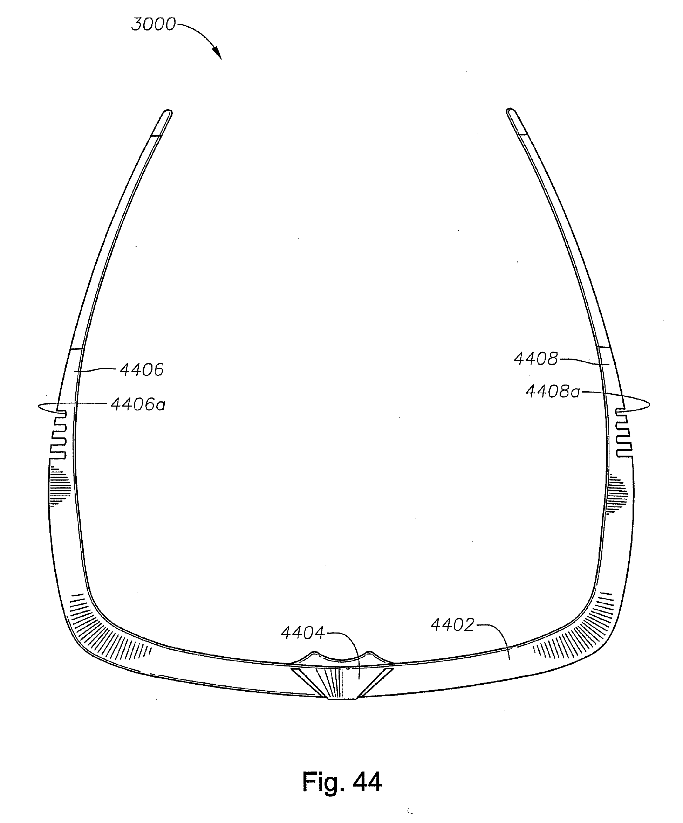

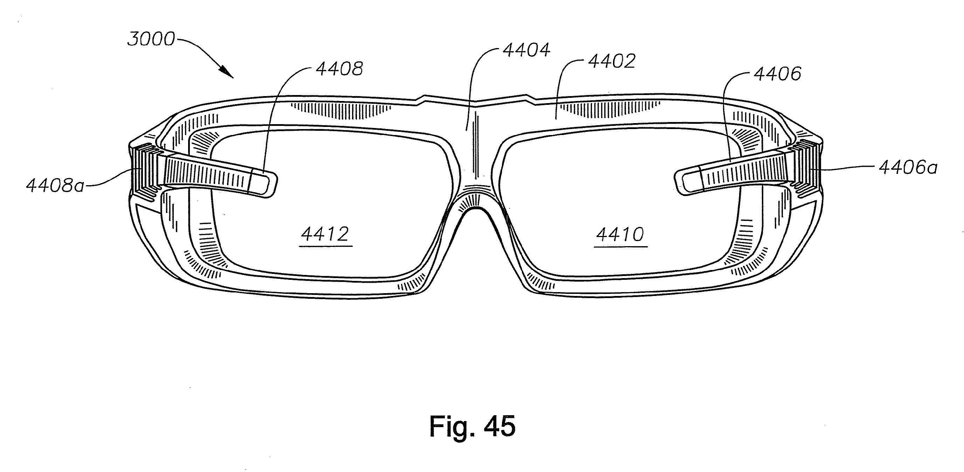

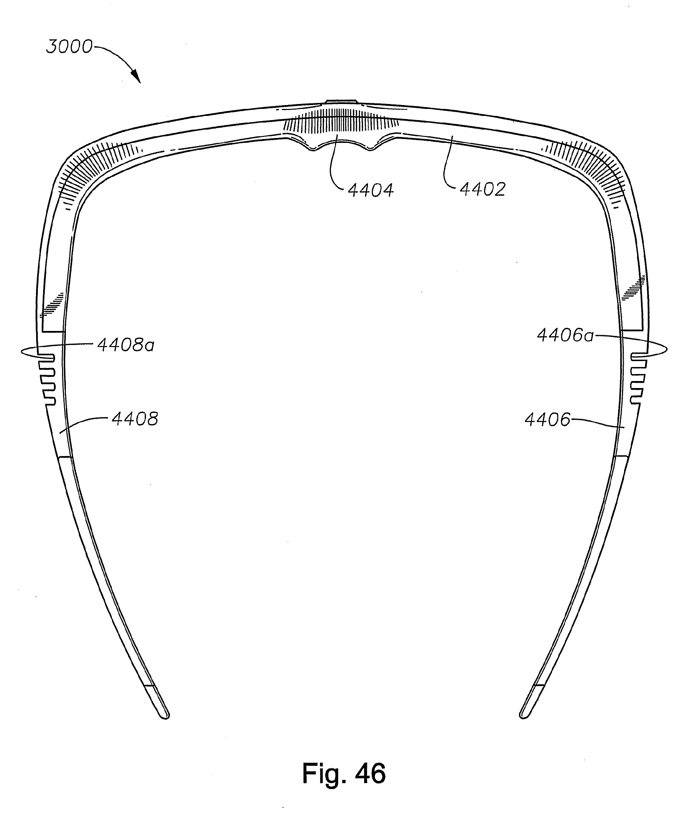

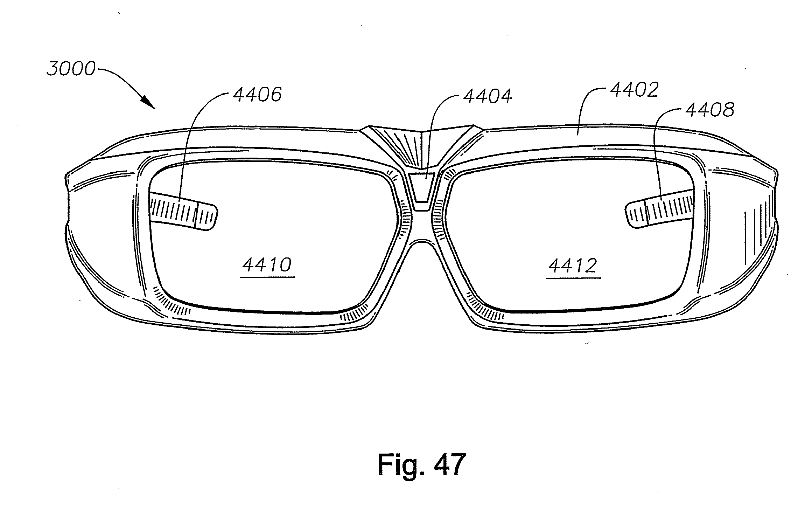

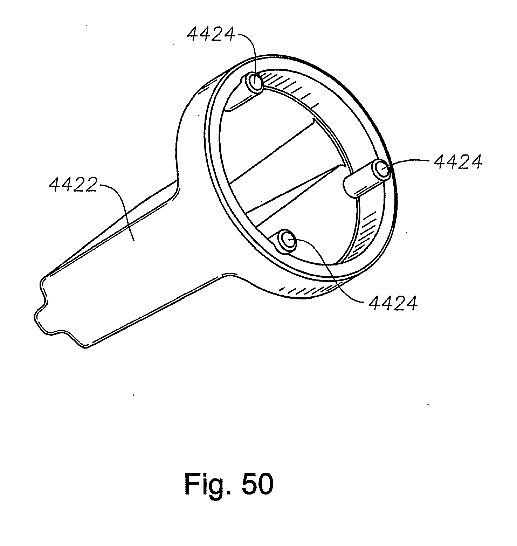

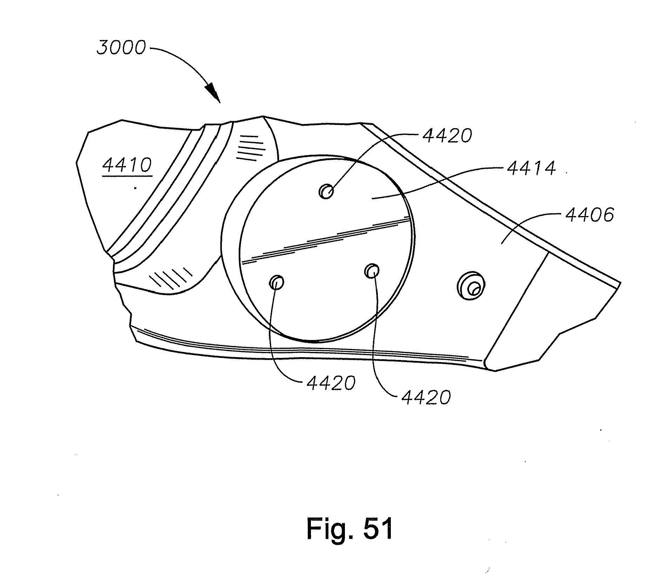

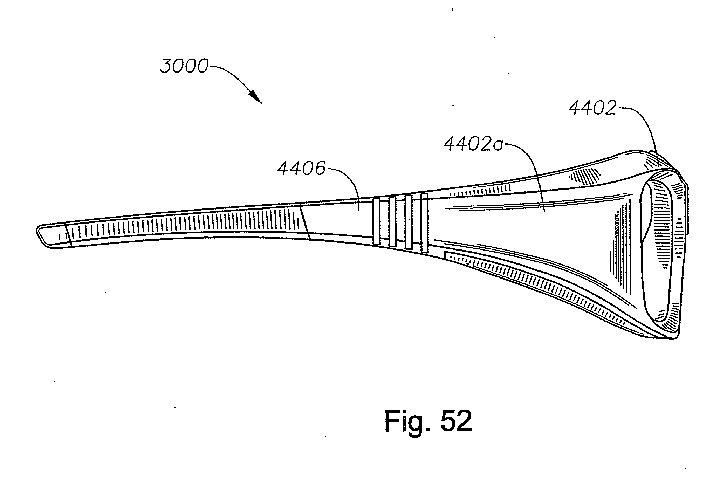

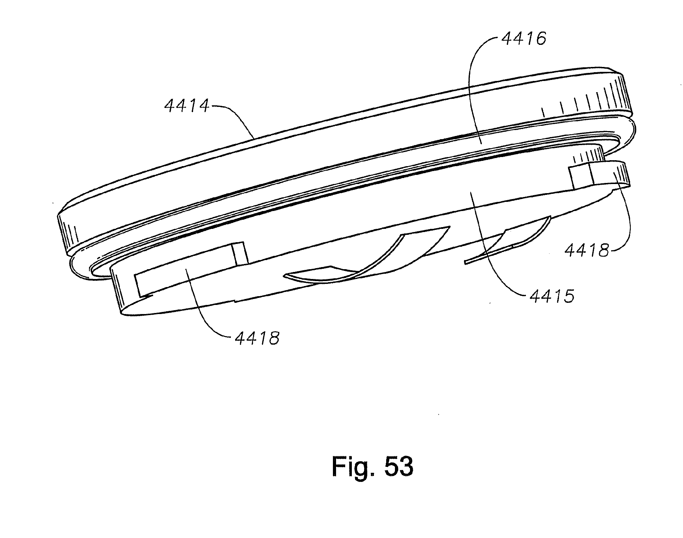

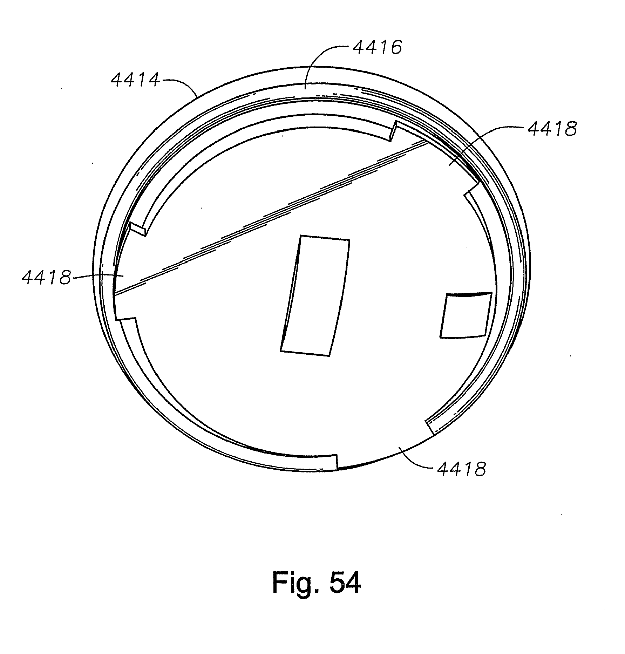

Referring now to Figures 44-55, in an exemplary embodiment, one or more of the 3D glasses 104, 1800 and 3000 include a frame front 4402, a bridge 4404, right temple 4406, and a left temple 4408. In an exemplary embodiment, the frame front 4402 houses the control circuitry and power supply for one or more of the 3D glasses 104, 1800 and 3000, as described above, and further defines right and left lens openings, 4410 and 4412, for holding the right and left ISS shutters described above. In some embodiments, the frame front 4402 wraps around to form a right wing 4402a and a left wing 4402b. In some embodiments, at least part of the control circuitry for the 3D glasses 104, 1800 and 3000 are housed in either or both wings 4402a and 4402b.

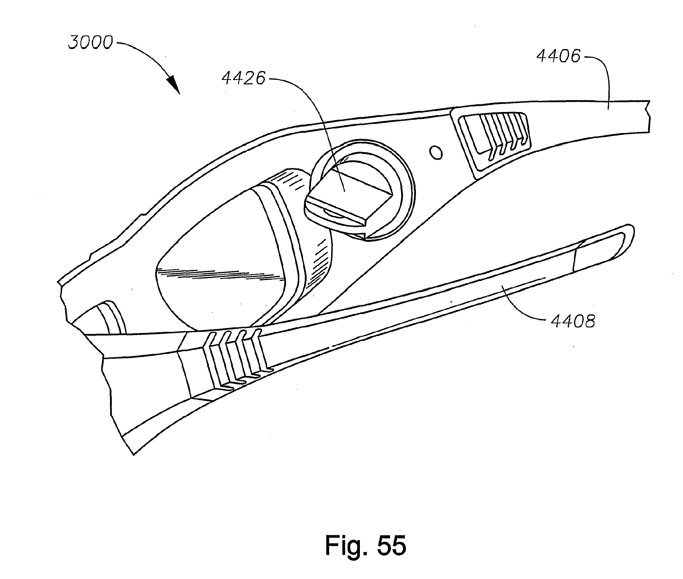

In an exemplary embodiment, the right and left temples, 4406 and 4408, extend from the frame front 4402 and include ridges, 4406a and 4408a, and each have a serpentine shape with the far ends of the temples being spaced closer together than at their respective connections to the frame front. In this manner, when a user wears the 3D glasses 104, 1800 and 3000, the ends of the temples, 4406 and 4408, hug and are held in place on the user's head. In some embodiments, the spring rate of the temples, 4406 and 4408, is enhanced by the double bend while the spacing and depth of the ridges, 4406a and 4408a, control the spring rate. As shown in Figure 55, some embodiments do not use a double bended shape but, rather, use a simple curved temple 4406 and 4408.

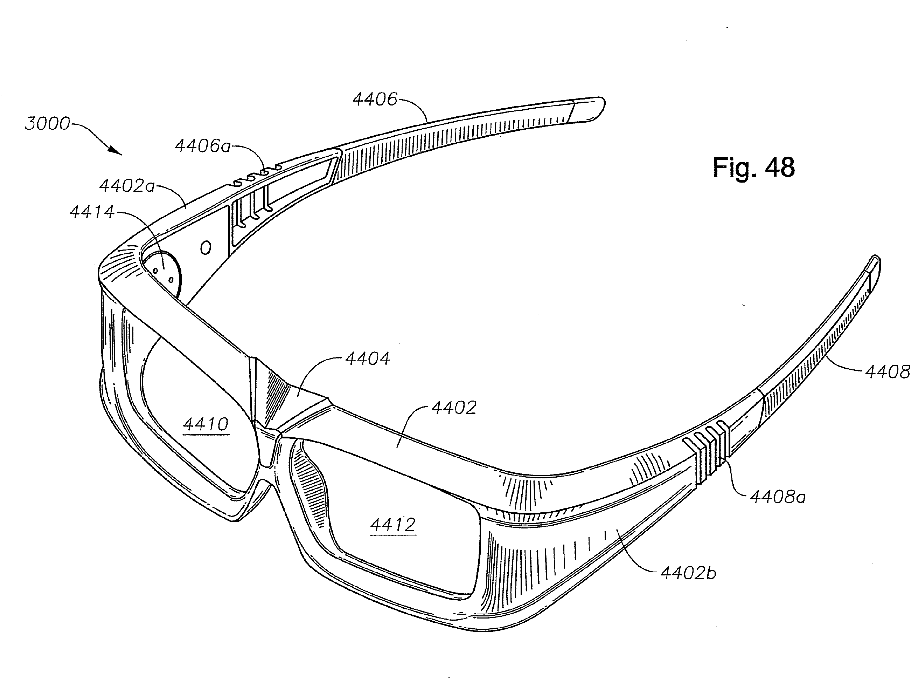

Referring now to Figures 48-55, in an exemplary embodiment, the control circuitry for one or more of the 3D glasses 104, 1800 and 3000 is housed in the frame front, which includes the right wing 4402a, and the battery is housed in the right wing 4402a. Furthermore, in an exemplary embodiment, access to the battery 120 of the 3D glasses 3000 is provided through an opening, on the interior side of the right wing 4402a, that is sealed off by a cover 4414 that includes an o-ring seal 4416 for mating with and sealingly engaging the right wing 4402a.

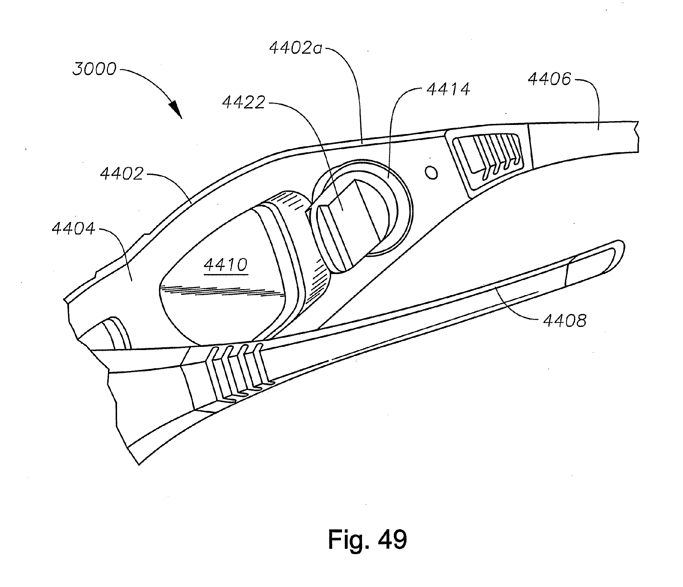

Referring to Figures 49-55, in some embodiments, the battery is located within a battery cover assembly formed by cover 4414 and cover interior 4415. Battery cover 4414 may be attached to battery cover interior 4415 by, for example, ultra-sonic welding. Contacts 4417 may stick out from cover interior 4415 to conduct electricity from the battery 120 to contacts located, for example, inside the right wing 4402a.

Cover interior 4415 may have circumferentially spaced apart radial keying elements 4418 on an interior portion of the cover. Cover 4414 may have circumferentially spaced apart dimples 4420 positioned on an exterior surface of the cover.

In an exemplary embodiment, as illustrated in Figures 49-51, the cover 4414 may be manipulated using a key 4422 that includes a plurality of projections 4424 for mating within and engaging the dimples 4420 of the cover. In this manner, the cover 4414 may be rotated relative to the right wing 4402a of the 3D glasses 104, 1800 and 3000 from a closed (or locked) position to an open (or unlocked) position. Thus, the control circuitry and battery of the 3D glasses 104, 1800 and 3000 may be sealed off from the environment by the engagement of the cover 4414 with the right wing 4402a of the 3D glasses 3000 using the key 4422. Referring to Figure 55, in another embodiment, key 4426 may be used.

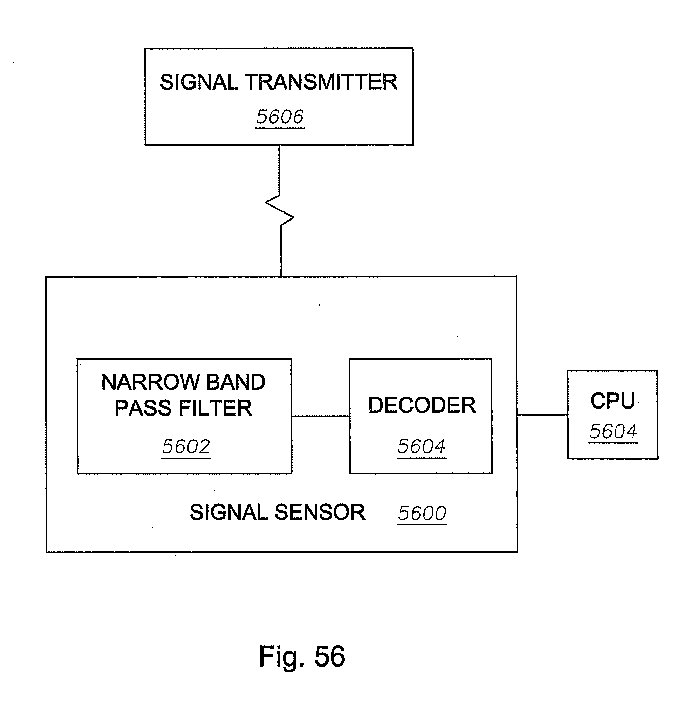

Referring now to Fig. 56, an exemplary embodiment of a signal sensor 5600 includes a narrow band pass filter 5602 that is operably coupled to a decoder 5604. The signal sensor 5600 in turn is operably coupled to a CPU 5604. The narrow band pass filter 5602 may be an analog and/or digital band pass filter that may have a pass band suitable for permitting a synchronous serial data signal to pass therethrough while filtering out and removing out of band noise.

In an exemplary embodiment, the CPU 5604 may, for example, be the CPU 114, the CPU 1810, or the CPU 3012, of the 3D glasses, 104, 1800, or 3000.

In an exemplary embodiment, during operation, the signal sensor 5600 receives a signal from a signal transmitter 5606. In an exemplary embodiment, the signal transmitter 5606 may, for example, be the signal transmitter 110.

In an exemplary embodiment, the signal 5700 transmitted by the signal transmitter 5606 to the signal sensor 5600 includes one or more data bits 5702 that are each preceded by a clock pulse 5704. In an exemplary embodiment, during operation of the signal sensor 5600, because each bit 5702 of data is preceded by a clock pulse 5704, the decoder 5604 of the signal sensor can readily decode long data bit words. Thus, the signal sensor 5600 is able to readily receive and decode synchronous serial data transmissions from the signal transmitter 5606. By contrast, long data bit words, that are asynchronous data transmissions, are typically difficult to transmit and decode in an efficient and/or error free fashion. Therefore, the signal sensor 5600 provides an improved system for receiving data transmissions. Further, the use of synchronous serial data transmission in the operation of the signal sensor 5600 ensures that long data bit words may be readily decoded.

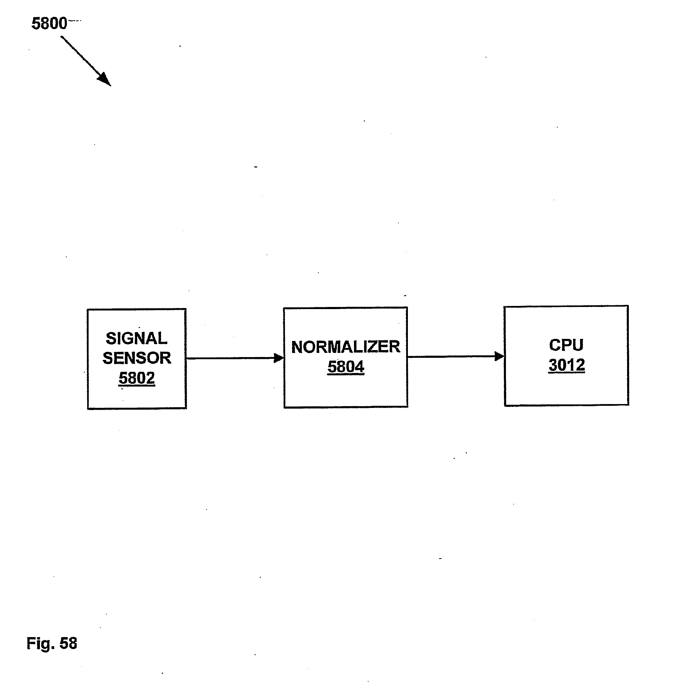

Referring now to Fig. 58, an exemplary embodiment of a system 5800 for conditioning a synchronization signal for use with the 3D glasses 3000 includes a signal sensor 5802 for sensing the transmission of a synchronization signal from the signal transmitter 110. In an exemplary embodiment, the signal sensor 5802 is adapted to sense the transmission of the synchronization signal from the signal transmitter 110 having components predominantly in the visible portion of the electromagnetic spectrum. In several alternative embodiments, the signal sensor 5802 may be adapted to sense the transmission of the synchronization signal from the signal transmitter 110 having components that may not be predominantly in the visible portion of the electromagnetic spectrum such as, for example, infrared signals.

A normalizer 5804 is operably coupled to the signal sensor 5802 and the CPU 3012 of the 3D glasses 3000 for normalizing the synchronization signal detected by the signal sensor and transmitting the normalized synchronization signal to the CPU.

In an exemplary embodiment, the normalizer 5804 may be implemented using analog and/or digital circuitry and may be adapted to normalize the amplitude and/or the shape of the detected synchronization signal. In this manner, in an exemplary embodiment, wide variations in the amplitude and/or shape of the synchronization signal detected by the signal sensor 5802 may be accommodated during the operation of the 3D glasses 3000. For example, if the spacing between the signal transmitter 110 and the signal sensor 5802 may vary widely in normal use, the amplitude of the synchronization signal detected by the signal sensor of the 3D glasses 3000 may vary widely. Thus, a means for normalizing the amplitude and/or shape of the synchronization signal detected by the signal sensor 5802 will enhance the operation of the 3D glasses 3000.

Examples of systems for conditioning an input signal to normalize the amplitude and/or shape of the input signal are disclosed, for example, in the following U.S. Patents: 3,124,797, 3,488,604, 3,652,944, 3,927,663, 4,270,223, 6,081,565 and 6,272,103, the disclosures of which are incorporated herein by reference. The disclosures and/or teachings of these U.S. Patents may be combined in whole, or in part, to implement all or a portion of the normalizer 5804. In an exemplary embodiment, all or a portion of the functionality of the normalize 5804 may be implemented by the CPU 3012.

In an exemplary embodiment, the normalizer 5804 may also, or in the alternative, receive the incoming synchronization signals from the signal sensor 5802 and adjust the amplification and/or stabilize the peak to peak amplitude of the incoming synchronization signal to generate an output signal that is then transmitted from the normalizer to the CPU 3012. In an alternative embodiment, the CPU 114 and/or the CPU 1810 may be substituted for, or used in addition to, the CPU 3012.

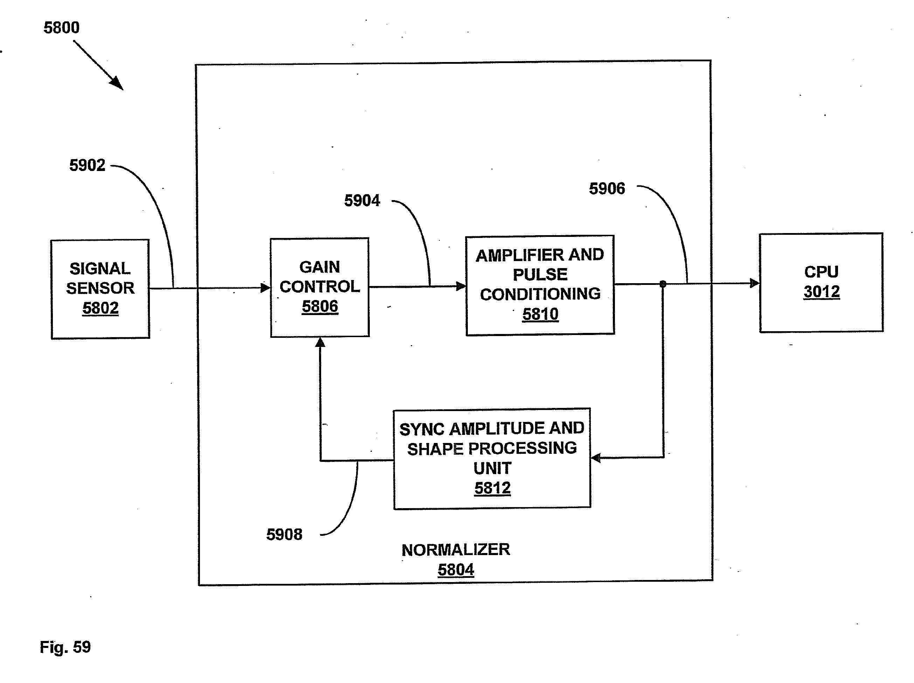

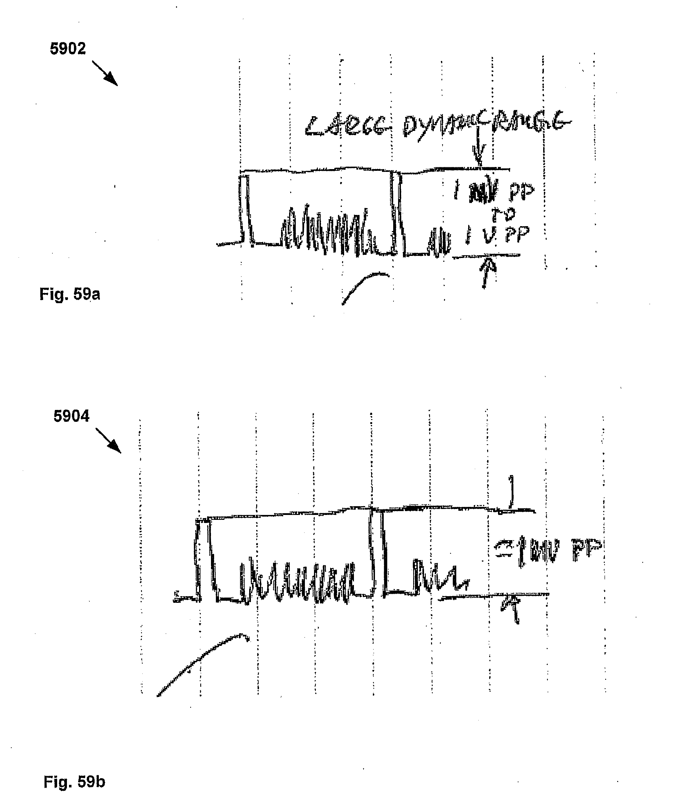

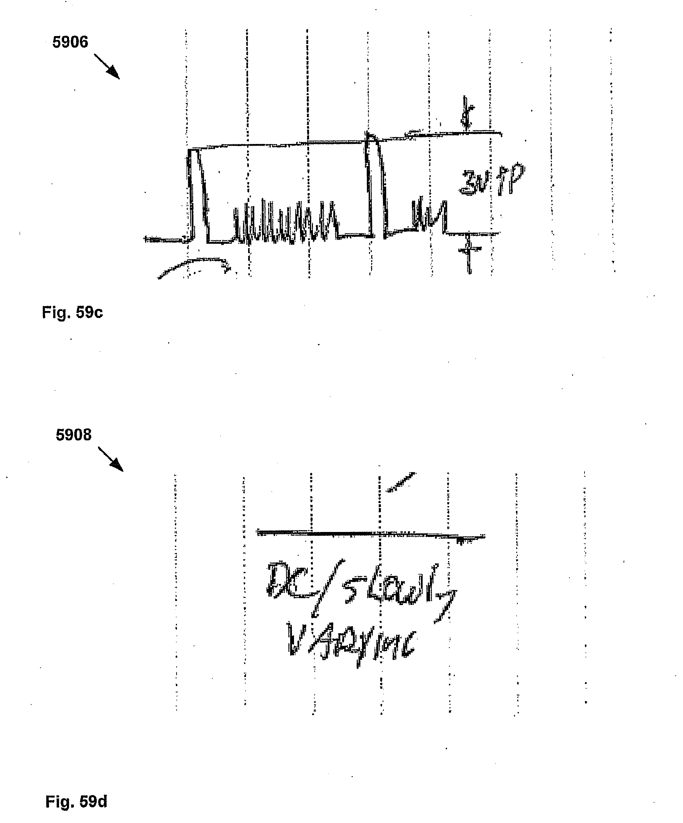

Referring now to Fig. 59, in an exemplary embodiment, the normalizer 5804 includes a gain control element 5806, an amplifier and pulse conditioning element 5810 and a synchronization amplitude and shape processing unit 5812.

In an exemplary embodiment, the gain control element 5806 receives and processes the synchronization input signal provided by the signal sensor 5802 and a gain adjustment signal provided by the synchronization amplitude and shape processing unit 5812 to generate an attenuated output signal for processing by the amplifier and pulse conditioning element 5810.

In an exemplary embodiment, the amplifier and pulse conditioning element 5810 processes the signal output by the gain control element 5806 to generate a normalized synchronization signal for transmitting to the CPU 3012.

In an exemplary embodiment the system 5800 for conditioning the synchronization signal may be used in the 3D glasses 104, 1800 or 3000.

Referring now to Figs. 59a-59d, in an exemplary experimental embodiment of the system 5800, an electromagnetic synchronization signal, having energy primarily within the visible spectrum of light, was sensed by the signal sensor 5802 and/or processed to generate a signal 5902 for transmission to the gain control 5806. In an exemplary experimental embodiment, the amplitude of the synchronization signal 5902 ranged from about 1 mV to 1 V peak-to-peak. In an exemplary experimental embodiment, the signal 5902 was then processed by the gain control 5806 to generate a signal 5904 for transmission to the amplifier and pulse conditioning 5810. In an exemplary experimental embodiment, the amplitude of the signal 5904 was up to about 1 mV. In an exemplary experimental embodiment, the signal 5904 was then processed by the amplifier and pulse conditioning 5810 to generate a signal 5906 for transmission to the CPU 3012. In an exemplary embodiment, the amplitude of the signal 5906 was up to about 3V peak-to-peak. In an exemplary experimental, the signal 5906 was fed back to the synchronization amplitude and shape processing unit 5812 to generate a feedback control signal 5908 for transmission to the gain control 5806. In an exemplary experimental embodiment, the feedback control signal 5908 was a slowly varying or DC signal.

Thus, the exemplary experimental embodiment of the system 5800 demonstrated that the system can adjust the amplification and stabilize the peak to peak amplitude of the sensed synchronization signal. The exemplary experimental results of the operation of the system 5800, illustrated and described with references to Figs. 58, 59, 59a, 59b, 59c and 59d, were unexpected.

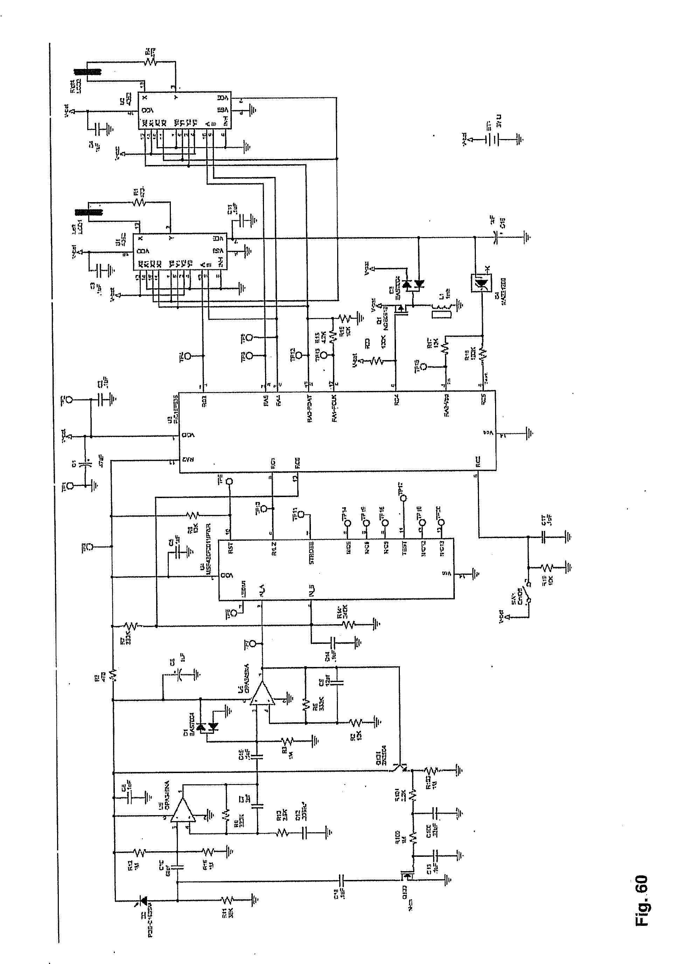

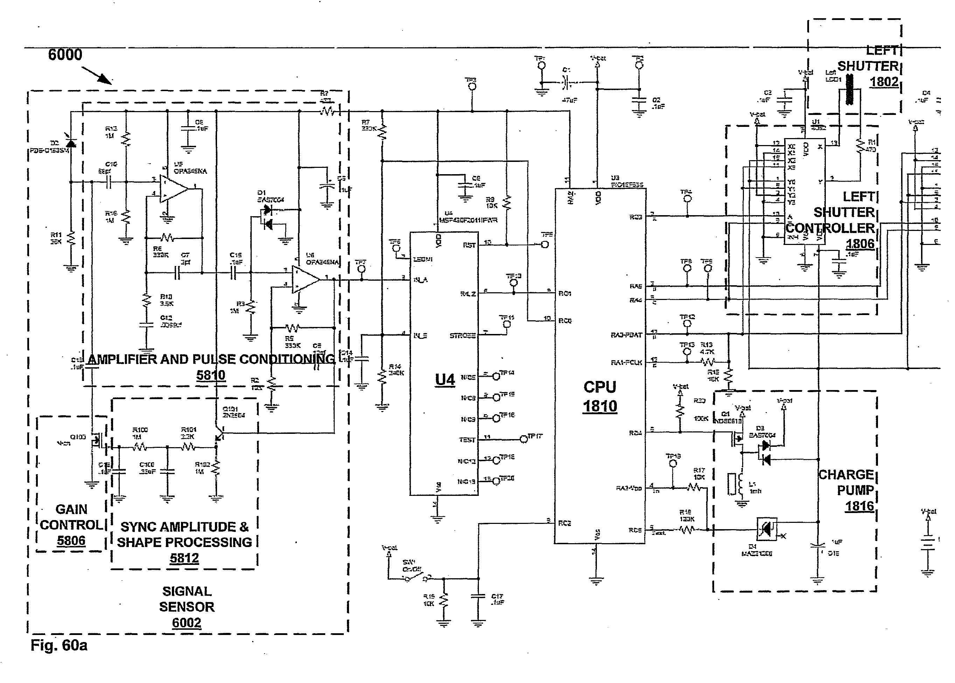

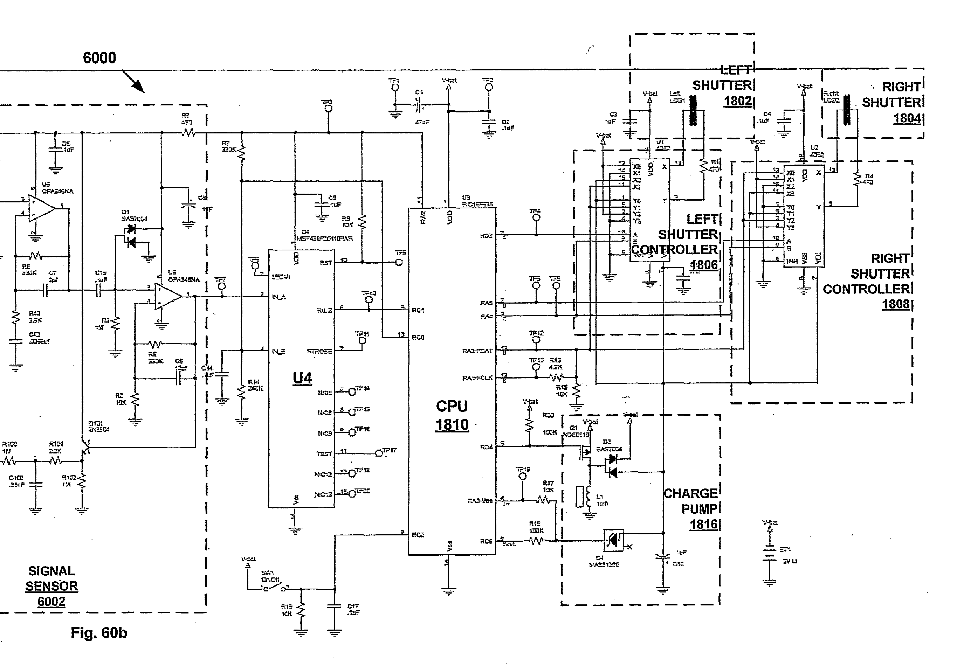

Referring now to Figs. 60, 60a and 60b, an exemplary embodiment of 3D glasses 6000 is substantially identical to the 3D glasses 1800 described above, except as indicated below.

In an exemplary embodiment, the 3D glasses 6000 include the left shutter 1802, the right shutter 1804, the left shutter controller 1806, the right shutter controller 1808, the CPU 1810, and the charge pump 1815 of the 3D glasses, including their corresponding functionality.

The 3D glasses 6000 include a signal sensor 6002, that is substantially similar to the signal sensor 1814 of the 3D glasses 1800, modified to include gain control 5806, amplifier and pulse conditioning 5810, and sync amplitude and shape processing 5812, that is operably coupled to microcontroller U4. In an exemplary embodiment, the microcontroller U4 is a Texas Instruments MSP430F2011PWR integrated circuit, commercially available from Texas Instruments. In an exemplary embodiment, the microcontroller U4 is also operably coupled to the CPU 1810. In an exemplary embodiment, the photo diode D2 of the signal sensor 6002 is capable of detecting electromagnetic signals having components in the visible spectrum.

In an exemplary embodiment, the gain control 5806 includes field effect transistor Q100.

In an exemplary embodiment, the amplifier and pulse conditioning 5810 includes the operational amplifiers, U5 and U6, resistors, R2, R3, R5, R6, R7, R10, R12, R14 and R16, capacitors, C5, C6, C7, C8, C10, C12, C14, and C15, and schottky barrier diodes, D1.

In an exemplary embodiment, the sync amplitude and shape processing 5812 includes NPN transistor Q101, resistors, R100, R101 and R102, and capacitors, C13 and C100.

In an exemplary embodiment, during operation of the 3D glasses 6000, the signal sensor 6002 receives signals from the signal transmitter 110, which may, for example, include configuration data and/or synchronization signals for operating the 3D glasses 6000.

In an exemplary embodiment, during operation of the 3D glasses 6000, Q100 controls the signal out of the photo diode D2. In particular, in an exemplary embodiment, when the voltage on the gate of Q100, which is the voltage across C13, is 0V, Q100 is turned off and the signal out of the photo diode D2 does not get attenuated. As the voltage on the gate of Q100 increases, Q100 turns on and conducts part of the current from photo diode D2 to ground thereby attenuating the signal out of the photo diode D2. The output detector Q101 detects the magnitude of the resulting output signal from photo diode D2 and adjusts the voltage on the gate of Q100 to stabilize the output signal from photo diode D2.

In an exemplary embodiment, during operation of the 3D glasses 6000, if the signal out of the photo diode D2 has excessive amplitude, the output from the amplifier and pulse conditioning 5810, including the field effect transistor Q100, will start a big swing voltage. When the swing voltage of the amplifier and pulse conditioning 5810, including the field effect transistor Q100, gets too high, Q101 passes an appropriately modified voltage signal to the gate of Q100 which will controllably cause an appropriate portion of the current flow through Q100 to go to ground. Thus, in an exemplary embodiment, during operation of the 3D glasses 6000, the greater the voltage overflow at the output of the amplifier and pulse conditioning 5810, the greater the percentage of the current flow from photo diode D2 that is conducted to ground through Q100. As a result, the resulting signal that is then provided to the amplifier and pulse conditioning 5810 will not over drive the operational amplifiers, U5 and U6, into saturation.

In an exemplary embodiment, during operation of the 3D glasses 6000, the microcontroller U4 compares the input signals IN_A and IN_B to determine if there is an incoming sync pulse. If microcontroller U4 determines that the incoming sync pulse is a sync pulse for opening the left shutter 1802, then the microcontroller converts the incoming sync pulse in a 2 pulse sync pulse. Alternatively, if microcontroller U4 determines that the incoming sync pulse is a sync pulse for opening the right shutter 1804, then the microcontroller converts the incoming sync pulse in a 3 pulse sync pulse. Thus, the microcontroller U4 decodes the incoming sync pulse to operate the left and rights shutters, 1802 and 1804, of the 3D glasses 6000.

In an exemplary embodiment, during,operation of the 3D glasses 6000, the microcontroller U4 further provides an additional locked loop that enables the 3D glasses 6000 to operate even if the sync signal is not present for some time such as, for example, if the wearer of the 3D looks away from the direction of the incoming synchronization signal.

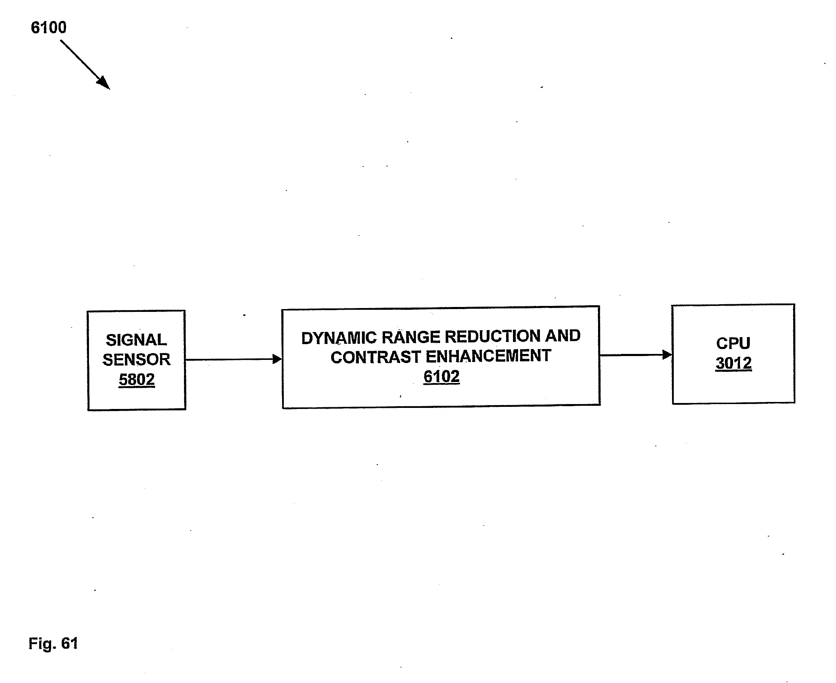

Referring now to Fig. 61, an exemplary embodiment of a system 6100 for conditioning a synchronization signal for use with the 3D glasses 104, 1800, 3000 or 6000 includes the signal sensor 5802 for sensing the transmission of a synchronization signal from the signal transmitter 110. In an exemplary embodiment, the signal sensor 5802 is adapted to sense the transmission of the synchronization signal from the signal transmitter 110 having components predominantly in the visible portion of the electromagnetic spectrum.

A conventional dynamic range reduction and contrast enhancement element 6102 is operably coupled to the signal sensor 5802 and the CPU 3012 of the 3D glasses 3000 for reducing the dynamic range of and enhancing the contrast within the synchronization signal detected by the signal sensor and transmitting the normalized synchronization signal to the CPU. Alternatively, the CPU 114 and/or 1810 may be substituted for, or used in addition to, the CPU 3012.

In an exemplary embodiment, the use of the dynamic range reduction and contrast enhancement element 6102 in the 3D glasses 3000 enhances the ability of the 3D glasses to sense and process synchronization signals transmitted by the signal transmitter 110 having components predominantly in the visible portion of the electromagnetic spectrum.

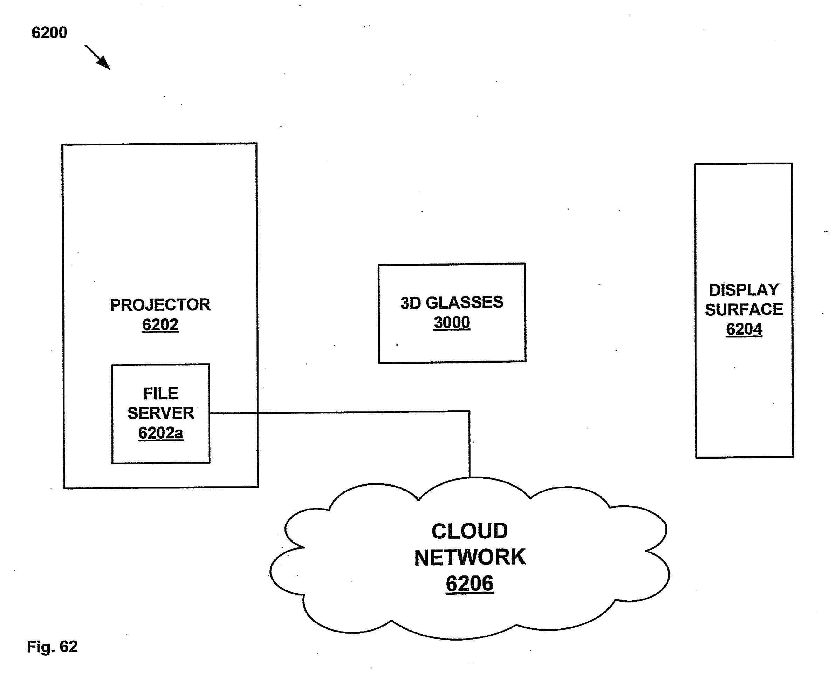

Referring now to Fig. 62, an exemplary embodiment of a system 6200 for viewing 3D images on a display comprises a projector 6202 for transmitting images for the left and right eyes of a user and a synchronization signal onto a display surface 6204. A user of system 6200 may wear the 3D glasses 104, 1800, 3000, or 6000, which may or may not be further modified in accordance with the teaching of the embodiments of Figs. 58-61, to thereby controllably permit the left and right eye images to be presented to the left and right eyes of the user.

In an exemplary embodiment, the projector 6202 may be the commercially available Texas Instruments 3D DLP projector. As will be recognized by persons having ordinary skill in the art, the Texas Instruments 3D DLP projector operates by dividing a projector's 120 Hz output between the left and right eye, 60 Hz each, with synchronization data coming through during ultra-brief dark times between active data transmission. In this manner, images for the left and right eyes of the viewer are presented and interleaved with synchronization signals for directing the 3D glasses 3000 to open the left or right viewing shutters.

In an exemplary embodiment, the Texas Instruments ("TI") 3D DLP projector may be a 1-chip DLP projection system and/or a 3-chip DLP projection system.

In an exemplary embodiment, the synchronization signals generated by the projector 6202 include electromagnetic energy that is predominantly within the visible spectrum.

In an exemplary embodiment, the projector 6202 includes a TI 3-chip DLP projection system and a built in file server 6202a that may be operably coupled to a cloud, or other type of, network 6206 for distributing the 3D images to the projector 6202.

In an exemplary embodiment, the system 6200 is further adapted to provide support for one or more of the following 3D formats: 1) side-by-side; 2) over-under; 3) checkerboard; 4) page flipping; and 5) multi-view video coding. In an exemplary embodiment, the system 6200 is further adapted to provide images to the user of the system at the rate of 96 frames per second ("FPS"), 120 FPS, or 144 FPS.

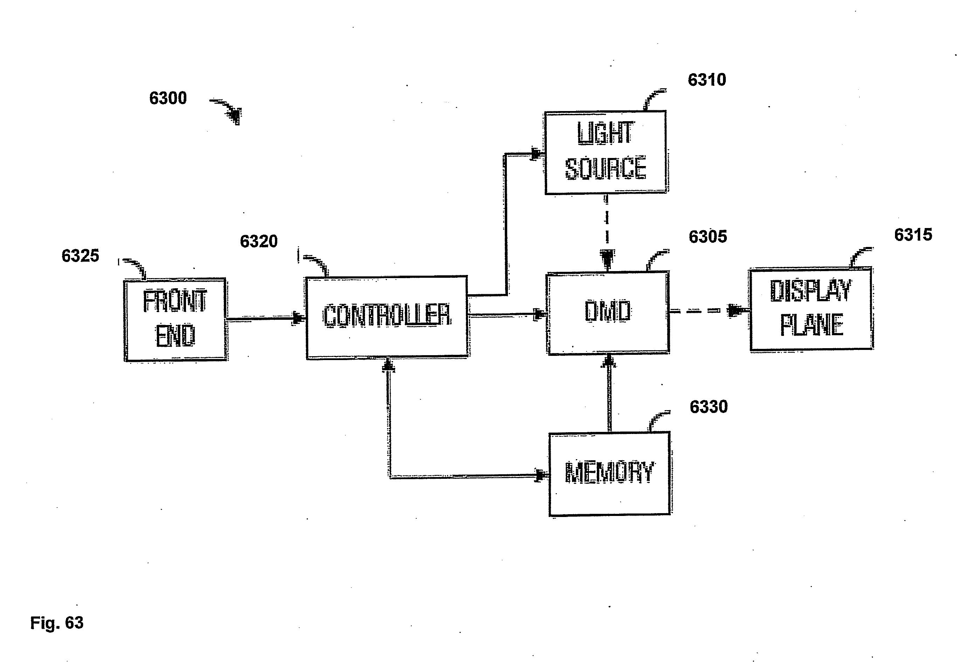

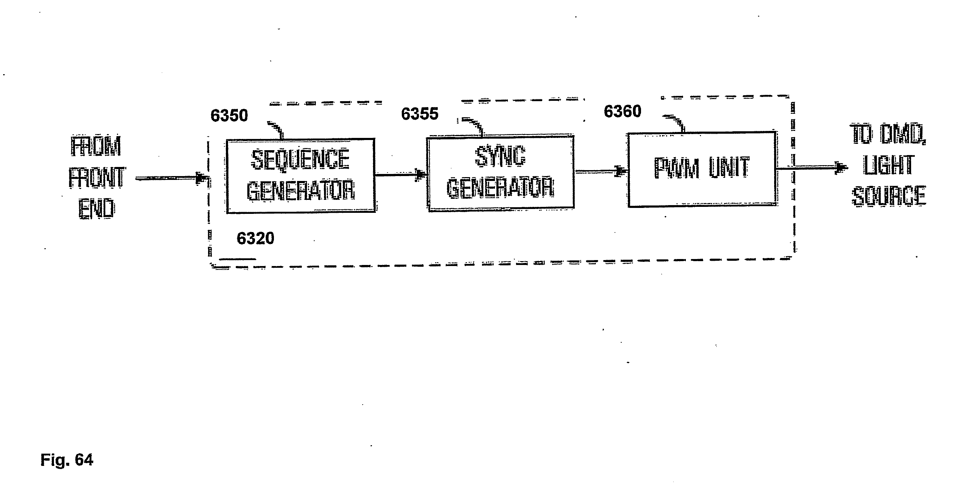

Referring now to Figs. 63 and 64, an exemplary embodiment of a projection display system 6300 includes a spatial light modulator, more specifically an array of light modulators 6305, wherein individual light modulators in the array of light modulators 6305 assume a state corresponding to image data for an image being displayed by the display system 6300. The array of light modulators 6305 may, for example, include a digital micro mirror device ("DMD") with each light modulator being a positional micro mirror. For example, in display systems where the light modulators in the array of light modulators 6305 are micro mirror light modulators, light from a light source 6310 may be reflected away from or towards a display plane 6315. A combination of the reflected light from the light modulators in the array of light modulators 6305 produces an image corresponding to the image data.

A controller 6320 coordinates the loading of the image data into the array of light modulators 6305, controlling the light source 6310, and so forth. The controller 6320 may be coupled to a front end unit 6325, which may be responsible for operations such as converting analog input signals into digital, Y/C separation, automatic chroma control, automatic color killer, and so forth, on an input video signal. The front end unit 6325 may then provide the processed video signal, which may contain image data from multiple streams of images to be displayed to the controller 6320. For example, when used as a stereoscopic display system, the front end unit 6325 may provide to the controller 6320 image data from two streams of images, each stream containing images with different perspectives of the same scene. Alternatively, when used as multi-view display system, the front end unit 6325 may provide to the controller 6320 image data from multiple streams of images with each stream containing images of unrelated content. The controller 6320 may be an application specific integrated circuit ("ASIC"), a general purpose processor, and so forth, and may be used to control the general operation of the projection display system 6300. A memory 6330 may be used to store image data, sequence color data, and various other information used in the displaying of images.

As illustrated in Fig. 64, the controller 6320 may include a sequence generator 6350, a synch signal generator 6355, and a pulse-width modulation (PWM) unit 6360. The sequence generator 6350 may be used to generate color sequences that specify the colors and durations to be produced by the light source 6310 as well as control the image data that is loaded into the array of light modulators 6305. In addition to generating the color sequences, the sequence generator 6350 may have the capability of reordering and reorganizing the color sequence (and portions thereof) to help reduce noise (PWM noise) that may negatively impact image quality.

The synch signal generator 6355 may produce signals that enable 3D glasses, which may, for example, be the 3D glasses 104, 1800, 3000 or 6000, to synchronize with the images being displayed. The synch signals may be inserted into the color sequences produced by the sequence generator 6350 and then may be displayed by the projection display system 6300. According to an embodiment, because the synch signals produced by the synch signal generator 6355 are displayed by the projection display system 6300, the synch signals generally are inserted into the color sequences during a time when the 3D glasses, which may, for example, include the 3D glasses,104, 1800, 3000 or 6000, are in a block view state, for example, when both shutters of the 3D glasses, which may, for example, include the 3D glasses 104, 1800, 3000 or 6000, are in a closed state. This may allow for the synch signal to be detected by the 3D glasses, which may, for example, include the 3D glasses, 104, 1800, 3000 or 6000, but prevent the user from actually seeing the synch signal. The color sequence containing the synch signals may be provided to the PWM unit 6360, which may convert the color sequence into a PWM sequence to be provided to the array of light modulators 6305 and the light source 6310,

The images projected by the projection display system 6300 may be viewed by users wearing, for example, the 3D glasses, 104, 1800, 3000 or 6000.

Other examples of viewer mechanisms may be goggles, glasses, helmets with eye pieces, and so forth, modified in accordance with the teachings of the present exemplary embodiments. Such viewer mechanisms may contain a sensor(s) that may allow the viewer mechanism to detect the synch signals displayed by the projection display system 6300. The viewer mechanisms may utilize a variety of shutters to enable and disable the user from seeing the images displayed by the projection display system. The shutters may be electronic, mechanical, liquid crystal, and so forth. An electronic shutter may block light or pass light or based on a polarity of an electric potential applied change a polarity of an electronic polarizer. A liquid crystal shutter may operate in a similar manner, with the electric potential changing the orientation of liquid crystals. A mechanical shutter may block or pass light when a motor, for example, moves mechanical light blocks in and out of position.

There may be an advantage if the projection display system 6300 operates at a fixed rate based on a crystal reference, for example. The frame rate of the signal input to the projection display system may be converted to match the frame rate of the projection display system 6300. The conversion process typically drops and/or adds lines to make up any timing difference. Eventually, an entire frame may need to be repeated and/or dropped. An advantage from the viewer mechanism's point of view may be that it is easier to track a dark time of a PWM sequence and synchronize the synch signals. Furthermore, it may enable the viewer mechanism to filter out disturbances and remain locked to the PWM sequence for an extended amount of time. This may occur when the viewer mechanism fails to detect the synch signal. For example, this may occur under normal operating conditions if a detector on the viewer mechanism is blocked or oriented away from the display plane.

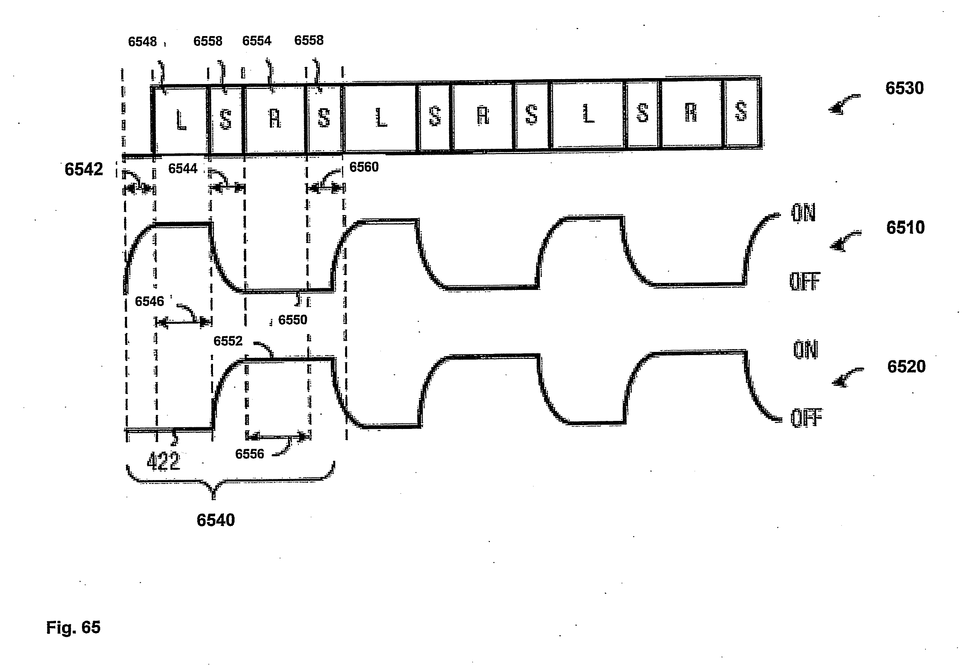

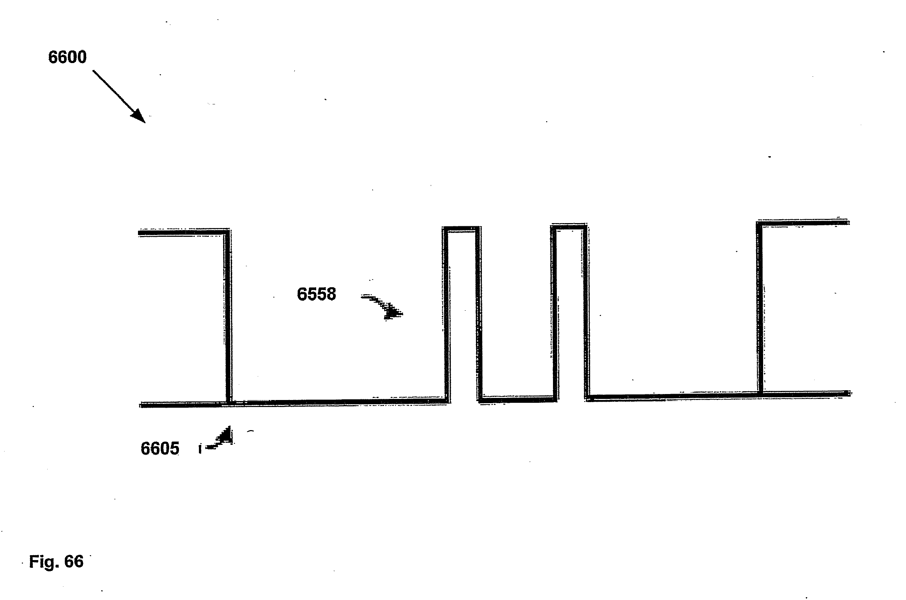

Referring now to Figs. 65 and 66, exemplary shutter states for a left eye, 6510, and a right eye, 6520, of a viewer mechanism, which may, for example, be the 3D glasses, 104, 1800, 3000 or 6000, which may or may not be modified in accordance with the teachings of Figs. 58-61, and a high level view of a PWM sequence, 6530, produced by a PWM unit, for example. In an exemplary embodiment, only one of the two shutters of the viewer mechanism, which may, for example, be the 3D glasses, 104, 1800, 3000 or 6000, which may or may not be modified in accordance with the teachings of Figs. 58-61, should be in an on state at any given time. However, in an exemplary embodiment, both shutters of the viewer mechanism, which may, for example, be the 3D glasses, 104, 1800, 3000 or 6000, which may or may not be modified in accordance with the teachings of Figs. 58-61, may simultaneously be in an off or on state.

In an exemplary embodiment, a single cycle 6540 of the shutter states for the viewer mechanism, which may, for example, be the 3D glasses, 104, 1800, 3000 or 6000, which may or may not be modified in accordance with the teachings of Figs. 58-61, includes the single cycles of the shutter states for the left eye, 6510, and the right eye, 6520. At the beginning of the cycle 6540, the left eye shutter is in transition from an off state to an on state, an interval 6542, illustrates a time span wherein the state transition occurs. After a period of time, the left eye shutter transitions back to an off state during a state transition interval 6544. As the left eye shutter transitions from the on state to the off state, the shutter state for the right eye begins its transition from the off state to the on state during the state transition interval 6544.

While the left eye shutter is on during an interval 6546, image data related to an image to be viewed by the left eye may be displayed. Therefore, the PWM sequence contains control instructions to display the image intended for the left eye.

A state diagram 6530 includes a box 6548 representing PWM control instructions for displaying a left eye image, encompassing the interval 6546. The interval 6546 generally starts after the left eye shutter completes its transition to the on state. This may be due to a finite transition time between the on and off states of the viewer mechanism, which may, for example, be the 3D glasses, 104, 1800, 3000 or 6000, which may or may not be modified in accordance with the teachings of Figs. 58-61. A similar delay occurs after the left eye shutter begins its transition to the off state. Then, when the left eye shutter turns off and the right eye shutter turns on, for example, during pulses 6550 and 6552, image data related to an image to be viewed by the right eye may be displayed. The state diagram 6530 includes a box 6554 representing PWM control instructions for displaying a right eye image, encompassing an interval 6556.

In the state diagram 6530, the times between the PWM sequences for the left eye, 6548, and the PWM sequences for the right eye, 6554, may normally be left blank without any PWM control instructions. For example boxes 6558 occurring during shutter transition times, such as intervals 6544 and 6560. This may be done, for example, to prevent the right eye from seeing faint left eye data as the left eye shutter transitions from the on state to the off state, during the interval 6544, and the left eye from seeing faint right eye data as the right eye shutter transitions from the on state to the off state, during the interval 6560. These time intervals may then be used to display the synch signals. Rather than being blank without any PWM control instructions, the times represented by boxes 6558 may contain PWM control instructions necessary to display the synch signals, along with any data and operating mode information that the synch signals may need to provide.

As illustrated in Fig. 66, during the time interval of the box 6558, an exemplary synch signal 6600 may be transmitted and displayed that includes a simple timing synch signal that may be used to signify when to start a next cycle of the shutter states. For example, when the viewer mechanism, which may, for example, be the 3D glasses, 104, 1800, 3000 or 6000, which may or may not be modified in accordance with the teachings of Figs. 58-61, detects the synch signal, it may begin a left eye shutter transition from the off state to the on state, hold for a specified, potentially preprogrammed, amount of time, begin a left eye shutter transition from the on state to the off state, begin a right eye shutter transition from the off state to the on state, hold for a specified, potentially preprogrammed, amount of time, and begin a right eye shutter transition from the on state to the off state. In an exemplary embodiment, the left eye shutter and the right eye shutter transitions may occur simultaneously or be staggered as required.

The synch signal 6600 illustrated in Fig. 66, which may occur during box 6558, may, for example, start approximately 270 microseconds after the PWM control sequence ends at about time 6605. The synch signal 6600 may, for example, then transition to a high state for about 6 microseconds and then transition back to a low state for about 24 microseconds. The synch signal 6600 may, for example, then transition back to the high state for about 6 microseconds and then transition back to the low state until the end of the box 6558.

Potentially more complex synch signals may be displayed. For example, the synch signal may specify the shutter on time duration, the time when the transitions should start, which eye shutter should transition first, the operating mode of the display system, such as three-dimensional images or multi-view, for example, control data, information, and so forth. Furthermore, the synch signal may be encoded so that only viewer mechanisms, which may, for example, be the 3D glasses, 104, 1800, 3000 or 6000, which may or may not be modified in accordance with the teachings of Figs. 58-61, that are authorized will be able to process the information contained in the synch signal. The overall complexity of the synch signals may be dependent on factors that include: required function of synch signal, desire to maintain control over peripherals used with the display system, available synch signal signaling duration, and so forth.

The synch signal may be displayed as any color producible by a display system. In display systems that utilize a fixed color sequence, such as a display system using a color wheel, a single color may be used to display the synch signals. For example, in a seven-color multiprimary display system that uses the colors red, green, blue, cyan, magenta, yellow, and white, any of the colors may be used to display the synch signals. However, in an exemplary embodiment, the color may be the color yellow since it is one of the brighter colors and its use may have less of a negative effect on the displaying of the other colors. Alternatively, a dimmer color, such as blue, may be used to display the synch signal. The use of the color blue may be preferred since the use of the dimmer color may make the synch signals less detectable by viewers. Although it is preferred that a single color be used to display the synch signals, multiple colors may be used. For example, it may be possible to encode information in the colors used to display the synch signal. In a display system that does not utilize a fixed color sequence, any color may be used. Additionally, the discussion of the seven-color multiprimary display system, other display systems with a different number of display colors may be used, and should not be construed as being limiting to either the scope or the spirit of the present exemplary embodiments.

In an exemplary embodiment, in order to permit the display of the synch signal and to keep the viewer from detecting the display of the synch signal, the synch signal may be displayed when both the left eye shutter and the right eye shutter are in the off state. As illustrated in Fig. 65, the state diagram 6530 displays a box 6558 representing PWM control instructions for displaying a synch signal, contained in intervals, 6544 and 6560. The duration of the interval, 6544 and 6560, may be dependent on factors such as the complexity of the synch signal, the presence of any encoding of the synch signal, the data carried in the synch signal, and so forth. Additionally, the duration of the intervals, 6544 and 6560, may be dependent on factors such as the shutter transition time. For example, if the shutter transition time is long, then the intervals, 6544 and 6560, should also be long to ensure that both shutters are closed prior to the display of the synch signal. Alternatively, the synch signal does not need to be generated for the entire interval represented by box 6558. Although it is desired that the viewer not be able to detect the synch signal, the display of the synch signal may be detectable as a moderate increase in the brightness of the display system's black level.

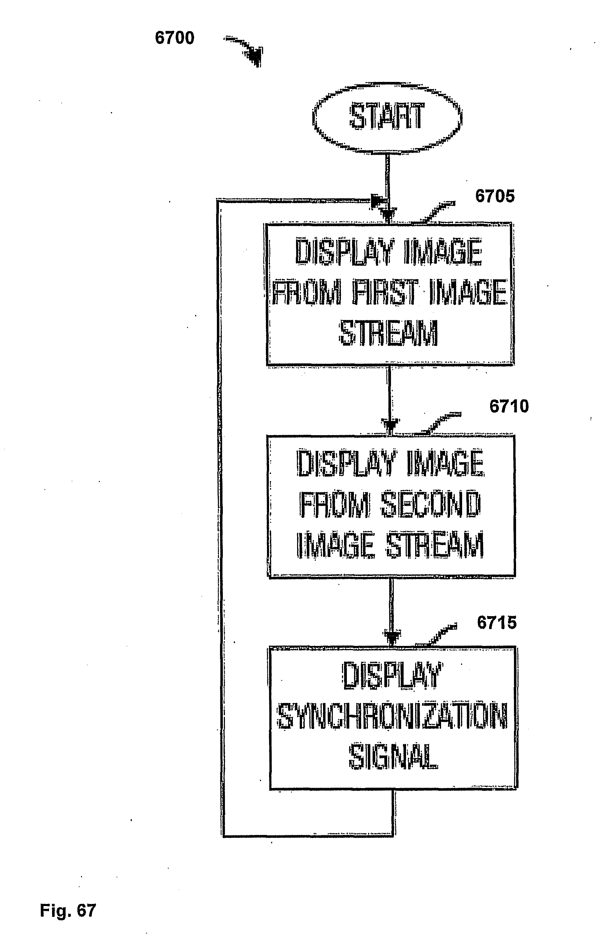

Referring now to Fig. 67, in an exemplary embodiment, during the operation of the system 6300, the system implements a method 6700 in which a first image from a first image stream is displayed in 6705. In an exemplary embodiment, in 6705, the image in its entirety, progressive or interlaced, is displayed. However, restrictions, such as display duration restrictions, image quality restrictions, and so forth, may require that a portion of the first image be displayed. For example, a single field of the first image may be displayed. After the first image from the first image stream has been displayed, then a second image from a second image stream may be displayed in 6710. Again, the entire second image may be displayed or only a portion of the image may be displayed. However, the amount of the first image displayed and the amount of the second image displayed preferably are substantially the same. Alternatively, the times may be different.

With the first image and the second image displayed, then the projection display system 6300 may display a synch signal in 6715. The displaying of the synch signal may occur at any time, however, and an exemplary time for displaying the synch signal may be when viewers of the projection display system may not be able to visually detect the synch signal. For example, the viewers may be using electronically shuttered goggles, then the synch signal may be displayed when the shutter over each eye is closed. The projection display system 6300 may determine when the shutters are closed because, for example, the projection display system generally specifies when the shutters are to be closed, either during an initial configuration operation, in a previously displayed synch signal, or in a manufacturer specified duration that is known to both the projection display system and the viewer mechanism, which may, for example, be the 3D glasses, 104, 1800, 3000 or 6000, which may or may not be modified in accordance with the teachings of Figs. 58-61. The projection display system 6300, however, does not necessarily need to determine when the shutters are closed for proper operation. Generally, as long as the synch signals are displayed at the beginning or the end of the period without PWM control sequences intended for either eye, such as box 6558, manufacturers of the viewer mechanism, which may, for example, be the 3D glasses, 104, 1800, 3000 or 6000, which may or may not be modified in accordance with the teachings of Figs. 58-61, may time the shutter transitions to mask out the synch signals. Once the projection display system 6300 has displayed the synch signal in 6715, the projection display system may return to displaying images (or parts of images) from the first and the second image streams.

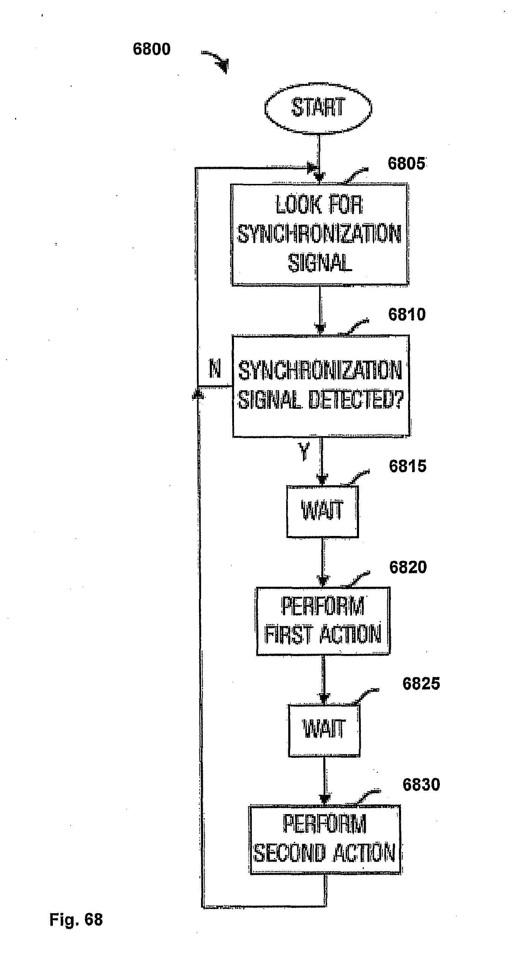

Referring now to Fig. 68, in an exemplary embodiment, during the operation of the system 6300, the system implements a method 6800 in which, in 6805 and 6810, the viewer mechanism, which may, for example, be the 3D glasses, 104, 1800, 3000 or 6000, which may or may not be modified in accordance with the teachings of Figs. 58-61, looks for the synch signal, in 6805, and checks to see if a signal that it detected is the synch signal, in 6810. If the signal is not the synch signal, then the viewer mechanism, which may, for example, be the 3D glasses, 104, 1800, 3000 or 6000, which may or may not be modified in accordance with the teachings of Figs. 58-61, may return to looking for the synch signal in 6805.

If the signal is the synch signal, then the viewer mechanism, which may, for example, be the 3D glasses, 104, 1800, 3000 or 6000, which may or may not be modified in accordance with the teachings of Figs. 58-61, waits for a specified amount of time, in 6815, and then performs a specified first action, in 6820, such as change state transition. The viewer mechanism, which may, for example, be the 3D glasses, 104, 1800, 3000 or 6000, which may or may not be modified in accordance with the teachings of Figs. 58-61, may then wait for another specified amount of time, in 6825, and then perform another specified second action in 6830. With the specified second action complete, the viewer mechanism, which may, for example, be the 3D glasses, 104, 1800, 3000 or 6000, which may or may not be modified in accordance with the teachings of Figs. 58-61, may return to looking for the synch signal in 6805.

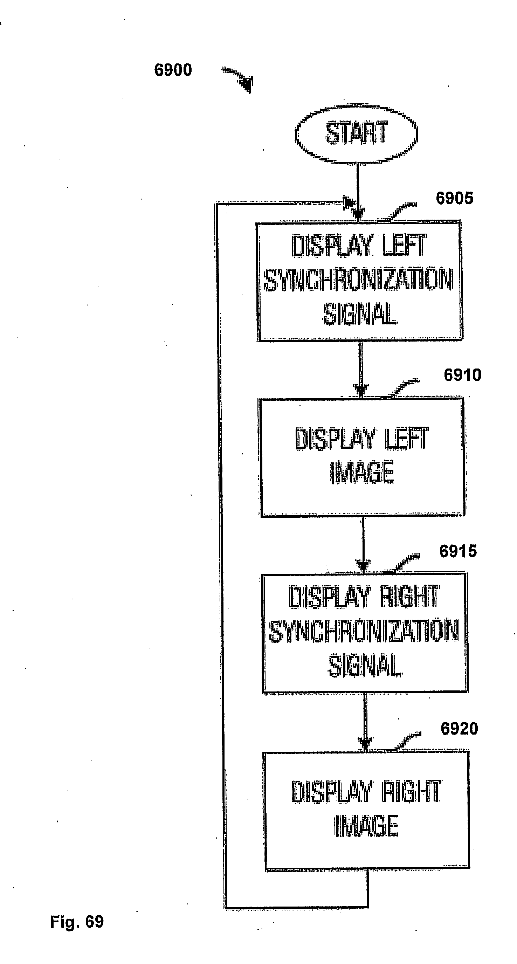

Referring now to Fig. 69, in an exemplary embodiment, during the operation of the system 6300, the system implements a method 6900 in which, in 6905, a synch signal associated with a left eye image is displayed, in 6905, followed by displaying the left eye image, in 6910. After displaying the left eye image, in 6710, the display system 6300 may display a synch signal associated with a right eye image, in 6915, followed by displaying the right eye image, in 6920. In an exemplary embodiment, the method 6900 may be used in a display system wherein the detection of the synch signals may not be ensured. In such a display system, previous synch signals may not be used to determine when to transition and a transition occurs only when an associated synch signal is detected.

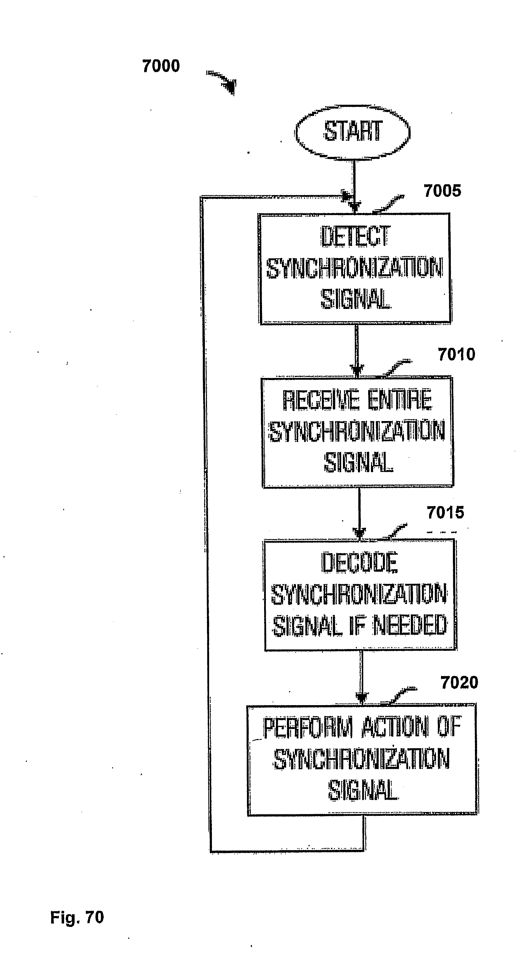

Referring now to Fig. 70, in an exemplary embodiment, during the operation of the system 6300, the system implements a method 7000 in which, in 7005, a synch signal is detected. The detection of the synch signal, in 7005, may be aided if the synch signal contains a rarely occurring start sequence and/or stop sequence. Additionally, if the synch signal is displayed only when the viewer mechanism, which may, for example, be the 3D glasses, 104, 1800, 3000 or 6000, which may or may not be modified in accordance with the teachings of Figs. 58-61, is in a specified state, such as the shutters of the viewer mechanism being closed, then the control hardware in the viewer mechanism may be configured to attempt synch signal detection when it is in the specified state. Once the viewer mechanism, which may, for example, be the 3D glasses, 104, 1800, 3000 or 6000, which may or may not be modified in accordance with the teachings of Figs. 58-61, detects the synch signal, the synch signal may be received in its entirety in 7010. If necessary, the synch signal may be decoded, in 7015. With the synch signal received and decoded, if needed, the viewer mechanism, which may, for example, be the 3D glasses, 104, 1800, 3000 or 6000, which may or may not be modified in accordance with the teachings of Figs. 58-61, may perform the action specified either by the synch signal or in the synch signal in 7020.

In an exemplary embodiment, the teachings of the system described above with reference to Figs. 63-70 may be incorporated into, in whole or in part, and/or substituted for all or some of, the system 6200.

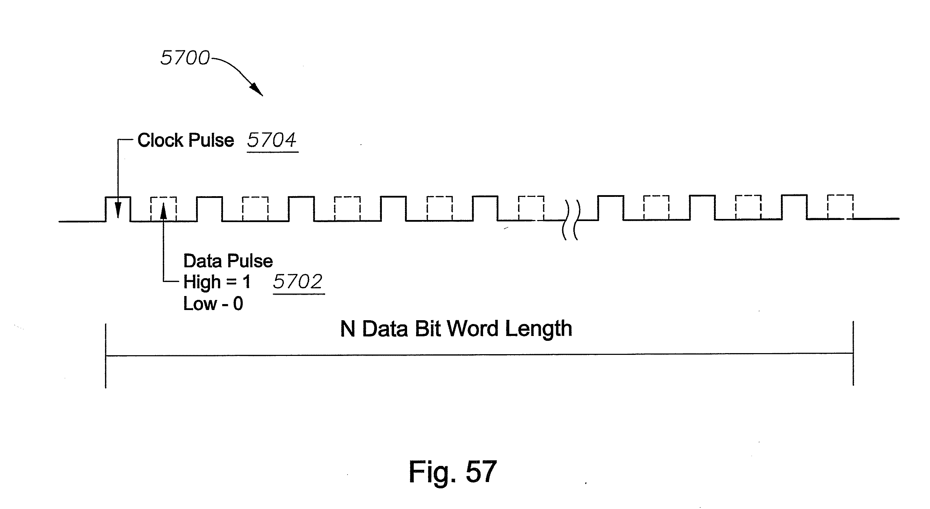

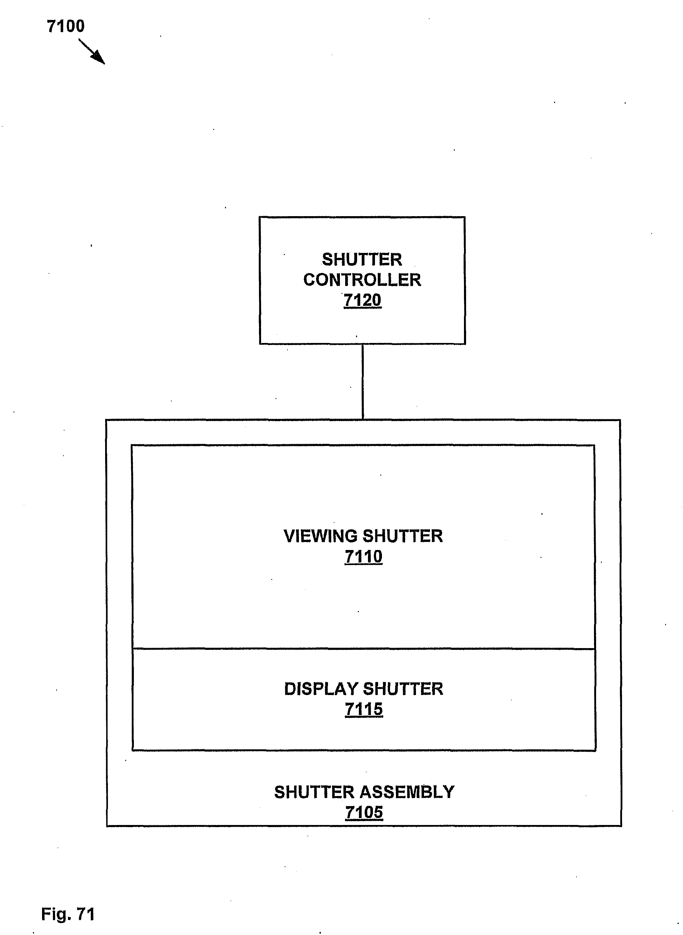

Referring now to Fig. 71, an exemplary embodiment of a shutter system 7100, that may, for example, be used in combination with one or more aspects of the exemplary embodiments described above with reference to Figs. 1-70, includes a shutter assembly 7105, having one or more viewing shutter elements 7110 and one or more display shutter elements 7115, that is operably coupled to a shutter controller 7120.

In an exemplary embodiment, the viewing shutter 7110 may be one or more of the shutters, 106, 108, 1802, 1804, 3002 and/or 3004. In this manner, the viewing shutter 7110, under the control of the shutter controller 7120 may be controllably transmissive of light.

In an exemplary embodiment, the display shutter 7115 may be controlled by the shutter controller 7120 to display information, which may, for example, be textual and/or graphical and/or video, to a user. In an exemplary embodiment, the display shutter 7115 may be a conventional commercially available liquid crystal such as, for example, an organic light emitting device ("OLED"). In an exemplary embodiment, the display shutter 7115 may or may not be optically transmissive during operation.

In an exemplary embodiments, the shutter controller 7120 may be a programmable controller, an ASIC, an analog controller, a digital controller, a distributed control system and/or may incorporate one or more aspects of the design and operation of the controllers, 114, 116, 118, 1806, 1808, 1810, 3006, 3008, 3010 and/or 3012.

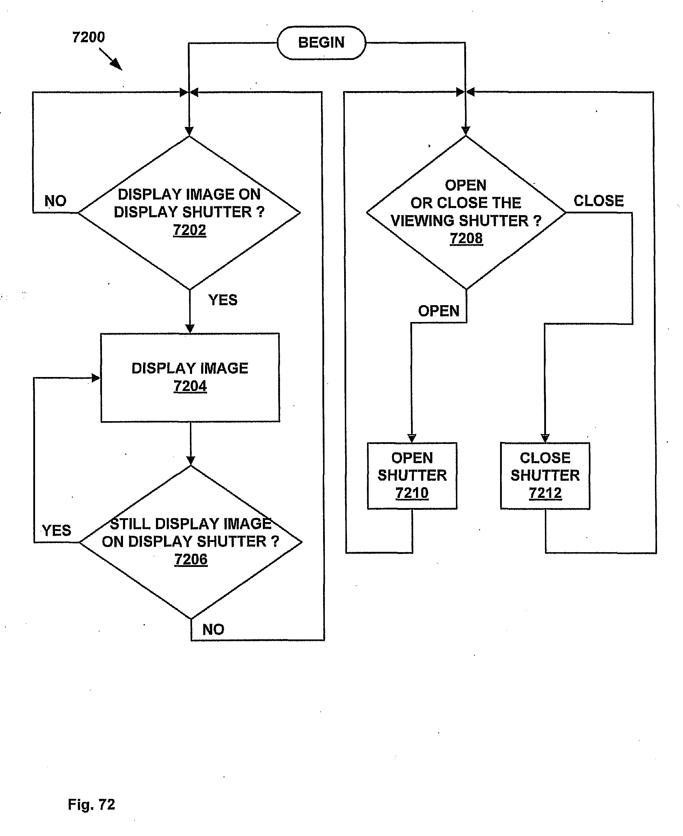

Referring now to Fig. 72, in an exemplary embodiment, during the operation of the shutter system 7100, the system may implement a method 7200 of operation in which, in 7202, the system determines if an image should be displayed on the display shutter 7115. In an exemplary embodiment, the image may include one or more of text, graphics, and/or video images.

If the system 7100 determines that an image should be displayed on the display shutter 7115 in 7202, then the system, in 7204, displays the image on the display shutter.

In 7206, the system 7100 determines if the image should still be displayed on the display shutter 7115.

Thus, the system 7100, in 7202, 7204 and 7206, controllably displays images on the display shutter 7115.

In 7208, the system 7100 determines if the viewing shutter 7110 should be opened or closed. If the viewing shutter 7110 should be opened, then the view shutter is opened in 7210. Alternatively, if the viewing shutter 7110 should be closed, then the view shutter is closed in 7212.

In an exemplary embodiment, the opening and closing of the viewing shutter 7110 is synchronized with the display of an image associated with the particular viewing eye of the user corresponding to the shutter assembly 7105 of the system 7100.

In an exemplary embodiment, during operation of the system the display shutter 7115 may or may not be opened or closed in synchronization with the opening and closing of the viewing shutter 7110.

In an exemplary embodiment, the system 7100 may be used in a system having a plurality of 3D glasses such as, for example, the 3d glasses 104, 1800, 3000 and/or 6000 with each of the 3D glasses including left and/or right shutter assemblies that may include the shutter assembly 7105. In an exemplary embodiment, in such a system with a plurality of 3D glasses, the users of the 3D glasses may each have images displayed on their respective display shutters 7115 that may be unique and/or customized to the particular user of the corresponding 3D glasses.

A liquid crystal shutter has a liquid crystal that rotates by applying an electrical voltage to the liquid crystal and then the liquid crystal achieves a light transmission rate of at least twenty-five percent in less than one millisecond. When the liquid crystal rotates to a point having maximum light transmission, a device stops the rotation of the liquid crystal at the point of maximum light transmission and then holds the liquid crystal at the point of maximum light transmission for a period of time. A computer program installed on a machine readable medium may be used to facilitate any of these embodiments.

A system presents a three dimensional video image by using a pair of liquid crystal shutter glasses that have a first and a second liquid crystal shutter, and a control circuit adapted to open the first liquid crystal shutter. The first liquid crystal shutter can open to a point of maximum light transmission in less than one millisecond, at which time the control circuit may apply a catch voltage to hold the first liquid crystal shutter at the point of maximum light transmission for a first period of time and then close the first liquid crystal shutter. Next, the control circuit opens the second liquid crystal shutter, wherein the second liquid crystal shutter opens to a point of maximum light transmission in less than one millisecond, and then applies a catch voltage to hold the second liquid crystal shutter at the point of maximum light transmission for a second period of time, and then close the second liquid crystal shutter. The first period of time corresponds to the presentation of an image for a first eye of a viewer and the second period of time corresponds to the presentation of an image for a second eye of a viewer. A computer program installed on a machine readable medium may be used to facilitate any of the embodiments described herein.

In an exemplary embodiment, the control circuit is adapted to use a synchronization signal to determine the first and second period of time. In an exemplary embodiment, the catch voltage is two volts.

In an exemplary embodiment, the point of maximum light transmission transmits more than thirty two percent of light.

In an exemplary embodiment, an emitter provides a synchronization signal and the synchronization signal causes the control circuit to open one of the liquid crystal shutters. In an exemplary embodiment, the synchronization signal comprises an encrypted signal. In an exemplary embodiment, the control circuit of the three dimensional glasses will only operate after validating an encrypted signal.

In an exemplary embodiment, the control circuit has a battery sensor and may be adapted to provide an indication of a low battery condition. The indication of a low battery condition may be a liquid crystal shutter that is closed for a period of time and then open for a period of time.

In an exemplary embodiment, the control circuit is adapted to detect a synchronization signal and begin operating the liquid crystal shutters after detecting the synchronization signal.

In an exemplary embodiment, the encrypted signal will only operate a pair of liquid crystal glasses having a control circuit adapted to receive the encrypted signal.

In an exemplary embodiment, a test signal operates the liquid crystal shutters at a rate that is visible to a person wearing the pair of liquid crystal shutter glasses.

In an exemplary embodiment, a pair of glasses has a first lens that has a first liquid crystal shutter and a second lens that has a second liquid crystal shutter. Both liquid crystal shutters have a liquid crystal that can open in less than one millisecond and a control circuit that alternately opens the first and second liquid crystal shutters. When the liquid crystal shutter opens, the liquid crystal orientation is held at a point of maximum light transmission until the control circuit closes the shutter.

In an exemplary embodiment, a catch voltage holds the liquid crystal at the point of maximum light transmission. The point of maximum light transmission may transmit more than thirty two percent of light.

In an exemplary embodiment, an emitter that provides a synchronization signal and the synchronization signal causes the control circuit to open one of the liquid crystal shutters. In some embodiments, the synchronization signal includes an encrypted signal. In an exemplary embodiment, the control circuit will only operate after validating the encrypted signal. In an exemplary embodiment, the control circuit includes a battery sensor and may be adapted to provide an indication of a low battery condition. The indication of a low battery condition could be a liquid crystal shutter that is closed for a period of time and then open for a period of time. In an exemplary embodiment, the control circuit is adapted to detect a synchronization signal and begin operating the liquid crystal shutters after it detects the synchronization signal.

The encrypted signal may only operate a pair of liquid crystal glasses that has a control circuit adapted to receive the encrypted signal.

In an exemplary embodiment, a test signal operates the liquid crystal shutters at a rate that is visible to a person wearing the pair of liquid crystal shutter glasses.

In an exemplary embodiment, a three dimensional video image is presented to a viewer by using liquid crystal shutter eyeglasses, opening the first liquid crystal shutter in less than one millisecond, holding the first liquid crystal shutter at a point of maximum light transmission for a first period of time closing the first liquid crystal shutter, then opening the second liquid crystal shutter in less than one millisecond, and then holding the second liquid crystal shutter at a point of maximum light transmission for a second period of time. The first period of time corresponds to the presentation of an image for a first eye of a viewer and the second period of time corresponds to the presentation of an image for a second eye of a viewer.

In an exemplary embodiment, the liquid crystal shutter is held at the point of maximum light transmission by a catch voltage. The catch voltage could be two volts. In an exemplary embodiment, the point of maximum light transmission transmits more than thirty two percent of light.

In an exemplary embodiment, an emitter provides a synchronization signal that causes the control circuit to open one of the liquid crystal shutters. In some embodiments, the synchronization signal comprises an encrypted signal.

In an exemplary embodiment, the control circuit will only operate after validating the encrypted signal.

In an exemplary embodiment, a battery sensor monitors the amount of power in the battery. In an exemplary embodiment, the control circuit is adapted to provide an indication of a low battery condition. The indication of a low battery condition may be a liquid crystal shutter that is closed for a period of time and then open for a period of time.

In an exemplary embodiment, the control circuit is adapted to detect a synchronization signal and begin operating the liquid crystal shutters after detecting the synchronization signal. In an exemplary embodiment, the encrypted signal will only operate a pair of liquid crystal glasses that has a control circuit adapted to receive the encrypted signal.

In an exemplary embodiment, a test signal operates the liquid crystal shutters at a rate that is visible to a person wearing the pair of liquid crystal shutter glasses.

In an exemplary embodiment, a system for providing three dimensional video images may include a pair of glasses that has a first lens having a first liquid crystal shutter and a second lens having a second liquid crystal shutter. The liquid crystal shutters may have a liquid crystal and an may be opened in less than one millisecond. A control circuit may alternately open the first and second liquid crystal shutters, and hold the liquid crystal orientation at a point of maximum light transmission until the control circuit closes the shutter. Furthermore, the system may have a low battery indicator that includes a battery, a sensor capable of determining an amount of power remaining in the battery, a controller adapted to determine whether the amount of power remaining in the battery is sufficient for the pair of glasses to operate longer than a predetermined time, and an indicator to signal a viewer if the glasses will not operate longer than the predetermined time. In an exemplary embodiment, the low battery indicator is opening and closing the left and right liquid crystal shutters at a predetermined rate. In an exemplary embodiment, the predetermined amount of time is longer than three hours. In an exemplary embodiment, the low battery indicator may operate for at least three days after determining that the amount of power remaining in the battery is not sufficient for the pair of glasses to operate longer than the predetermined amount of time. In an exemplary embodiment, the controller may determine the amount of power remaining in the battery by measuring time by the number of synchronization pulses remaining in the battery.

In an exemplary embodiment for providing a three dimensional video image, the image is provided by having a pair of three dimensional viewing glasses that includes a first liquid crystal shutter and a second liquid crystal shutter, opening the first liquid crystal shutter in less than one millisecond, holding the first liquid crystal shutter at a point of maximum light transmission for a first period of time, closing the first liquid crystal shutter and then opening the second liquid crystal shutter in less than one millisecond, holding the second liquid crystal shutter at a point of maximum light transmission for a second period of time. The first period of time corresponds to the presentation of an image for a first eye of the viewer and the second period of time corresponds to the presentation of an image for the second eye of the viewer. In this exemplary embodiment, the three dimensional viewing glasses sense the amount of power remaining in the battery, determine whether the amount of power remaining in the battery is sufficient for the pair of glasses to operate longer than a predetermined time, and then indicate a low-battery signal to a viewer if the glasses will not operate longer than the predetermined time. The indicator may be opening and closing the lenses at a predetermined rate. The predetermined amount of time for the battery to last could be more than three hours. In an exemplary embodiment, the low battery indicator operates for at least three days after determining the amount of power remaining in the battery is not sufficient for the pair of glasses to operate longer than the predetermined amount of time. In an exemplary embodiment, the controller determines the amount of power remaining in the battery by measuring time by the number of synchronization pulses that the battery can last for.

In an exemplary embodiment, for providing three dimensional video images, the system includes a pair of glasses comprising a first lens having a first liquid crystal shutter and a second lens having a second liquid crystal shutter, the liquid crystal shutters having a liquid crystal and an opening time of less than one millisecond. A control circuit may alternately open the first and second liquid crystal shutters, and the liquid crystal orientation is held at a point of maximum light transmission until the control circuit closes the shutter. Furthermore, a synchronization device that includes a signal transmitter that sends a signal corresponding to an image presented for a first eye, a signal receiver sensing the signal, and a control circuit adapted to open the first shutter during a period of time in which the image is presented for the first eye. In an exemplary embodiment, the signal is an infrared light.

In an exemplary embodiment, the signal transmitter projects the signal toward a reflector, the signal is reflected by the reflector, and the signal receiver detects the reflected signal. In some embodiments, the reflector is a movie theater screen. In an exemplary embodiment, the signal transmitter receives a timing signal from an image projector such as the movie projector. In an exemplary embodiment, the signal is a radio frequency signal. In an exemplary embodiment, the signal is a series of pulses at a predetermined interval. In an exemplary embodiment, where the signal is a series of pulses at a predetermined interval the first predetermined number of pulses opens the first liquid crystal shutter and a second predetermined number of pulses opens the second liquid crystal shutter.

In an exemplary embodiment for providing a three dimensional video image, the method of providing the image includes: having a pair of three dimensional viewing glasses comprising a first liquid crystal shutter and a second liquid crystal shutter, opening the first liquid crystal shutter in less than one millisecond, holding the first liquid crystal shutter at a point of maximum light transmission for a first period of time, closing the first liquid crystal shutter and then opening the second liquid crystal shutter in less than one millisecond, holding the second liquid crystal shutter at a point of maximum light transmission for a second period of time. The first period of time corresponds to the presentation of an image for the left eye of a viewer and the second period of time corresponds to the presentation of an image for the right eye of a viewer. The signal transmitter can transmit a signal corresponding to the image presented for a left eye, and, sensing the signal the three dimensional view glasses can use the signal to determine when to open the first liquid crystal shutter. In an exemplary embodiment, the signal is an infrared light. In an exemplary embodiment, the signal transmitter projects the signal toward a reflector which reflects the signal toward the three dimensional viewing glasses, and the signal receiver in the glasses detects the reflected signal. In an exemplary embodiment, the reflector is a movie theater screen.

In an exemplary embodiment, the signal transmitter receives a timing signal from an image projector. In an exemplary embodiment, the signal is a radio frequency signal. In an exemplary embodiment, the signal could be a series of pulses at a predetermined interval. A first predetermined number of pulses could open the first liquid crystal shutter and a second predetermined number of pulses could open the second liquid crystal shutter.

in an exemplary embodiment of a system for providing three dimensional video images, a pair of glasses has a first lens having a first liquid crystal shutter and a second lens having a second liquid crystal shutter, the liquid crystal shutters having a liquid crystal and an opening time of less than one millisecond. A control circuit alternately opens the first and second liquid crystal shutters, and the liquid crystal orientation is held at a point of maximum light transmission until the control circuit closes the shutter. In an exemplary embodiment, a synchronization system comprising a reflection device located in front of the pair of glasses, and a signal transmitter sending a signal towards the reflection device. The signal corresponds to an image presented for a first eye of a viewer. A signal receiver senses the signal reflected from the reflection device, and then a control circuit opens the first shutter during a period of time in which the image is presented for the first eye.

In an exemplary embodiment, the signal is an infrared light. In an exemplary embodiment, the reflector is a movie theater screen. In an exemplary embodiment, the signal transmitter receives a timing signal from an image projector. The signal may a series of pulses at a predetermined interval. In an exemplary embodiment, the signal is a series of pulses at a predetermined interval and the first predetermined number of pulses opens the first liquid crystal shutter and the second predetermined number of pulses opens the second liquid crystal shutter.

In an exemplary embodiment for providing a three dimensional video image, the image can be provided by having a pair of three dimensional viewing glasses comprising a first liquid crystal shutter and a second liquid crystal shutter, opening the first liquid crystal shutter in less than one millisecond, holding the first liquid crystal shutter at a point of maximum light transmission for a first period of time, closing the first liquid crystal shutter and then opening the second liquid crystal shutter in less than one millisecond, and then holding the second liquid crystal shutter at a point of maximum light transmission for a second period of time. The first period of time corresponds to the presentation of an image for a first eye of a viewer and the second period of time corresponds to the presentation of an image for a second eye of a viewer. In an exemplary embodiment, the transmitter transmits an infrared signal corresponding to the image presented for a first eye. The three dimensional viewing glasses sense the infrared signal, and then use the infrared signal to trigger the opening of the first liquid crystal shutter. In an exemplary embodiment, the signal is an infrared light. In an exemplary embodiment, the reflector is a movie theater screen. In an exemplary embodiment, the signal transmitter receives a timing signal from an image projector. The timing signal could be a series of pulses at a predetermined interval. In some embodiments, a first predetermined number of pulses opens the first liquid crystal shutter and a second predetermined number of pulses opens the second liquid crystal shutter.

In an exemplary embodiment, a system for providing three dimensional video images includes a pair of glasses that have a first lens having a first liquid crystal shutter and a second lens having a second liquid crystal shutter, the liquid crystal shutters having a liquid crystal and an opening time of less than one millisecond. The system could also have a control circuit that alternately opens the first and second liquid crystal shutters, and hold the liquid crystal orientation at a point of maximum light transmission until the control circuit closes the shutter. The system may also have a test system comprising a signal transmitter, a signal receiver, and a test system control circuit adapted to open and close the first and second shutters at a rate that is visible to a viewer. In an exemplary embodiment, the signal transmitter does not receive a timing signal from a projector. In an exemplary embodiment, the signal transmitter emits an infrared signal. The infrared signal could be a series of pulses. In another exemplary embodiment, the signal transmitter emits an radio frequency signal. The radio frequency signal could be a series of pulses.

In an exemplary embodiment of a method for providing a three dimensional video image, the method could include having a pair of three dimensional viewing glasses comprising a first liquid crystal shutter and a second liquid crystal shutter, opening the first liquid crystal shutter in less than one millisecond, holding the first liquid crystal shutter at a point of maximum light transmission for a first period of time, closing the first liquid crystal shutter and then opening the second liquid crystal shutter in less than one millisecond, and holding the second liquid crystal shutter at a point of maximum light transmission for a second period of time. In an exemplary embodiment, the first period of time corresponds to the presentation of an image for a first eye of a viewer and the second period of time corresponds to the presentation of an image for a second eye of a viewer. In an exemplary embodiment, a transmitter could transmit a test signal towards the three dimensional viewing glasses, which then receive the test signal with a sensor on the three dimensional glasses, and then use a control circuit to open and close the first and second liquid crystal shutters as a result of the test signal, wherein the liquid crystal shutters open and close at a rate that is observable to a viewer wearing the glasses.

In an exemplary embodiment the signal transmitter does not receive a timing signal from a projector. In an exemplary embodiment, the signal transmitter emits an infrared signal, which could be a series of pulses. In an exemplary embodiment, the signal transmitter emits an radio frequency signal. In an exemplary embodiment, the radio frequency signal is a series of pulses.

An exemplary embodiment of a system for providing three dimensional video images could include a pair of glasses comprising a first lens that has a first liquid crystal shutter and a second lens that has a second liquid crystal shutter, the liquid crystal shutters having a liquid crystal and an opening time of less than one millisecond, The system could also have a control circuit that alternately opens the first and second liquid crystal shutters, holds the liquid crystal orientation at a point of maximum light transmission and then close the shutter. In an exemplary embodiment, an auto-on system comprising a signal transmitter, a signal receiver, and wherein the control circuit is adapted to activate the signal receiver at a first predetermined time interval, determine if the signal receiver is deceiving a signal from the signal transmitter, deactivate the signal receiver if the signal receiver does not receive the signal from the signal transmitter within a second period of time, and alternately open the first and second shutters at an interval corresponding to the signal if the signal receiver does receive the signal from the signal transmitter.

In an exemplary embodiment, the first period of time is at least two seconds and the second period of time could be no more than 100 milliseconds. In an exemplary embodiment, the liquid crystal shutters remain open until the signal receiver receives a signal from the signal transmitter.

In an exemplary embodiment, a method for providing a three dimensional video image could include having a , pair of three dimensional viewing glasses comprising a first liquid crystal shutter and a second liquid crystal shutter, opening the first liquid crystal shutter in less than one millisecond, holding the first liquid crystal shutter at a point of maximum light transmission for a first period of time, closing the first liquid crystal shutter and then opening the second liquid crystal shutter in less than one millisecond, and holding the second liquid crystal shutter at a point of maximum light transmission for a second period of time. In an exemplary embodiment, the first period of time corresponds to the presentation of an image for a first eye of a viewer and the second period of time corresponds to the presentation of an image for a second eye of a viewer. In an exemplary embodiment, the method could include activating a signal receiver at a first predetermined time interval, determining if the signal receiver is receiving a signal from the signal transmitter, deactivating the signal receiver if the signal receiver does not receive the signal from the signal transmitter within a second period of time, and opening and closing the first and second shutters at an interval corresponding to the signal if the signal receiver does receive the signal from the signal transmitter. In an exemplary embodiment, the first period of time is at least two seconds. In an exemplary embodiment, the second period of time is no more than 100 milliseconds. In an exemplary embodiment, the liquid crystal shutters remain open until the signal receiver receives a signal from the signal transmitter.

In an exemplary embodiment, a system for providing three dimensional video images could include a pair of glasses comprising a first lens having a first liquid crystal shutter and a second lens having a second liquid crystal shutter, the liquid crystal shutters having a liquid crystal and an opening time of less than one millisecond. It could also have a control circuit that can alternately open the first and second liquid crystal shutters, and hold the liquid crystal orientation at a point of maximum light transmission until the control circuit closes the shutter. In an exemplary embodiment, the control circuit is adapted to hold the first liquid crystal shutter and the second liquid crystal shutter open. In an exemplary embodiment, the control circuit holds the lenses open until the control circuit detects a synchronization signal. In an exemplary embodiment, the voltage applied to the liquid crystal shutters alternates between positive and negative.

In one embodiment of a device for providing a three dimensional video image, a pair of three dimensional viewing glasses comprising a first liquid crystal shutter and a second liquid crystal shutter, wherein the first liquid crystal shutter can open in less than one millisecond, wherein the second liquid crystal shutter can open in less than one millisecond, open and close the first and second liquid crystal shutters at a rate that makes the liquid crystal shutters appear to be clear lenses. In one embodiment, the control circuit holds the lenses open until the control circuit detects a synchronization signal. In one embodiment, the liquid crystal shutters alternates between positive and negative.

In an exemplary embodiment, a system for providing three dimensional video images could include a pair of glasses comprising a first lens having a first liquid crystal shutter and a second lens having a second liquid crystal shutter, the liquid crystal shutters having a liquid crystal and an opening time of less than one millisecond. It could also include a control circuit that alternately opens the first and second liquid crystal shutters and hold the liquid crystal at a point of maximum light transmission until the control circuit closes the shutter. In an exemplary embodiment, an emitter could provide a synchronization signal where a portion of the synchronization signal is encrypted. A sensor operably connected to the control circuit could be adapted to receive the synchronization signal, and the first and second liquid crystal shutters could open and close in a pattern corresponding to the synchronization signal only after receiving an encrypted signal.

In an exemplary embodiment, the synchronization signal is a series of pulses at a predetermined interval. In an exemplary embodiment, the synchronization signal is a series of pulses at a predetermined interval and a first predetermined number of pulses opens the first liquid crystal shutter and a second predetermined number of pulses opens the second liquid crystal shutter. In an exemplary embodiment, a portion of the series of pulses is encrypted. In an exemplary embodiment, the series of pulses includes a predetermined number of pulses that are not encrypted followed by a predetermined number of pulses that are encrypted. In an exemplary embodiment, the first and second liquid crystal shutters open and close in a pattern corresponding to the synchronization signal only after receiving two consecutive encrypted signals.

In an exemplary embodiment of a method for providing a three dimensional video image, the method could include having a pair of three dimensional viewing glasses comprising a first liquid crystal shutter and a second liquid crystal shutter, opening the first liquid crystal shutter in less than one millisecond, holding the first liquid crystal shutter at a point of maximum light transmission for a first period of time, closing the first liquid crystal shutter and then opening the second liquid crystal shutter in less than one millisecond, and holding the second liquid crystal shutter at a point of maximum light transmission for a second period of time. In an exemplary embodiment, the first period of time corresponds to the presentation of an image for a first eye of a viewer and the second period of time corresponds to the presentation of an image for a second eye of a viewer. In an exemplary embodiment, an emitter provides a synchronization signal wherein a portion of the synchronization signal is encrypted. In an exemplary embodiment, a sensor is operably connected to the control circuit and adapted to receive the synchronization signal, and the first and second liquid crystal shutters open and close in a pattern corresponding to the synchronization signal only after receiving an encrypted signal.

In an exemplary embodiment, the synchronization signal is a series of pulses at a predetermined interval. In an exemplary embodiment, the synchronization signal is a series of pulses at a predetermined interval and wherein a first predetermined number of pulses opens the first liquid crystal shutter and wherein a second predetermined number of pulses opens the second liquid crystal shutter. In an exemplary embodiment, a portion of the series of pulses is encrypted. In an exemplary embodiment, the series of pulses includes a predetermined number of pulses that are not encrypted followed by a predetermined number of pulses that are encrypted. In an exemplary embodiment, the first and second liquid crystal shutters open and close in a pattern corresponding to the synchronization signal only after receiving two consecutive encrypted signals.

It is understood that variations may be made in the above without departing from the scope of the invention. While specific embodiments have been shown and described, modifications can be made by one skilled in the art without departing from the spirit or teaching of this invention. The embodiments as described are exemplary only and are not limiting. Many variations and modifications are possible and are within the scope of the invention. Furthermore, one or more elements of the exemplary embodiments may be combined with, or substituted for, in whole or in part, one or more elements of one or more of the other exemplary embodiments. Accordingly, the scope of protection is not limited to the embodiments described, but is only limited by the claims that follow, the scope of which shall include all equivalents of the subject matter of the claims.

In the present specification "comprise" means "includes or consists of" and "comprising" means "including or consisting of".

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. 3D glasses for viewing images that include images for a left eye of a user of the 3D glasses and images for a right eye of the user, comprising:
a left eye viewing shutter;
a right eye viewing shutter; and
a controller operably coupled to the left and right eye viewing shutters for controllably opening and closing the left and right eye viewing shutters in synchronization with a display of the left and right eye images to the left and right eyes of the user;
wherein at least one of the left and right eye viewing shutters comprise a display shutter for displaying images.

2. The 3D glasses of claims 1, wherein the display shutter may be opened or closed.

3. The 3D glasses of claim 1 or claim 2, wherein the display shutter may be opened or closed in synchronisation with the opening and closing of the corresponding viewing shutter.

4. A method of operating 3D glasses having a left eye shutter and a right eye shutter for viewing images for the left and right eye of a user, comprising:
displaying images on a portion of at least one of the left and right eye shutter.

5. The method of claim 4, further comprising: opening and closing the left and right eye shutters in synchronisation with displaying left and right eye images to the user.

6. The method of claim 5, further comprising: opening and closing the portions of the left and right eye shutters.

7. A system for displaying images to the left and a right eye of a user, comprising:
means for displaying images on a portion of at least one of a left and right eye shutter; and
means for opening and closing the left and right eye shutters in synchronization with displaying left and right eye images to the user.

8. The system of claim 7, further comprising: means for opening and closing the portions of the left and right eye shutters in synchronization with displaying the left and right eye images to the users.

9. A method of operating a plurality of 3D glasses each having a left eye shutter and a right eye shutter for viewing images for the left and right eyes of a corresponding user, comprising:
displaying images on a portion of at least one of the left and right eye shutters of each of the 3D glasses.

10. The method of claim 9, further comprising: opening and closing the left and right eye shutters of the 3D glasses in synchronization with displaying the left and right eye images to the users.

11. The method of claim 10, further comprising: opening and closing the portions of the left and right eye shutters of each of the 3D glasses.

12. The method of claim 11, further comprising, opening and closing the portions of the left and right eye shutters of each of the 3D glasses in synchronization with displaying the left and right eye images to the users.

13. The method of claim 9, wherein
the images display on each of the 3D glasses are different from one another: OR/AND
the images displayed on each of the 3D glasses are customizable by the corresponding user.

14. A system for viewing left and right eye images by a plurality of users, comprising:
means for displaying images on a portion of at least one of left and right eye shutters of 3D glasses for each of the users; and
means for opening and closing the left and right eye shutters of the 3D glasses in synchronization with displaying the left and right eye images to the users.

15. The system of each 14, further including at least one of the following list of features:
the system comprises means for opening and closing the portions of the left and right eye shutters of each of the 3D glasses of the users;
the system comprises means for opening and closing the portions of the left and right eye shutters of each of the 3D glasses of the users in synchronization with displaying the left and right eye images to the users;
the images displayed on each of the 3D glasses of the users are different from one another; and
the images displayed on each of the 3D glasses of the users are customizable by the corresponding user.
